# EUROPEAN PATENT APPLICATION

(11) **EP 2 492 322 A1**
(43) Date of publication of application: **29.08.2012**
(21) Application number: 12156657.4
(22) Date of filing: 23.02.2012
(51) Int. Cl.: C09D 11/00

(54) **Ink composition, image forming method, and printed material**

(30) Priority: 23.02.2011 JP 2011037208
(71) Applicant: Fujifilm Corporation, Minato-ku Tokyo 106-8620 (JP)
(72) Inventor: Hironaka, Koji, Kanagawa, 258-8577 (JP)
(74) Representative: HOFFMANN EITLE

(57) **Abstract**

Provided is an ink composition having excellent dischargeability during image recording by an inkjet method and having excellent water resistance, solvent resistance, and adhesiveness to a recording medium of the recorded image.

The ink composition includes a structure represented by the structural formula (A), a compound having at least any one of a residue formed by removing one hydrogen atom from a compound represented by the general formula (B1) and a residue formed by removing one hydrogen atom from a compound represented by the general formula (B2) in one molecule or plural molecules, and a coloring material.

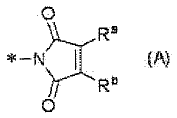

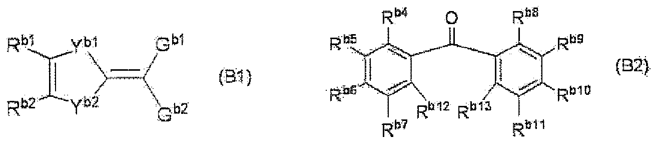

## Description

### BACKGROUND OF THE INVENTION

1. Field of the Invention

The present invention relates to an ink composition, an image forming method, and a printed material.

2. Description of the Related Art

As an image recording method for forming an image on a recording medium such as paper based on an image data signal, there are an electrophotographic system, sublimation type and melt type thermal transfer systems, an inkjet system, and the like. In an ink composition used for recording an image by an inkjet system, an aqueous active energy ray curable ink can be appropriately used in view of image printing, pre-treatment for providing a recording medium with printing suitability, post-treatment for protecting/decorating a printed image, or the like. In addition, the aqueous active energy ray curable ink has a number of excellent characteristics and potentials, such as excellent safety due to incorporation of water as a main component, applicability in high-density inkjet recording due to low viscosity.

As one example of the basic constituent materials of the aqueous active energy ray curable ink, water, a polymerizable material, a polymerization initiator that generates radicals or the like by radiation and initiates a polymerization, and a coloring material (a pigment or a dye) may be mentioned. Examples of the polymerizable material and the polymerization initiator, each of which is water-soluble, include those described in JP2007-119449A, and an ink composition for inkjet recording capable of forming a film with excellent adhesiveness or the like by light irradiation is described in JP2007-119449A.

### SUMMARY OF THE INVENTION

However, an ink composition that includes active energy rays polymerizable material having a specific maleimide structure described in JP2007-119449A still has room for improvement of water resistance, solvent resistance, adhesiveness, and dischargeability. The ink composition described in JP2007-119449A is a technology using a photopolymerization initiator, and has a risk that a decomposed product or unreacted residue of the photopolymerization initiator added remains on a curing film, and thus gives an adverse effect on the film physical properties and the printed materials. Therefore, there may be some cases where a sufficient amount of a photopolymerization initiator cannot be used in the ink composition described in JP2007-119449A, and there is still room for improvement of water resistance, solvent resistance, and adhesiveness of the printed image. In addition, the ink composition described in JP2007-119449A has room for further improvement in terms of dischargeability. Therefore, an ink composition having good water resistance, solvent resistance, adhesiveness, and dischargeability is required.

A problem to be solved by the present invention is to provide an ink composition having excellent dischargeability during image recording by an inkjet method and having excellent water resistance, solvent resistance, and adhesiveness to a recording medium of the recorded image, taking into consideration the situation above.

: The ink composition of the present invention that can solve the above-described problem includes:

(Component a) a compound having two or more structures each represented by the structural formula (A) in one molecule, (Component b) a compound having two or more of at least any one of a residue formed by removing one hydrogen atom from a compound represented by the general formula (B1) and a residue formed by removing one hydrogen atom from a compound represented by the general formula (B2) in one molecule, and (Component c) a coloring material.

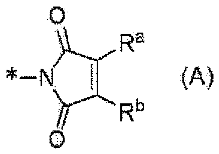

(In the structural formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bonding position.)

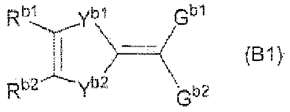

(In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.

Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-.

G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfonyl group, an arylsulfonyl group, or a fluoroalkylsulfonyl group, and G^{b1} and G^{b2} may be bonded to each other to form a ring. However, in a case that G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- may be contained in the ring.)

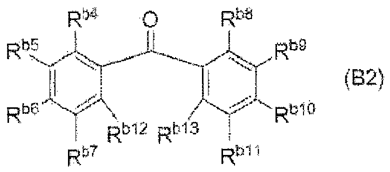

(In the general formula (B2), R^{b4}, R^{b5}, R^{b6}, R^{b7}, R^{b8}, R^{b9}, R^{b10}, R^{b11}, R^{b12}, and R^{b13} each independently represent a hydrogen atom, a halogen atom, an alkyl group, an aryl group, a hydroxyl group, a cyano group, a nitro group, an amino group, an alkylsulfanyl group, an alkylamino group, an alkoxy group, an alkoxycarbonyl group, an acyloxy group, an acyl group, a carboxyl group, or a sulfo group, and at least two selected from R^{b4}, R^{b5}, R^{b6}, R^{b7}, R^{b8}, R^{b9}, R^{b10}, R^{b11}, R^{b12}, and R^{b13} may be bonded to each other to form a ring. However, -S- may be interposed in the ring.)

in the present invention, in a preferable embodiment, the component above (Component a) has a repeating unit represented by the general formula (AP).

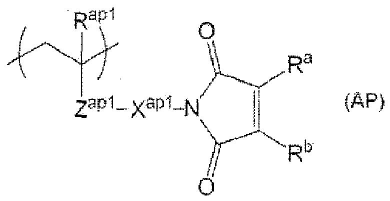

(In the general formula CAP), R^{ap1} represents a hydrogen atom or a methyl group. Z^{ap1} represents a single bond, -COO-, or -CONR^{ax1}-, and R^{ax1} represents a hydrogen atom or an alkyl group having 1 to 4 carbon atoms. X^{ap1} represents a divalent organic group. R^{a} and R^{b} each independently represent an alkyl group having 1 to 4 carbon atoms, and R^{a} and R^{b} may be bonded to each other to form an alicyclic structure of a 4- to 6-membered ring.)

Furthermore, in the present invention, in a preferable embodiment, the component above (Component b) has a repeating unit represented by the general formula (BP).

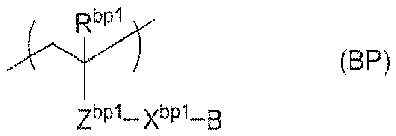

(in the general formula (BP), R^{bp1} represents a hydrogen atom or a methyl group. Z^{bp1} represents a single bond, -COO-, or -CONR^{bx1}-, and R^{bx1} represents a hydrogen atom or an alkyl group having 1 to 4 carbon atoms. X^{bp1} represents a single bond or a divalent organic group. B represents a residue formed by removing one hydrogen atom from a compound represented by the structural formula (B1) or a residue formed by removing one hydrogen atom from a compound represented by the structural formula (B2).)

Moreover, in a preferable embodiment, for the ink composition of the present invention, the component above (Component a) further has a water-soluble group, the component above (Component b) further has a water-soluble group, and the water-soluble group is at least one kind of group selected from the group consisting of a carboxyl group, a sulfo group, a phosphoric acid group, a phosphonic acid group, and salts thereof, a quaternary ammonium salt, a residue formed by removing one hydrogen atom from a heterocyclic compound containing a nitrogen atom or an oxygen atom, an amide group, a carbamoyl group, an alcoholic hydroxyl group, and a group having a polyalkyleneoxy structure.

Moreover, in a preferable embodiment, the ink composition of the present invention further contains (Component d) water, and also further has (Component e) a water-soluble organic solvent.

In the present invention, an ink composition which includes (Component a') a compound having a structure represented by the structural formula (A) and at least any one of a residue formed by removing one hydrogen atom from a compound represented by the general formula (B1) and a residue formed by removing one hydrogen atom from a compound represented by the general formula (B2), and (Component c) a coloring material is also included.

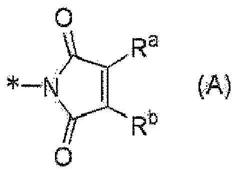

(In the structural formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bonding position.)

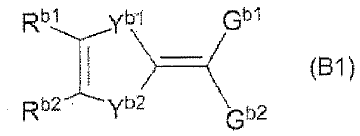

(In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.

Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-.

G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfanyl group, an arylsulfonyl group, or a fluoroalkylsulfonyl group, and G^{b1} and G^{b2} may be bonded to each other to form a ring. However, in a case that G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- may be contained in the ring.)

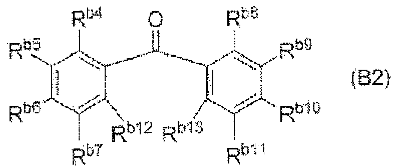

(In the general formula (B2), R^{b4}, R^{b5}, R^{b6}, R^{b7}, R^{b8}, R^{b9}, R^{b10}, R^{b11}, R^{b12}, and R^{b13} each independently represent a hydrogen atom, a halogen atom, an alkyl group, an aryl group, a hydroxyl group, a cyano group, a nitro group, an amino group, an alkylsulfonyl group, an alkylamino group, an alkoxy group, an alkoxycarbonyl group, an acyloxy group, an acyl group, a carboxyl group, or a sulfo group, and at least two selected from R^{b4}, R^{b5}, R^{b6}, R^{b7}, R^{b8}, R^{b9}, R^{b10}, R^{b11}, R^{b12}, and R^{b13} may be bonded to each other to form a ring. However, -S- may be interposed in the ring.)

In the present invention, in a preferable embodiment, the component above (Component a') has a repeating unit represented by the general formula (AP) and a repeating unit represented by the general formula (BP).

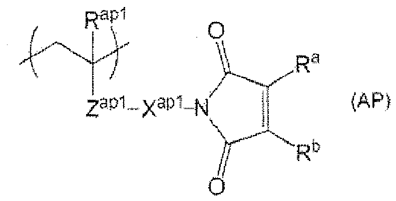

(In the general formula (AP), R^{ap1} represents a hydrogen atom or a methyl group. Z^{ap1} represents a single bond, -COO-, or -CONR^{ax1}-, and R^{ax1} represents a hydrogen atom or an alkyl group having 1 to 4 carbon atoms. X^{ap1} represents a divalent organic group. R^{a} and R^{b} each independently represent an alkyl group having 1 to 4 carbon atoms, and R^{a} and R^{b} may be bonded to each other to form an alicyclic structure of a 4- to 6-membered ring.)

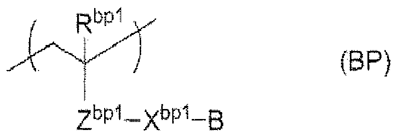

(In the general formula (BP), R^{bp1} represents a hydrogen atom or a methyl group. Z^{bp1} represents a single bond, -COO-, or -CONR^{bx1}-, and R^{bx1} represents a hydrogen atom or an alkyl group having 1 to 4 carbon atoms. X^{bp1} represents a single bond or a divalent organic group. B represents a residue formed by removing one hydrogen atom from a compound represented by the structural formula (B1) or a residue formed by removing one hydrogen atom from a compound represented by the structural formula (B2).)

For the ink composition of the present invention in a preferable embodiment, the component above (Component a') further has a water-soluble group, and the water-soluble group is at least one kind of group selected from the group consisting of a carboxyl group, a sulfo group, a phosphoric acid group, a phosphonic acid group, and salts thereof, a quaternary ammonium salt, a quaternary ammonium salt, a residue formed by removing one hydrogen atom from a heterocyclic compound containing a nitrogen atom or an oxygen atom, an amide group, a carbamoyl group, an alcoholic hydroxyl group, and a group having a polyalkyleneoxy structure.

Moreover, in a preferable embodiment, the ink composition of the present invention further contains (Component d) water, and also further has (Component e) a water-soluble organic solvent.

The present invention also includes an image forming method including an ink applying step in which the ink composition above is applied on a recording medium, and an irradiation step in which the ink composition is irradiated with active energy rays.

In the forming method of the present invention, in a preferable embodiment, the ink applying step is a step in which the ink composition is applied by an inkjet method.

The present invention also includes a printed material recorded by the image forming method above.

According to the present invention, an aqueous ink composition having excellent dischargeability during image recording by an inkjet method and having excellent water resistance, solvent resistance, and adhesiveness to a recording medium of the recorded image, can be provided.

### DESCRIPTION OF THE PREFERRED EMBODIMENTS

<<Ink Composition>>

According to the present invention, an object of obtaining an ink composition having excellent dischargeability during image recording by an inkjet method and having excellent water resistance, solvent resistance, and adhesiveness to a recording medium of the recorded image by using a compound having two or more structures each represented by the structural formula (A) in one molecule, and a compound having two or more of at least any one of a residue formed by removing one hydrogen atom from a compound represented by the general formula (B1) and a residue formed by removing one hydrogen atom from a compound represented by the general formula (B2) in one molecule or plural molecules was accomplished. Herein, the structure represented by the structural formula (A), and at least any one of the residue formed by removing one hydrogen atom from a compound represented by the general formula (B1) or the residue formed by removing one hydrogen atom from a compound represented by the general formula (B2) may be present in the same molecule or in plural different molecules.

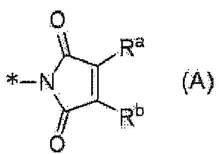

(In the structural formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bonding position.)

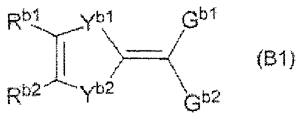

(In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.

Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-.

G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfonyl group, an arylsulfonyl group, or a fluoroalkylsulfonyl group, and G^{b1} and G^{b2} may be bonded to each other to form a ring. However, when G^{b1} and G^{b2} form a ring, a bivalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- may be contained in the ring.)

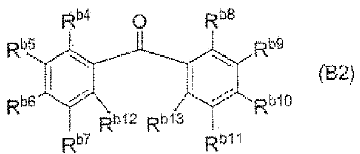

(In the general formula (B2), R^{b4}, R^{b5}, R^{b6}, R^{b7}, R^{b8}, R^{b9}, R^{b10}, R^{b11}, R^{b12}, and R^{b13} each independently represent a hydrogen atom, a halogen atom, an alkyl group, an aryl group, a hydroxyl group, a cyano group, a nitro group, an amino group, an alkylsulfanyl group, an alkylamino group, an alkoxy group, an alkoxycarbonyl group, an acyloxy group, an acyl group, a carboxyl group, or a sulfo group, and at least two selected from R^{b4} , R^{b5}, R^{b6}, R^{b7}, R^{b8}, R^{b9}, R^{b10}, R^{b11}, R^{b12}, and R^{b13} may form a ring. However, -S- may be interposed in the ring.)

Furthermore, in the present specification, the description of "xx to yy" represents a numerical range including xx and yy.

Although the mechanism in the present invention is not clear, it is presumed as follows. It is thought that in the present invention, the amount of the low-molecular-weight components that plasticize an ink curing film is reduced by using a specific compound having a maleimide structure and a sensitizing dye component, and a coloring material, and thus, the solvent resistance and the water resistance are improved, and further, the precipitating properties of the sensitizing dye and the like are reduced; and as a result, it is difficult for the components in the ink composition to precipitate around the nozzles of an inkjet head, thereby improving the dischargeability.

Hereinbelow, the ink composition of the present invention will be described in detail.

A first embodiment of the present invention relates to an ink composition including:

(Component a) a compound having two or more structures each represented by the structural formula (A) in one molecule,

(Component b) a compound having two or more of at least any one of a residue formed by removing one hydrogen atom from a compound represented by the general formula (B1) and a residue formed by removing one hydrogen atom from a compound represented by the general formula (B2) in one molecule, and

(Component c) a coloring material.

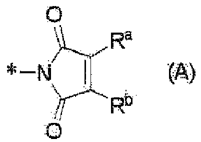

(In the structural formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bonding position.)

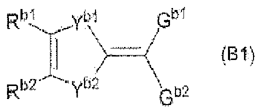

(In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.

Y^{b1} and R^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-,

G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfonyl group, an arylsulfonyl group, or a fluoroalkylsulfonyl group, and G^{b1} and G^{b2} may be bonded to each other to form a ring. However, when G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O- and -S- may be contained in the ring.

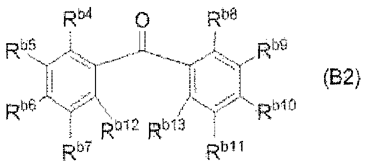

(In the general formula (B2), R^{b4}, R^{b5}, R^{b6}, R^{b7}, R^{b8}, R^{b9}, R^{b10}, R^{b11}, R^{b12}, and R^{b13} each independently represent a hydrogen atom, a halogen atom, an alkyl group, an aryl group, a hydroxyl group, a cyano group, a nitro group, an amino group, an alkylsulfanyl group, an alkylamino group, an alkoxy group, an alkoxycarbonyl group, an acyloxy group, an acyl group, a carboxyl group, or a sulfo group, and at least two selected from R^{b4}, R^{b5}, R^{b6}, R^{b7}, R^{b8}, R^{b9}, R^{b10}, R^{b11}, R^{b12}, and R^{b13} may form a ring. However, -S- may be interposed in the ring.)

A second embodiment of the present invention relates to an ink composition including:

(Component a') a compound having a structure represented by the structural formula (A) and at least any one of a residue formed by removing one hydrogen atom from a compound represented by the general formula (B1) and a residue formed by removing one hydrogen atom from a compound represented by the general formula (B2) in one molecule, and

(Component c) a coloring material.

A first embodiment of the present invention will be described below.

[First Embodiment]

The first embodiment of the present invention is an ink composition including:
(Component a) a compound having two or more structures each represented by the structural formula (A) in one molecule,
(Component b) a compound having two or more of at least any one of a residue formed by removing one hydrogen atom from a compound represented by the general formula (B1) and a residue formed by removing one hydrogen atom from a compound represented by the general formula (B2) in one molecule, and
(Component c) a coloring material.

<(Component a) Compound Having Two or More Structures each Represented by Structural formula (A) in One Molecule>

The compound having two or more groups represented by the structural formula (A) that is used in the present invention can be used without limitation as long as it is a compound having two or more groups represented by the structural formula (A). By using the compound having two or more groups represented by the structural formula (A), the crosslinking reaction of the ink composition can proceed.

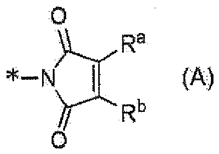

In the formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bonding position.

In the formula (A), R^{a} and R^{b} may have a substituent or may not have a substituent, but preferably does not have a substituent.

R^{a} and R^{b} each independently represent an alkyl group having 1 to 4 carbon atoms may have either a linear structure or a branched structure. Specific examples thereof include a methyl group, an ethyl group, a propyl group, an isopropyl group, a butyl group, an isobutyl group, a sec-butyl group, a t-butyl group, and the like. R^{a} and R^{b} may be bonded to each other to form an alicyclic structure of a 4- to 6-membered ring. From the viewpoints of the film physical properties of the ink curing film, such as water resistance, solvent resistance, and adhesiveness to a recording medium after curing the ink composition, it is preferable that R^{a} and R^{b} each independently represent an alkyl group having 1 to 2 carbon atoms, that is, a methyl group, or an ethyl group, and more preferably a methyl group. Further, when R^{a} and R^{b} are bonded to each other to form an alicyclic structure of a 4- to 6-membered ring, the ring is preferably a 5 to 6-membered ring, and more preferably a 6-membered ring.

The (Component a) may be either a low-molecular-weight compound having a molecular weight of 300 to 2,000 or a high-molecular-weight compound having a weight average molecular weight of 5,000 or more. From the viewpoints of water resistance, solvent resistance, adhesiveness to a recording medium after curing the ink composition, and the like, the (Component a) is preferably a high-molecular-weight compound having a weight average molecular weight of 5,000 or more.

When the (Component a) is a low-molecular-weight compound having a molecular weight of 300 to 2,000, 2 or more, preferably 2 to 6, more preferable 2 to 4, still more preferably 2 to 3, and particularly preferably 2 groups represented by the formula (1) may be contained in one molecule of the (Component a). Herein, plural groups represented by (A) may be the same as or different from each other.

When the (Component a) is a low-molecular-weight compound having a molecular weight of 300 to 2,000, it is preferably a compound represented by the general formula (AL).

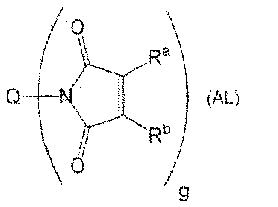

In the formula (AL), R^{a} and R^{b} each independently represent an alkyl group having 1 to 4 carbon atoms, and R^{a} and R^{b} may be bonded to each other to form an alicyclic structure of a 4- to 6-membered ring. Q represents a g-valent linking group. g represents an integer of 2 or more.

In the formula (AL), R^{a} and R^{b} each independently represent an alkyl group having 1 to 4 carbon atoms, and R^{a} and R^{b} may be bonded to each other to form an alicyclic structure of a 4- to 6-membered ring. Examples of R^{a} and R^{b} in the formula (AL) (including preferable examples thereof) include those of exemplified as R^{a} and R^{b} in the formula (A) as described above.

In the formula (AL), Q represents a g-valent linking group. Q is preferably a residue formed by removing g hydrogen atoms from a hydrocarbon. When Q is a residue formed by removing g hydrogen atoms from a hydrocarbon, an ether group, an ester group, an amino group, an amide bond, a silyl ether group, a thiol group, or the like may be present in the hydrocarbon. The hydrocarbon preferably has 1 to 30 carbon atoms, and more preferably 1 to 20 carbon atoms. The hydrocarbon is preferably an aromatic hydrocarbon, and examples of the aromatic hydrocarbon include benzene, naphthalene, and the like.

When the ink composition of the present invention contains water, Q preferably has a water-soluble group in the formula (AL), and in this case, Q is preferably a residue formed by removing g hydrogen atoms from a hydrocarbon substituted with a water-soluble group. When Q is the residue formed by removing g hydrogen atoms from a hydrocarbon substituted with a water-soluble group, an ether group, an ester group, an amino group, an amide bond, a silyl ether group, a thiol group, or the like may be present in the hydrocarbon. The hydrocarbon preferably has 1 to 30 carbon atoms, and more preferably 1 to 20 carbon atoms. The hydrocarbon is preferably an aromatic hydrocarbon, and examples of the aromatic hydrocarbon include benzene, naphthalene, and the like.

In the formula (AL), g is an integer of 2 or more, preferably an integer of 2 to 6, more preferably an integer of 2 to 4, still more preferably an integer of 2 to 3, and particularly preferably 2.

When (Component a) is a low-molecular-weight compound having a molecular weight af 300 to 2,000, the following compounds (AL-1) to (AL-3) may be preferably used.

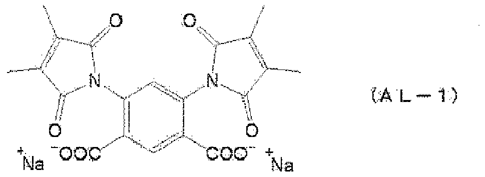

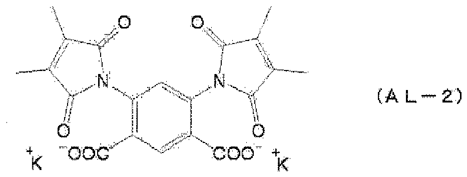

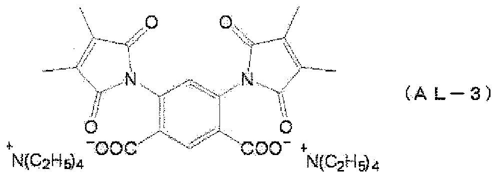

When the (Component a) is a high-molecular-weight compound having a weight average molecular weight of 5,000 or more, two or more groups represented by the formula (A) may be present in one molecule of the (Component a), and the number of the groups represented by the formula (A) is not particularly limited, but is preferably 2 or more and 500 or less, and still more preferably 10 or more and 200 or less. Further, when the (Component a) is a high-molecular-weight compound, at least one group represented by the formula (A) is preferably present in a side chain of the high-molecular-weight compound, and two or more groups represented by the formula (A) are more preferably present in a side chain of the high-molecular-weight compound.

From the viewpoints of the dischargeability when the ink composition is discharged by an inkjet method, and the like, the weight average molecular weight is preferably from 5,000 to 200,000, more preferably from 7,000 to 100,000, still more preferably from 10,000 to 50,000, and particularly preferably from 10,000 to 40,000.

Furthermore, the weight average molecular weight is measured by means of gel permeation chromatography (GPC). For GPC, HLC-8020 GPC (manufactured by Tosoh Corporation) is used; as the columns, TSKgel Super HZM-H, TSKgel Super HZ4000, and TSKgel Super HZ200 (all manufactured by Tosoh Corporation, 4.6 mmID×15 cm) are used; and as an eluent, THF (tetrahydrofuran) is used.

When the (Component a) is a high-molecular-weight compound having a weight average molecular weight of 5,000 or more, other polymeric structures are not limited as long as the (Component a) is a high-molecular-weight compound having a group represented by the formula (A) in the side chain or end, and it is preferable that a polymeric structure such as polyacrylate, polyester, polyethylenimine, polystyrene, and the like be used and the (Component a) preferably has a polyacrylate structure.

When the (Component a) is a high-molecular-weight compound, the (Component a) is preferably a high-molecular-weight compound including a structure represented by the general formula (AP).

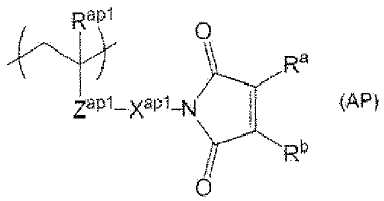

In the formula (AP), R^{ap1} represents a hydrogen atom or a methyl group, Z^{ap1} represents a single bond, -COO-, or -CONR^{ax1}-, R^{ax1} represents a hydrogen atom or an alkyl group having 1 to 4 carbon atoms, X^{ap1} represents a divalent organic group, R^{a} and R^{b} each independently represent an alkyl group having 1 to 4 carbon atoms, and R^{a} and R^{b} may be bonded to each other to form an alicyclic structure of a 4- to 6-membered ring.

In the formula (AP), R^{a} and R^{b} each independently represent an alkyl group having 1 to 4 carbon atoms, and R^{a} and R^{b} may be bonded to each other to form an alicyclic structure of a 4- to 6-membered ring. R^{a} and R^{b} in the formula (AP) (including preferable examples thereof) have the same definitions as those exemplified as R^{a} and R^{b} in the formula (A) as described above.

In the formula (AP), R^{ap1} represents a hydrogen atom or a methyl group. R^{ap1} is preferably a methyl group.

In the formula (AP), Z^{ap1} preferably represents a single bond, -COO-, or -CONR^{ax1}-. Z^{ap1} is preferably -COO-.

Furthermore, R^{ax1} represents a hydrogen atom or an alkyl group having 1 to 4 carbon atoms. The alkyl group having 1 to 4 carbon atoms may have either a linear structure or a branched structure, and specific examples thereof include a methyl group, an ethyl group, a propyl group, an isopropyl group, a butyl group, an isobutyl group, a sec-butyl group, and a t-butyl group. R^{ax1} preferably represents a hydrogen atom or an alkyl group having 1 to 2 carbon atoms, that is, a methyl group or an ethyl group, and particularly preferably a hydrogen atom. Further, R^{ax1} may have a substituent or may not have a substituent, but preferably does not have a substituent.

In the formula (AP), X^{ap1} represents a divalent organic group. The divalent organic group is preferably an alkylene group having 2 to 20 carbon atoms. The alkylene group may have any one of a linear structure, a branched structure, and a cyclic structure. Further, an ether bond, an ester bond, an amide bond, a urethane bond, or an allylene group may be present in the alkylene group. When X^{ap1} is an alkylene group, the number of carbon atoms is preferably from 2 to 20, more preferably from 2 to 12, and still more preferably from 2 to 8.

In the formula (AP), it is preferable that R^{a} and R^{b} each independently represent an alkyl group having 1 to 2 carbon atoms, R^{ap1} represent a methyl group, Z^{ap1} represent -COO-, and X^{ap1} represent an alkylene group having 2 to 12 carbon atoms.

When the (Component a) is a high-molecular-weight compound including the structure represented by the general formula (AP), the high-molecular-weight compound is preferably a high-molecular-weight compound obtained by the polymerization of monomers represented by the following general formula (AP-M).

Furthermore, from the viewpoint of controlling the film physical properties after curing the ink composition, other monomers are preferably included in the copolymerization component.

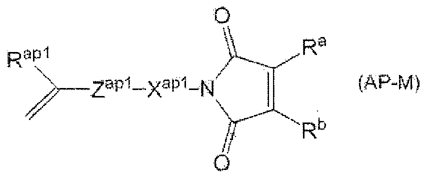

R^{a}, R^{b}, R^{ap1}, Z^{ap1}, and X^{ap1} in the general formula (AP-M) (including preferable examples thereof) have the same definitions as in the formula (AP).

Preferable examples of the monomer represented by the formula (AP-M) include the compounds (AP-M1) to (AP-M16) below, but the present invention is not limited thereto.

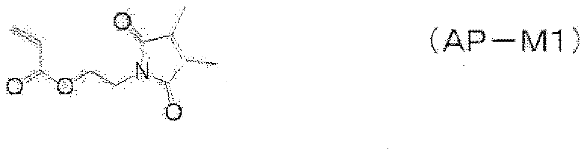

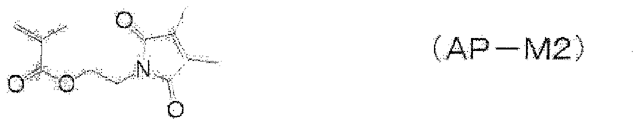

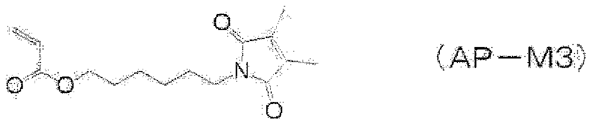

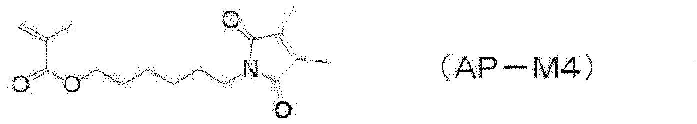

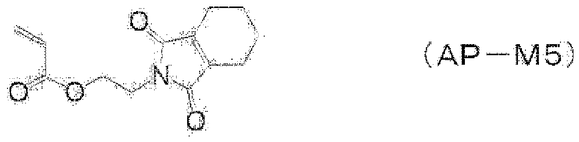

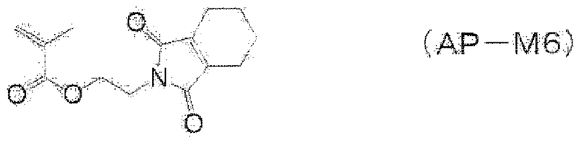

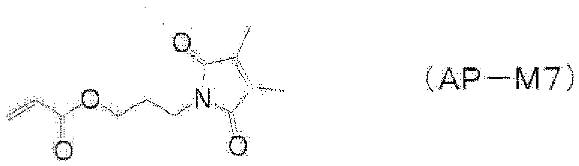

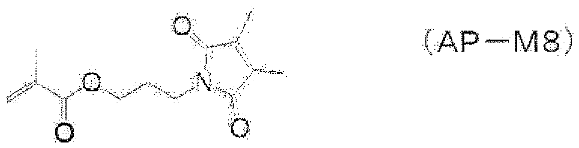

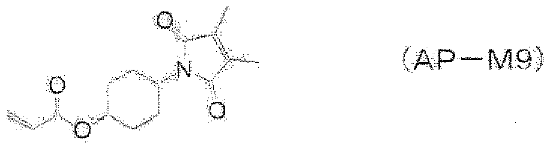

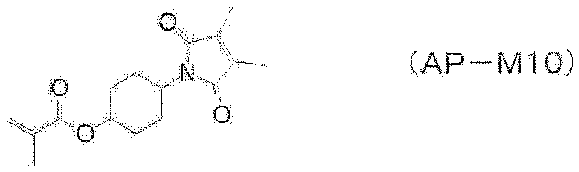

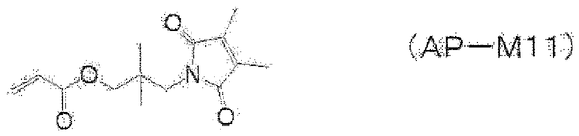

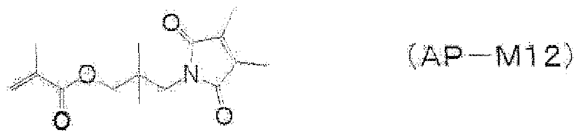

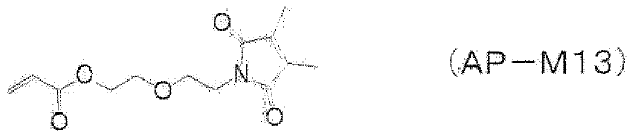

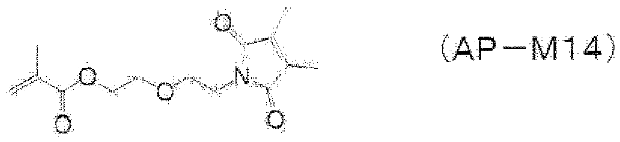

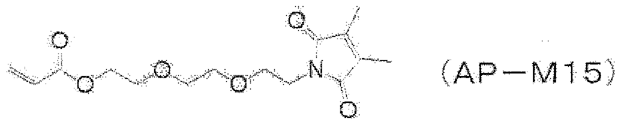

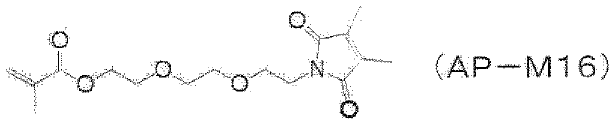

When the ink composition of the present invention includes water, the (Component a) preferably has a water-soluble group.

When the ink composition of the present invention includes water, the (Component a) is preferably water-soluble or water-dispersible, and 1 g of the (Component a) can be preferably dissolved or dispersed in less than 30 ml of water (25°C), more preferably dissolved or dispersed in less than 20 ml of water (25°C), and particularly preferably dissolved or dispersed in less than 10 ml of water (25°C). The (Component a) is preferably water-soluble.

The (Component a) of the present invention preferably has a water-soluble group, and the water-soluble group in the (Component a) is not limited as long as it provides the compound of the (Component a) with water solubility and water dispersibility. The water-soluble group which the (Component a) may contain is not particularly limited, and thus, it may be a non-ionic water-soluble group, and any of ionic water-soluble groups such as an anionic water-soluble group and a cationic water-soluble group can be used.

The non-ionic water-soluble group that is used in the present invention is not limited but examples thereof include a residue formed by removing one hydrogen atom from a heterocyclic compound containing a nitrogen atom or an oxygen atom, an amide group, a carbamoyl group, an alkyl-substituted carbamoyl group, an alcoholic hydroxyl group, a group having a polyalkyleneoxy structure, and the like. A carbamoyl group, an alkyl-substituted carbamoyl group, an alcoholic hydroxyl group, and a group having a polyalkyleneoxy structure are preferable, and an alcoholic hydroxyl group, and a group having a polyalkyleneoxy structure are more preferable.

Examples of the heterocyclic compound containing a nitrogen atom or an oxygen atom include lactones such as γ—butyrolactone and the like, cyclic ureas such as 2-pyrrolidone, ethyleneurea, and the like, cyclic carbonates such as an ethylene carbonate, propylene carbonate, and the like, cyclic ethers such as tetrahydrofuran, 1,4-dioxane, and the like, and crowns such as 12-crown-4 and the like.

The amide group is not limited, but preferable examples thereof include a group represented by the following formula (11).

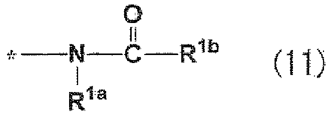

In the formula (11), R^{1a} and R^{1b} each independently represent a hydrogen atom or an allyl group. R^{1a} and R^{1b} may be bonded to each other to form a 4- to 6-membered ring.

In the formula (11), R^{1a} and R^{1b} each independently represent a hydrogen atom or an alkyl group. The alkyl group in R^{1a} and R^{1b} may contain a linear or branched alkyl group, a -COO- bond, an -O- bond, or an -NH- bond. The alkyl group preferably has 1 to 10 carbon atoms, more preferably 1 to 6 carbon atoms, and particularly preferably 1 to 3 carbon atoms. R^{1a} and R^{1b} may be linked to each other to form 4- to 6-membered ring. These groups may have a substituent or may not have a substituent, but, preferably does not have a substituent. Specific examples of the alkyl group represented by R^{1a} and R^{1b} include a methyl group, a t-butyl group, and the like.

In the formula (11), as the substituent which may be contained in R^{1a} and R^{1b}, a hydroxyl group or the like is preferable.

Examples of the alkyl-substituted carbamoyl group include a monoalkylcarbamoyl group in which a hydrogen atom bonded to N of a carbamoyl group is substituted with an alkyl group, and a dialkylcarbamoyl group in which two hydrogen atoms bonded to N of a carbamoyl group are substituted with alkyl groups. Specific preferable examples thereof include a group represented by the following formula (12).

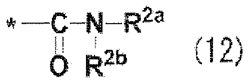

In the formula (12), R^{2a} and R^{2b} each independently represent a hydrogen atom or an alkyl group. R^{2a} and R^{2b} may be bonded to each other to form a 4- to 6-membered ring.

R^{2a} and R^{2b} in the formula (12) each independently represent a hydrogen atom or an alkyl group. The allyl group in R^{2a} and R^{2b} may contain a linear or branched alkyl group, an -O- bond, a -COO- bond, and a -C(=O)—bond. The alkyl group preferably has 1 to 10 carbon atoms, more preferably 1 to 6 carbon atoms, and particularly preferably 1 to 3 carbon atoms. R^{2a} and R^{2b} may be linked to each other to form 4- to 6-membered ring. Specific examples of the alkyl group represented by R^{2a} and R^{2b} are not limited, but include a methylene group, an ethylene group, and the like. These groups may have a substituent or may not have a substituent, but preferably does not have a substituent.

In the formula (12), as the substituent which may be contained in R^{2a} and R^{2b}, an alkoxy group having 1 to 2 carbon atoms, a hydroxyl group, or the like is preferable.

The group having a polyalkyleneoxy structure is not limited, but preferable examples thereof include a group represented by the following formula (13).

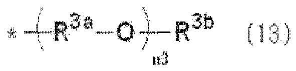

In the formula (13), R^{3a} represents an alkylene group, and R^{3b} represents a hydrogen atom or an alkyl group. n3 represents an integer of 4 to 50. When plural R^{3a}'s are present, they may be the same as or different from each other.

R^{3a} in the formula (13) represents an alkylene group. The alkylene group represented by R^{3a} may contain a linear, branched, or cyclic alkylene group, an -O- bond, or a -COO- bond. The alkylene group preferably has 1 to 10 carbon atoms, more preferably 1 to 6 carbon atoms, and particularly preferably 1 to 3 carbon atoms. When plural R^{3a}'s in the formula (13) are present, they may be the same as or different from each other, but are preferably the same as each other. These groups may have a substituent or may not have a substituent, but preferably does not have a substituent. Specific examples of alkylene group represented by R^{3a} include an ethylene group and the like.

As the substituent which may be contained in R^{3a} in the formula (13), an alkoxy group having 1 to 2 carbon atoms, a hydroxyl group, or the like is preferable.

R^{3b} in the formula (13) represents a hydrogen atom or an alkyl group. The alkyl group represented by R^{3b} represents a linear, branched, or cyclic alkyl group, and preferably has 1 to 10 carbon atoms, more preferably 1 to 6 carbon atoms, and particularly preferably 1 to 3 carbon atoms. Specific examples of the alkyl group represented by R^{3b} include a methyl group, an ethyl group, and the like.

In the formula (13), n3 represents an integer of 4 to 50, more preferably 5 to 40, and still more preferably 10 to 3 0.

As the ionic water-soluble group that is used in the present invention, a group selected from the group consisting of a carboxyl group, a sulfo group, a phosphoric acid group, a phosphonic acid group, and salts thereof, and a quaternary ammonium salt are preferable. Examples of the salts include a metal salt, an onium salt, and the like.

As the ionic water-soluble group, a group selected from the group consisting of a carboxyl group, a sulfo group, a phosphoric acid group, a phosphonic acid group, and salts thereof is more preferable, a group selected from the group consisting of a carboxyl group, a sulfo group, and salts thereof is still more preferable, and a carboxyl group and a salt thereof are particularly preferable.

As the metal salt of the carboxyl group, an alkali metal salt of a carboxyl group is preferable, and specific examples thereof include -COOLi, -COONa, -COOK, and the like, and preferably -COONa, -COOK, and the like.

Examples of the onium salt of the carboxyl group include an ammonium salt, a pyridinium salt, a phosphonium salt, and the like of a carboxyl group, and the ammonium salt is preferable. Specific examples thereof include a tetraalkyl ammonium salt of a carboxyl group, a trialkylaryl ammonium salt of a carboxyl group, and the like, and preferably a tetraalkyl ammonium salt of a carboxyl group. As the alkyl group that forms an ammonium salt, an alkyl group having 1 to 4 carbon atoms is preferable, and as the aryl group, a phenyl group is preferable.

As the metal salt of the sulfo group, an alkali metal salt of the sulfo group is preferable. Specific examples thereof include -SO₃Li, -SO3Na, -SO₃K, and the like, and preferably -SO₃Na and -SO₃K.

Examples of the onium salt of a sulfo group include an ammonium salt, a pyridinium salt, a phosphonium salt, and the like of a sulfo group, and the ammonium salt is preferable. Specific examples thereof include a tetraalkyl ammonium salt of a sulfo group, a trialkylaryl ammonium salt of a sulfo group, and the like, and preferably a tetraalkyl ammonium salt of a sulfo group. As the alkyl group that forms an ammonium salt, an alkyl group having 1 to 4 carbon atoms is preferable, and for the aryl group, a phenyl group is preferable.

As the metal salt of a phosphoric acid group is, an alkali metal salt of a phosphoric acid group is preferable. Specific examples thereof include a sodium salt, a potassium salt, and the like of a phosphoric acid group, and preferably a sodium salt of a phosphoric acid group.

Examples of the onium salt of a phosphoric acid group include an ammonium salt, a pyridinium salt, a phosphonium salt, and the like of a phosphoric acid group, and the ammonium salt is preferable. Specific examples thereof include a tetraalkyl ammonium salt of a phosphoric acid group, a trialkylaryl ammonium salt of a phosphoric acid group, and the like, and preferably a tetraalkyl ammonium salt of a phosphoric acid group. As the alkyl group that forms an ammonium salt, an alkyl group having 1 to 4 carbon atoms is preferable, and for the aryl group, a phenyl group is preferable.

As the metal salt of a phosphonic acid group is, an alkali metal salt of a phosphonic acid group is preferable. Specific examples thereof include a sodium salt, a potassium salt, and the like of a phosphonic acid group, and preferably a sodium salt of a phosphonic acid group.

Examples of the onium salt of a phosphonic acid group include an ammonium salt, a pyridinium salt, a phosphonium salt, and the like of a phosphonic acid group, and the ammonium salt is preferable. Specific examples thereof include a tetraalkyl ammonium salt of a phosphonic acid group, a trialkylaryl ammonium salt of a phosphonic acid group, and the like, and preferably a tetraalkyl ammonium salt of a phosphonic acid group. As the alkyl group that forms an ammonium salt, an alkyl group having 1 to 4 carbon atoms is preferable, and for the aryl group, a phenyl group is preferable.

Examples of the quaternary ammonium salt include a salt including a quaternary ammonium ion and a halide ion, a salt including a quaternary ammonium ion and a sulfonic acid ion, a salt including organic anions such as a phosphate ion, a phosphonate ion, and the like, and a salt including a quaternary ammonium ion and fluorine atom-containing anions such as BF₄-, PF₆-, SbF₆-, and the like, and preferably a salt including a quaternary ammonium ion and a halide ion.

As the quaternary ammonium ion, one having a trialkyl ammonium structure is preferable, and the alkyl group preferably has 1 to 10 carbon atoms, and more preferably 1 to 5 carbon atoms. Specific thereof include ones having a trimethyl ammonium structure or a triethyl ammonium structure.

Specific examples of the quaternary ammonium salt include -N⁺(CH₃)₃Cl⁻, -N⁺(C₂H₅)₃Cl⁻, -N⁺(C₄H₉)₃Cl⁻, and the like, and preferably -N⁺(CH₃)₃Cl⁻, -N⁺(C₂H₅)₃Cl⁻, and the like.

In addition, the number of the water-soluble groups in the (Component a) is not limited as long as the (Component a) is water-soluble or water-dispersible, and the number may be, for example, one or plural. The number is appropriately chosen according to the type of the water-soluble group, the molecular weight, or the like. When the water-soluble groups are present, they may be the same as or different from each other.

When the (Component a) is a high-molecular-weight compound, the high-molecular-weight compound preferably has a structure of the following general formula (AP—C), in addition to the structure of (AP).

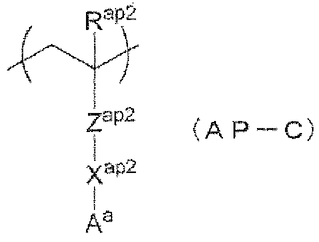

In the general formula (AP-C), R^{ap2} represents a hydrogen atom or a methyl group. Z^{ap2} represents -COO-, -CONR^{ax2-}, or a single bond, R^{ax2} represents a hydrogen atom or an alkyl group having 1 to 4 carbon atoms. X^{ap2} represents a group selected from the group consisting of a single bond, an alkylene group, an allylene group, and aralkylene group. A^{a} represents a water-soluble group.

In the general formula (AP-C), R^{ap2} represents a hydrogen atom or a methyl group.

In the general formula (AP-C), Z^{ap2} represents -COO-, -CONR^{ax2-}, or a single bond, and preferably -COO-. R^{ax2} represents a hydrogen atom or an alkyl group having 1 to 4 carbon atoms. The alkyl group having 1 to 4 carbon atoms may have either a linear structure or a branched structure, and specific examples thereof include a methyl group, an ethyl group, a propyl group, an isopropyl group, a butyl group, an isobutyl group, a sec-butyl group, and a t-butyl group. R^{dy} represents a hydrogen atom or an alkyl group having 1 to 2 carbon atoms, that is, it is preferably a methyl group or an ethyl group, and particularly preferably a hydrogen atom. Further, R^{ax2} may have a substituent or may not have a substituent, but preferably does not have a substituent.

Examples of the substituent which may be contained in R^{ax2} include an aryl group having 1 to 8 carbon atoms, an alkoxy group having 1 to 8 carbon atoms, a hydroxyl group, a carboxyl group, a halogen atom (F, Cl, Br, I, etc.), and the like.

In the general formula (AP-C), X^{ap2} represents a group selected from the group consisting of a single bond or alkylene group, an allylene group, and an aralkylene group, and preferably an alkylene group having 1 to 20 carbon atoms, an allylene group having 6 to 20 carbon atoms, or an aralkylene group having 7 to 20 carbon atoms. These groups may have a substituent or may not have a substituent. Further, an ether bond, an ester bond, an amide bond, or a urethane bond may be present in these groups. In the general formula (AP-C), X^{ap2} preferably represents a single bond.

Examples of the substituent which may be contained in X^{ap2} include an aryl group having 1 to 8 carbon atoms, an alkoxy group having 1 to 8 carbon atoms, a hydroxyl group, a carboxyl group, a halogen atom (F, Cl, Br, I, etc.), and the like.

When X^{ap2} represents an alkylene group having 1 to 20 carbon atoms, the alkylene group may have any one of a linear structure, a branched structure, and a cyclic structure. When X^{ap2} is an alkylene group, it preferably has 2 to 12 carbon atoms, and more preferably 2 to 8 carbon atom. Specific examples of the alkylene group of X^{ap2} include -CH₂-, -C₂H₄-, -C(CH₃)₂-CH₂-, -CH₂C(CH₃)₂CH₂-, -C₆H₁₂-, C₄H₇(C₄H₉)C₄H₈-, C₁₈H₃₆, a 1,4-trans-cyclohexylene group, -C₂H₄-OCO-C₂H₄-, -C₂H₄-OCO-, -C₂H₄-O-C₅H₁₀-, -CH₂-O-C₅H₉(C₅H₁₁)-, -C₂H₄-CONH-C₂H₄-, -C₄H₈-OCONH-C₆H₁₂-, -CH₂-OCONHC₁₀H₂₀-, -CH₂C(OH)CH₂-, and the like.

When X^{ap2} is an allylene group having 6 to 20 carbon atoms, the allylene group preferably has 6 to 18 carbon atoms, more preferably 6 to 14 carbon atoms, and particularly preferably 6 to 10 carbon atoms. Specific examples of allylene group of X^{ap2} include a phenylene group, a biphenylene group, -C₆H₄-CO-C₆H₄-, a naphthylene group, and the like.

When X^{ap2} is an aralkylene group having 7 to 20 carbon atoms, the aralkylene group preferably has 7 to 18 carbon atoms, more preferably 7 to 14 carbon atoms, and particularly preferably 7 to 10 carbon atoms. Specific examples of the aralkylene group include -C₃H₆-C₆H₄-, -C₂H₄-C₆H₄-C₆H₄-, -CH₂-C₆H₄-C₆H₄-C₂H₄-, and -C₂H₄-OCO-C₆H₄-.

Examples of the water-soluble group represented by A^{a} including preferred ranges thereof include those as exemplified as the water-soluble group above.

In the general formula (AP-C), it is preferable that R^{ap2} represent a hydrogen atom, Z^{ap2} represent -COO-, X^{ap2} represent a single bond, an alkylene group having 2 to 8 carbon atoms, or an allylene group having 6 to 10 carbon atoms, and A^{a} represent a carboxyl group or a sulfo group.

The structure represented by the general formula (AP-C) can be obtained by the polymerization of the monomers represented by (AP-C-M).

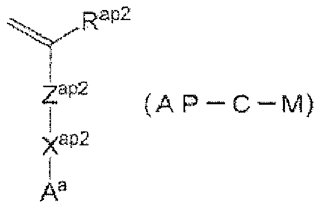

In the formula (AP-C-M), R^{ap2}, Z^{ap2}, X^{ap2}, and A^{a} have the same definitions as in (AP-C), and preferred ranges thereof are also the same.

Preferable examples of the monomer represented by the formula (AP-C-M) include the compounds (AP-C-M1) to (AP-C-M27) below, but the present invention is not limited thereto.

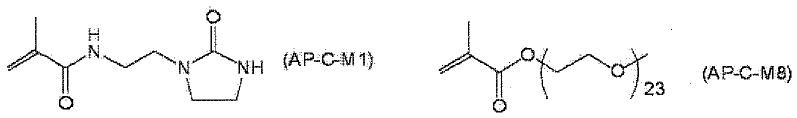

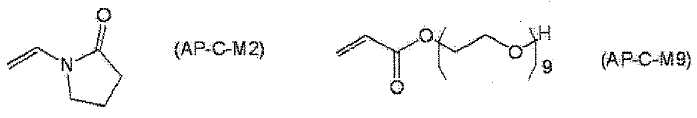

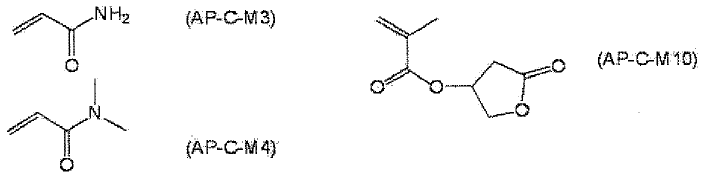

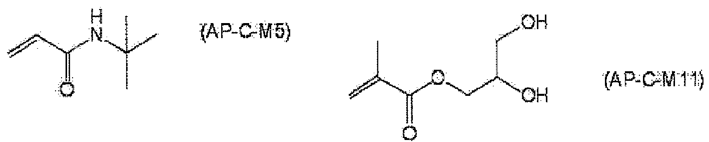

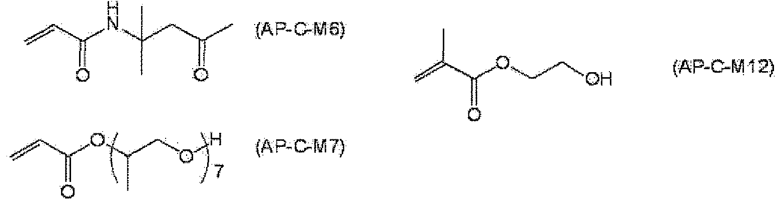

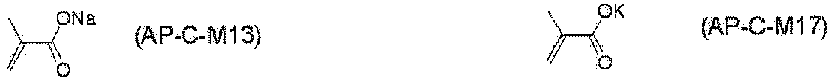

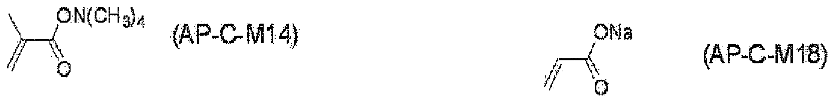

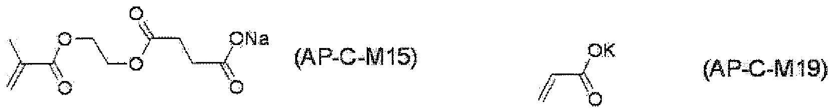

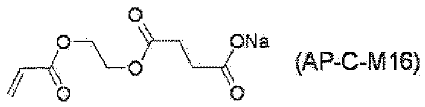

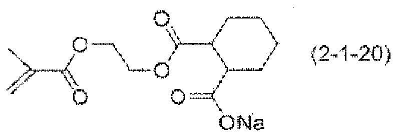

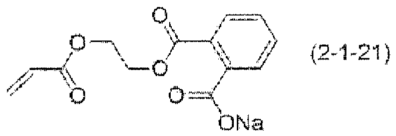

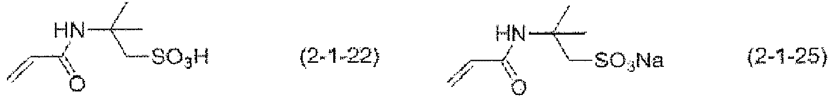

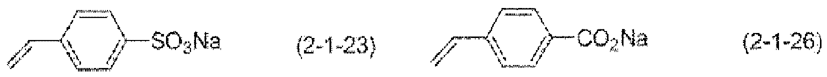

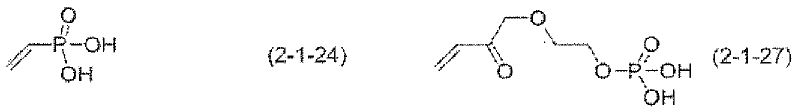

Examples of other monomers that can be copolymerized with the monomer represented by the formula (AP-M) and the monomer having a structure typically represented by the formula (AP-C-M) include styrene, p-methoxystyrene, methyl (meth)acrylate, ethyl (meth)acrylate, allyl (meth)acrylate, butyl (meth)acrylate, hexyl (meth)acrylate, 2-ethylhexyl (meth)acrylate, octyl (meth)acrylate, decyl(meth)acrylate, stearyl (meth)acrylate, cyclohexyl (meth)acrylate, bornyl (meth)acrylate, isobornyl (meth)acrylate, benzyl (meth)acrylate, 2-ethylhexyl diglycol (meth)acrylate, butoxyethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H, 1H,2H,2H-perfluorodecyl(meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl(meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxypropyl (meth)acrylate, butoxydiethylene glycol (meth)acrylate, trifluoroethyl (meth)acrylate, perfluorooctylethyl (meth)acrylate, 2-hydroxy-3-phenoxypropyl (meth)acrylate, (meth)acrylamide, N-butyl (meth)acrylamide, N-p-hydroxyphenyl (meth)acrylamide, and p-sulfamoylphenyl (meth)acrylamide. Among these, examples of such other monomers include alkyl (meth)acrylates having about 1 to 8 carbon atoms, such as methyl (meth)acrylate, ethyl (meth)acrylate, butyl (meth)acrylate, hexyl (meth)acrylate, 2-ethylhexyl (meth)acrylate, and the like. Further, known monomers may be used, if necessary, in addition to these.

When the (Component a) is a copolymer, it preferably has a structure of the following general formula (A-poly),

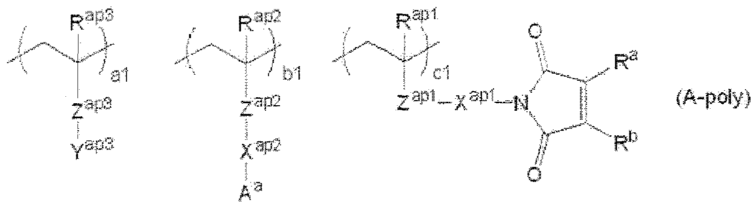

R^{ap3} in the general formula (A-poly) represents a hydrogen atom or a methyl group. Z^{ap3} represents -COO-, -CONR^{ax3}-, or a single bond, and R^{ax3} represents a hydrogen atom or an alkyl group having 1 to 4 carbon atoms. Y^{ap3} represents a hydrogen atom, an alkyl group having 1 to 10 carbon atoms, an aryl group having 6 to 20, or an aralkyl group having 7 to 20 carbon atoms. a1, b1, and c1 represent a copolymerization ratio in the high-molecular-weight compound, and the total sum of a1, b1, and c1 is 100.

R^{a}, R^{b}, R^{ap1}, Z^{ap1}, and X^{ap1} in the general formula (A-poly) have the same definitions as in the general formula (AP) and preferred ranges thereof are also the same.

R^{ap2}, Z^{ap2}, X^{ap2}, and A^{a} in the general formula (A-poly) have the same definitions as in the general formula (AP-C) and preferred ranges thereof are also the same.

In the general formula (A-poly), R^{ap3} represents a hydrogen atom or a methyl group, and preferably a hydrogen atom.

In the general formula (A-poly), Z^{ap3} represents -COO-, -CONR^{ax3}-, or a single bond, and preferably -COO- R^{ax3} represents a hydrogen atom or an alkyl group having 1 to 4 carbon atoms. The alkyl group having 1 to 4 carbon atoms may have either a linear structure or a branched structure. Specific examples thereof include a methyl group, an ethyl group, a propyl group, an isopropyl group, a butyl group, an isobutyl group, a sec-butyl group, and a t-butyl group. R^{ax3} represents a hydrogen atom or an alkyl group having 1 to 2 carbon atoms, that is, it is preferably a methyl group or an ethyl group, and particularly preferably a hydrogen atom. Further, R^{ax3} may have a substituent or may not have a substituent, but preferably does not have a substituent.

In the formula (A-poly), Y^{ap3} represents a hydrogen atom, an alkyl group having 1 to 10 carbon atoms, an aryl group having 6 to 20, or an aralkyl group having 7 to 20 carbon atoms. These groups may have a substituent or may not have a substituent. Further, an ether bond, an ester bond, an amide bond, or a urethane bond may be present in these groups.

When Y^{ap3} is an alkyl group having 1 to 10 carbon atoms, the alkyl group may have any one of a linear structure, a branched structure, and a cyclic structure. When Y^{ap3} represents an alkyl group having 1 to 10 carbon atoms, it preferably has 1 to 8 carbon atoms, and more preferably 1 to 6 carbon atoms.

When Y^{ap3} is an alkyl group having 1 to 10 carbon atoms, specific examples thereof include -CH₃, -C₂H₅, -CH(CH₃)₂, -CH₂C(CH₃)₃, -C₆H₁₃, a cyclohexyl group, -C₂H₄-OCO-C₂H₅, -C₂H₄-O-C₅H₁₁, -C₂H₄-CONH-C₂H₅, -C₄H₈-OCONH-C₆H₁₃, and the like.

When Y^{ap3} is an aryl group having 6 to 20, the aryl group preferably has 6 to 20 carbon atoms, preferably 6 to 18 carbon atoms, more preferably 6 to 14 carbon atoms, and most preferably 6 to 10 carbon atoms. Specific examples of the aryl group of Y^{ap3} include a phenyl group, a biphenyl group, -C₆H₄-CO-C₆H₅, a naphthyl group, and the like.

When Y^{ap3} is an aralkyl group having 7 to 20 carbon atoms, the aralkyl group preferably has 7 to 20 carbon atoms, preferably 7 to 18 carbon atoms, more preferably 7 to 14 carbon atoms, and most preferably 7 to 10 carbon atoms. Specific examples of the aralkyl group of Y^{ap3} include -C₃H₆-C₆H₅, -C₂H₄-C₆H₄-C₆H₅, -CH₂-C₆H₄-C₆H₄-C₂H₅, -C₂H₄-OCO-C₆H₅, and the like.

In the formula (A-poly), a1, b1, and c1 represent a copolymerization ratio in the high-molecular-weight compound, and the total sum of a1, b1, and c1 is 100 (the copolymerization ratio is a molar ratio). A range of 30≤a1+b1≤90 and 10≤c1≤70 is preferable, and a range of 40≤a1+b1≤90 and 10≤c1≤60 is more preferable.

In the general formula (A-poly), it is particularly preferable that R^{a} and R^{b} be each independently an alkyl group having 1 to 2 carbon atoms, R^{ap1} be a methyl group, Z^{ap1} be -COO-, X^{ap1} be an alkylene group having 2 to 12 carbon atoms, R^{ap2} be a hydrogen atom, Z^{ap2} be -COO-, X^{ap2} be a single bond, an alkylene group having 2 to 8 carbon atoms, or an allylene group having 6 to 10 carbon atoms, A^{a} be -COOM¹ or -SO₃M¹, R^{ap3} be a hydrogen atom, Z^{ap3} be -COO-, Y^{ap3} be an alkyl group having 1 to 6 carbon atoms or an aryl group having 6 to 10 carbon atoms, and a1, b1, and c1 satisfy 30≤a1+b1≤90 and 10≤c1≤70.

Examples of the (Component a) include the compounds below, but the present invention is not limited thereto.

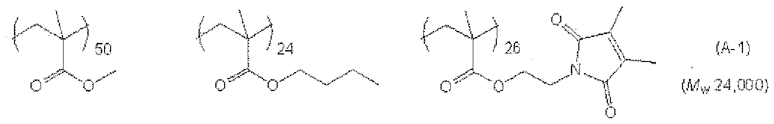

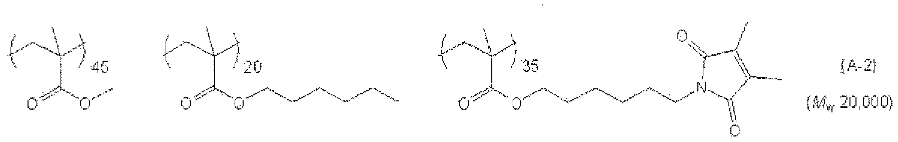

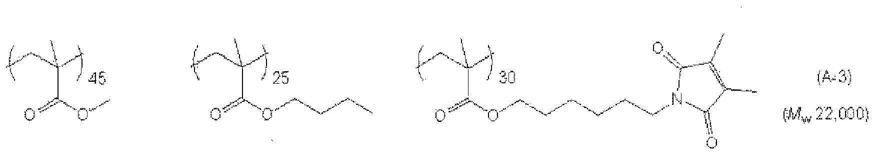

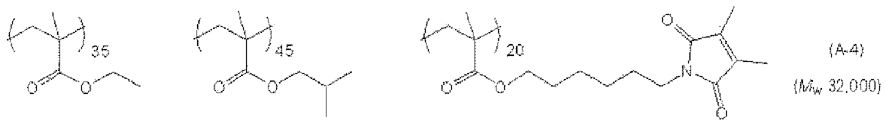

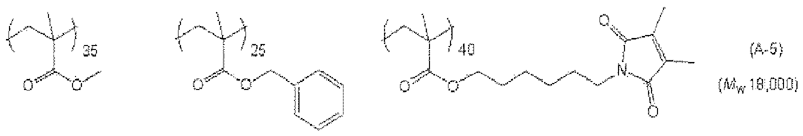

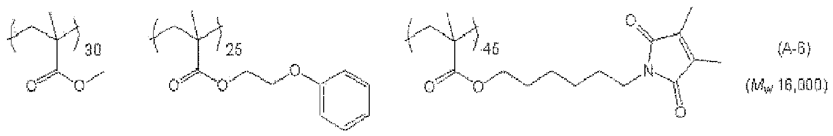

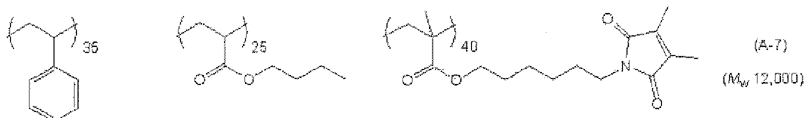

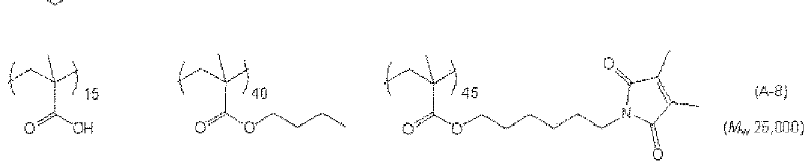

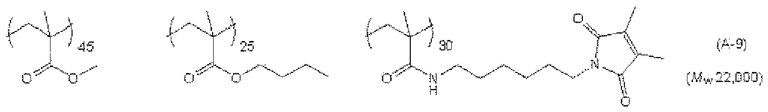

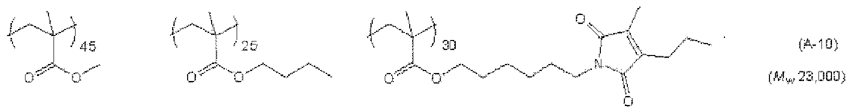

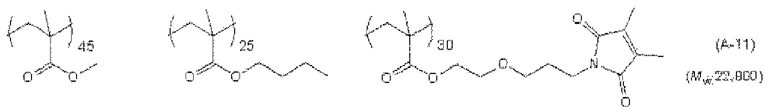

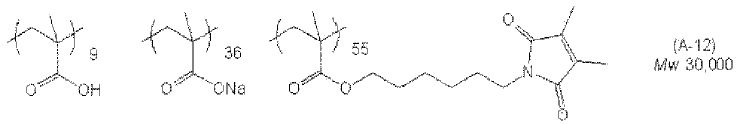

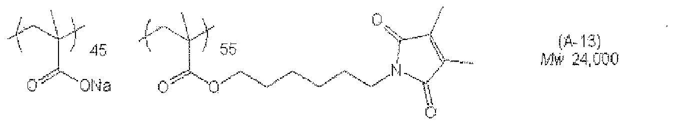

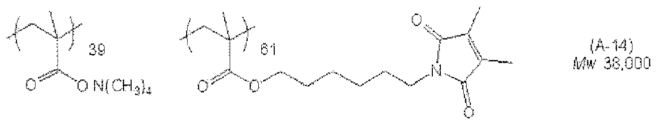

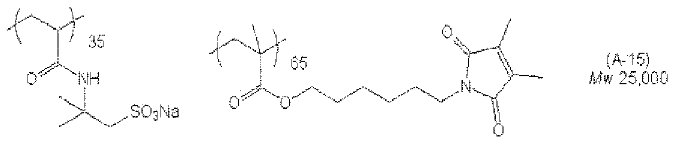

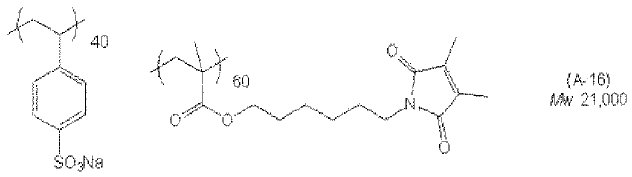

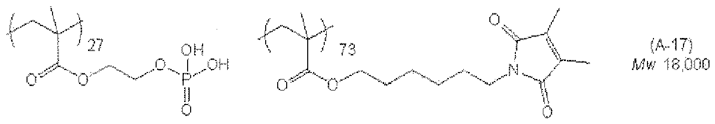

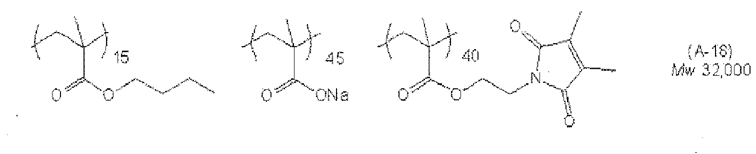

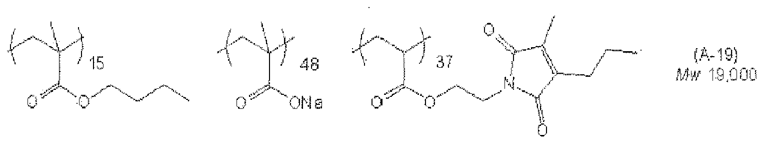

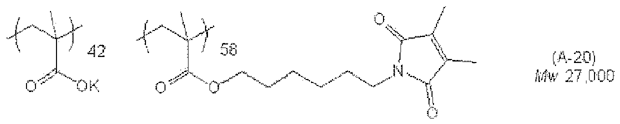

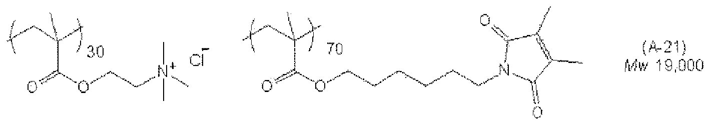

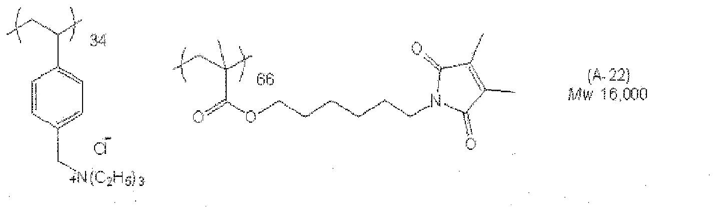

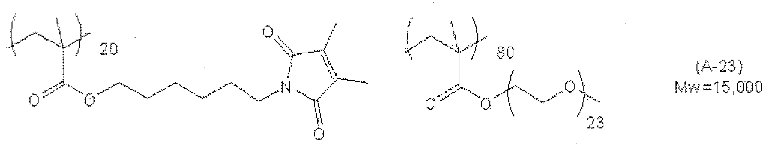

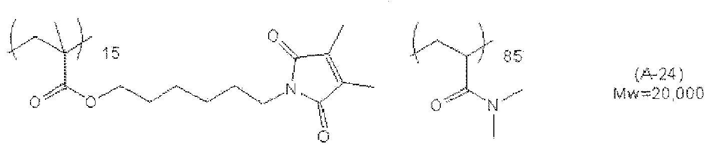

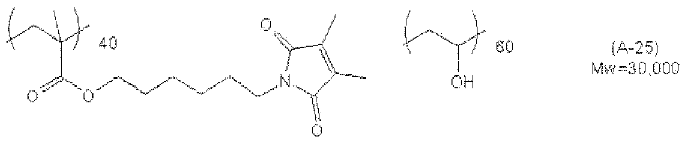

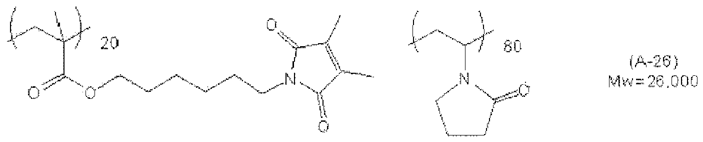

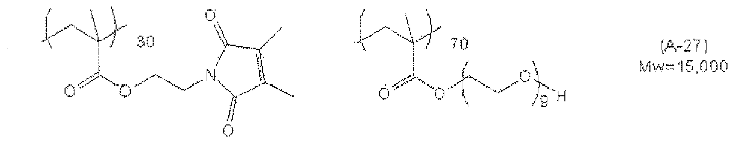

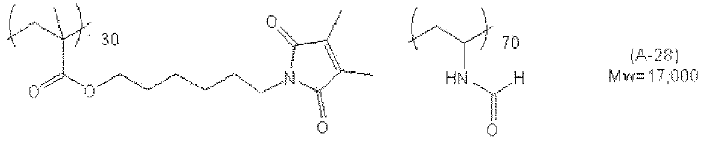

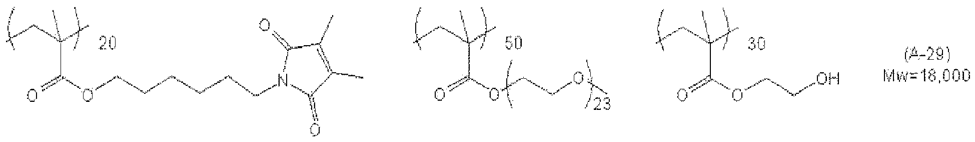

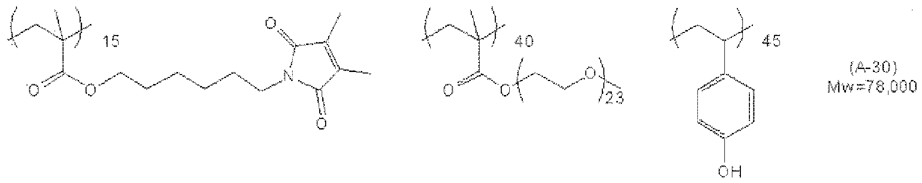

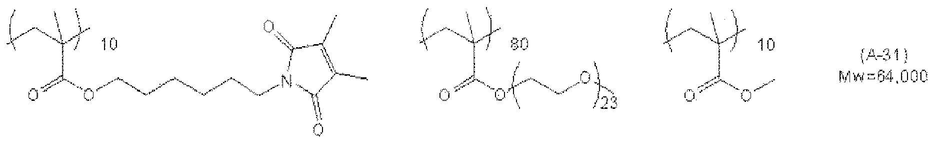

Generally, the (Component a) or a precursor thereof in the present invention can be produced by a known method. For example, low-molecular-weight compounds such as Exemplary Compounds (AL-1) to (AL-3) can be produced by a method described in US2009/0224203A1, Synlett Vol. 13, pp. 2172-2176 (2009), Journal of Polymer Science Part A-1 Polymer Chemistry Vol. 10, No. 6, pp. 1687-1699 (1972), or the like. Acrylates used as a precursor of the high-molecular-weight compounds such as Exemplary Compounds (AP-M1) to (AP-M16), can be produced by a method described in JP1976-988A (JP-S52-988A) and JP1991-251258A (JP-H04-251258A). All of compounds used as a precursor of the high-molecular-weight compounds such as Exemplary Compounds (AP-C-M1) to (AP-C-M27) are commercially available compounds or ones formed by neutralization of acidic groups of the commercially available compounds with an alkali metal hydroxide or the like. High molecular compounds such as Exemplary Compounds (A-1) to (A-31) can be obtained by polymerizing the precursor as mentioned above by a known polymerization method, and if necessary, by neutralizing an acidic group with a metal hydroxide or the like, and can be produced by the method according to, for example, the polymerization method described in JP1976-988A (JP-S52-988A) and JP1979-154970A (JP-S55-154970A), Langmuir Vol. 18, No. 14, pp. 5414-5421 (2002), or the like.

The content of the (Component a) in the ink composition is preferably from 1 to 50% by mass, more preferably from 2 to 35% by mass, and still more preferably from 3 to 30% by mass.

<(Compound having two or more of at least any one of a residue formed by removing one hydrogen atom from a compound represented by the general formula (B1) and a residue formed by removing one hydrogen atom from a compound represented by the general formula (B2) in one molecule>

As the compound having two or more of at least any one of a residue formed by removing one hydrogen atom from a compound represented by the general formula (B1) and a residue formed by removing one hydrogen atom from a compound represented by the general formula (B2) in one molecule, that is used in the present invention, any compound having two or more of at least any one of a residue formed by removing one hydrogen atom from a compound represented by the general formula (B1) and a residue formed by removing one hydrogen atom from a compound represented by the general formula (B2) can be used without limitation.

Herein, "at least one kind of group selected from the group consisting of a residue formed by removing one hydrogen atom from a compound represented by the general formula (B1) and a residue formed by removing one hydrogen atom from a compound represented by the general formula (B2)" may also be referred to as "at least one kind of group selected from the group consisting of the general formulae (B1) and (B2)".

Next, the general formula (B1) will be described in detail.

(Description of General Formula (B1))

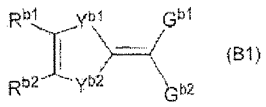

In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.

Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-.

G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfonyl group, an arylsulfonyl group, or a fluoroalkylsulfonyl group, and G^{b1} and G^{b2} may be bonded to each other to form a ring. However, when G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- may be contained in the ring.

R^{b1} and R^{b2} each independently represent a hydrogen atom, an alkyl group, an aryl group, an alkenyl group, or a heterocyclic group, and R^{b1} and R^{b2} may be bonded to each other to form a ring. The alkyl group, the aryl group, the alkenyl group, and the heterocyclic group may have a substituent or may not have a substituent.

R^{b1} and R^{b2} are each independently preferably a hydrogen atom, an alkyl group, or alkenyl group, and more preferably a hydrogen atom or an allyl group.

When at least one of R^{b1} and R^{b2} is an alkyl group, it is preferably an alkyl group having 1 to 12 carbon atoms, and more preferably an alkyl group having 1 to 4 carbon atoms. Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a 1-ethylpropyl group, a hexyl group, an isohexyl group, a 1,1-dimethylbutyl group, a 2,2-dimethylbutyl group, a 3,3-dimethylbutyl group, a 2-ethylbutyl group, a heptyl group, an octyl group, a nonyl group, a decyl group, and the like.

When at least one of R^{b1} and R^{b2} is an aryl group, it is preferably an aryl group having 6 to 20, and more preferably an aryl group having 6 to 10 carbon atoms. Examples of the aryl group include a phenyl group, a naphthyl group, an anthryl group, a phenanthryl group, an acenaphthylenyl group, a biphenylyl group, and the like, and particularly a phenyl group, a 1-naphthyl group, a 2-naphthyl group, and the like.

When at least one of R^{b1} and R^{b2} is an alkenyl group, it is an alkenyl group having 2 to 12 carbon atoms, and more preferably an alkenyl group having 2 to 6 carbon atoms. Examples of the alkenyl group include an ethenyl group, a 1-propenyl group, a 2-propenyl group, a 2-methyl-1-propenyl group, a 1-butenyl group, a 2-butenyl group, a 3-butenyl group, a 3-methyl-2-butenyl group, a 1-pentenyl group, a 2-pentenyl group, a 3-pentenyl group, a 4-pentenyl group, a 4-methyl-3-pentenyl group, a 1-hexenyl group, a 3-hexenyl group, a 5-hexenyl group, a 1-heptenyl group, a 1-octenyl group, and the like.

When at least one of R^{b1} and R^{b2} is a heterocyclic group, examples thereof include a monocyclic non-aromatic heterocyclic group and a fused non-aromatic heterocyclic group of a 5- to 7-membered ring, each containing 1 to 4 hetero atoms selected from an oxygen atom, a sulfur atom, and a nitrogen atom in addition to a carbon atom as a ring-constituting atom, and the like. Examples of the fused non-aromatic heterocyclic group include the monocyclic non-aromatic heterocyclic group of a 5- to 7-membered ring above, a 6-membered ring containing 1 to 2 nitrogen atoms, a group in which a benzene ring or a 5-membered ring containing one sulfur atom are fused, and the like. Examples of the non-aromatic heterocyclic group include a crosslinking one.

Specific examples of the non-aromatic heterocyclic group include pyrrolidinyl (for example, 1-pyrrolidinyl, 2-pyrrolidinyl, and 3-pyrrolidinyl), piperidinyl (for example, piperizino), morpholinyl (for example, morpholino), thiomorpholinyl (for example, thiomorpholino), piperazinyl (for example, 1-piperazinyl), hexamethyleniminyl (for example, hexamethylenimin-1-yl), oxazolidinyl (for example, oxazolidin-3-yl), thiazolidinyl (for example, thiazolidin-3-yl), imidazolidinyl (for example, imidazolidin-3-yl), oxoimidazolidinyl (for example, 2-oxoimidazolidin-1-yl), dioxoimidazolidinyl (for example, 2,4-dioxoimidazolidin-3-yl), dioxooxazolidinyl (for example, 2,4-dioxooxazolidin-3-yl, 2,4-dioxooxazolidin-5-yl, 2,4-dioxooxazolidin-1-yl), dioxothiazolidinyl (for example, 2,4-dioxothiazolidin-3-yl, 2,4-diaxothiazolidin-5-yl), dioxoisoindolinyl (for example, 1,3-dioxoisoindolin-2-yl), oxooxadiazolidinyl (for example, 5-oxooxadiazolidin-3-yl), oxothiadiazolidinyl (for example, 5-oxothiadiazolidin-3-yl), oxopiperazinyl (for example, 3-oxopiperazin-1-yl), dioxopiperazinyl (for example, 2,3-dioxopiperazin-1-yl, 2,5-dioxopiperazin-1-yl), oxodioxolyl (for example, 2-oxo-1,3-dioxol-4-yl), oxodioxolanyl (for example, 2-oxo-1,3-dioxolan-4-yl), 3-oxo-1,3-dihydro-2-benzofuranyl (for example, 3-oxo-1,3-dihydro-2-benzofuran-1-yl), oxodihydrooxadiazolyl (for example, 5-oxo-4,5-dihydro1,2,4-oxadiazol-3-yl), oxodihydropyrazolyl (for example, 5-oxo-4,5-dihydro-1H-pyrazol-3-yl), 4-oxo-2-thioxo-1,3-thiazolidin-5-yl, 4-oxo-2-thioxo-1,3-oxazolidin-5-yl, tetrahydropyranyl (for example, 4-tetrahydropyranyl), 4-oxo-4,5,6,7-tetrahydro-1-benzofuranyl (for example, 4-oxo-4,5,6,7-tetrahydro-1-benzofuran-3-yl), 1,3(2H,5H)-dioxotetrahydroimidazo[1,5-a]pyridinyl, 1,3(2H,5H)-dioxo-10,10a-dihydroimidazo[1,5-b]isoquinolinyl, azabicyclooctyl (for example, 1-azabicyclo[2.2.2]octan-2-yl, 1-azabicyclo[2.2.2]octan-3-yl), and the like.

When R^{b1} and R^{b2} are bonded to each other to form a ring, they preferably form a benzene ring or a naphthalene ring, and more preferably form a benzene ring. Further, the ring structure formed by the bonding of the R^{b1} and R^{b2} may be substituted with a substituent, and examples of the preferable substituent include halogen atoms (for example, fluorine, chlorine, bromine, and the like), alkyl groups having 1 to 12 carbon atoms, such as methyl, ethyl, n-propyl, isopropyl, n-butyl, t-butyl, and the like, aryl groups having 6 to 10 carbon atoms, such as a phenyl group, a naphthyl group, and the like, allyl groups having 3 to 10 carbon atoms, and alkoxy groups having 1 to 6 carbon atoms, such as a methoxy group, an ethoxy group, and the like.

Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-. The alkyl group, the aryl group, and the alkenyl group may have a substituent or may not have a substituent.

Y^{b1} and Y^{b2} are each independently preferably -O-, -S-, or -NR^{b3}-, more preferably -S- or -NR^{b3}-, and particularly preferably -S-.

When R^{b3} is an alkyl group, it preferably has 1 to 8 carbon atoms, and more preferably 1 to 4 carbon atoms.

When R^{b3} is an aryl group, it preferably has 6 to 10 carbon atoms, and more preferably 6 carbon atoms.

When R^{b3} is an alkenyl group, it preferably has 2 to 8 carbon atoms, and more preferably 2 to 4 carbon atoms.

As the substituent which may be contained in R^{b3}, a carboxyl group or the like is preferable.

G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfonyl group, an arylsulfonyl group, or a fluoroalkylsulfonyl group, and G^{b1} and G^{b2} may be bonded to each other to form a ring. However, when G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- may be contained in the ring.

The amide group, the alkoxycarbonyl group, the aryloxycarbonyl group, the acyl group, the arylcarbonyl group, the alkylsulfanyl group, the arylsulfanyl group, the alkylsulfonyl group, the arylsulfonyl group, and the fluoroalkylsulfonyl group may have the substituent or may not have a substituent.

G^{b1} and G^{b2} are each independently preferably an amide group, an acyl group, or an alkylsulfanyl group, and more preferably an amide group or an alkylsulfanyl group.

When at least one of G^{b1} and G^{b2} is an alkoxycarbonyl group, it preferably has 2 to 8 carbon atoms, and more preferably 2 to 4 carbon atoms.

When at least one of G^{b1} and G^{b2} is an aryloxycarbonyl group, it preferably has 7 to 15 carbon atoms, and more preferably 7 to 11 carbon atoms.

When at least one of G^{b1} and G^{b2} is an acyl group, it preferably has 2 to 8 carbon atoms, and more preferably 2 to 4 carbon atoms.

When at least one of G^{b1} and G^{b2} is an arylcarbonyl group, it preferably has 7 to 15 carbon atoms, and more preferably 7 to 11 carbon atoms.

When at least one of G^{b1} and G^{b2} is an alkylsulfanyl group, it preferably has 1 to 8 carbon atoms, and more preferably 1 to 4 carbon atoms.

When at least one of G^{b1} and G^{b2} is an arylsulfanyl group, it preferably has 6 to 14 carbon atoms, and more preferably 6 to 10 carbon atoms.

When at least one of G^{b1} and G^{b2} is an alkylsulfonyl group, it preferably has 1 to 8 carbon atoms, and more preferably 1 to 4 carbon atoms.

When at least one of G^{b1} and G^{b2} is an arylsulfonyl group, it preferably has 6 to 14 carbon atoms, and more preferably 6 to 10 carbon atoms.

When at least one of G^{b1} and G^{b2} is a fluoroalkylsulfonyl group, it preferably has 1 to 8 carbon atoms, and more preferably 1 to 4 carbon atoms.

When R¹² is an alkyl group, it preferably has 1 to 8 carbon atoms, and more preferably 1 to 4 carbon atoms. When R¹² is an aryl group, it preferably has 6 to 14 carbon atoms, and more preferably 6 to 10 carbon atoms. The alkyl group and the aryl group in R¹² may or may not have a substituent.

When R¹³ is an alkyl group, it preferably has 1 to 8 carbon atoms, and more preferably 1 to 4 carbon atoms. When R¹³ is an aryl group, it preferably has 6 to 14 carbon atoms, and more preferably 6 to 10 carbon atoms. The alkyl group and the aryl group in R¹³ may or may not have a substituent.

When G^{b1} and G^{b2} are bonded to each other to form a ring, the ring is usually used as acidic nuclei in merocyanine dyes, and examples of the acidic nuclei are as follows.

(1) 1,3-dicarbonyl nuclei such as 1,3-indanedione, 1,3-cyclohexanedione, 5,5-dimethyl-1,3-cyclohexanedione, and 1,3-dioxane-4,6-dione,
(2) pyrazolinone nuclei such as 3-methyl-1-phenyl-2-pyrazolin-5-one, 1-phenyl-2-pyrazolin-5-one, and 1-(2-benzothiazoline)-3-methyl-2-pyrazolin-5-one,
(3) isooxazolinone nuclei such as 3-phenyl-2-isooxazolin-5-one and 3-methyl-2-isooxazolin-5-one,
(4) oxyindole nuclei such as 1-alkyl-2,3-dihydro-2-oxyindole,
(5) 2,4,6-triketohexahydropyrimidine nuclei such as barbituric acid, 2-thiobarbituric acid and derivatives thereof, wherein examples of the derivatives include 1-alkyl derivatives such as 1-ethyl, 1-ethyl, and the like, 1,3-dialkyl derivatives such as 1,3-diethyl, 1,3-dibutyl, and the like, 1,3-diaryl derivatives such as 1,3-diphenyl, 1,3-di(p-chlorophenyl), 1,3-di(p-ethoxycarbonylphenyl), and the like, 1-alkyl-3-aryl derivatives such as 1-ethyl-3-phenyl and the like, as well as those having a functional group on the 1- and/or 3-position, such as 1-allyl-3-carboxypentyl, 1,3-bis(carboxypentyl), 1-carboxypropyl-3-phenyl, 1-carboxypropyl-3-(4-hydroxyphenyl), 1-carboxyphenyl-3-phenyl, 1,3-bis(carboxyphenyl), 1-allyl-3-{2-(N-phenylsulfamoyl)ethyl}, 1-ethyl-3-{2-(N-benzoylsulfamoyl)ethyl}, 1,3-bis(hydroxyphenyl), 1-allyl-3-{2-(benzenesulfonylaminosulfonyl)ethyl}, and the like,
(6) 2-thio-2,4-thiazolidinedione nuclei such as rhodamine and its derivatives wherein examples of the derivatives include 3-alkylrhodanine such as 3-ethylrhodanine, 3-allylrhodanine, and the like, 3-arylrhodanine such as 3-phenylrhodanine and the like, 3-carboxyalkylrhodanins such as 3-carboxymethylrhodanin, 3-carboxyethylrhodanin, and the like, 3-carboxyarylrhodanins such as 3-carboxyphenylrhodanin and the like, etc.,
(7) 2-thio-2,4-oxazolidinedione(2-thio-2,4-(3H,5H)-oxazoledione) nuclei such as 2-ethyl-2-thio-2,4-oxazolidinedione,
(8) thianaphthenone nuclei such as 3(2H)-thianaphthenone and 3(2H)-thianaphthenone-1,1-dioxide,
(9) 2-thio-2,5-thiazolidinedione nuclei such as 3-ethyl-2-thio-2,5-thiazolidinedione,
(10) 2,4-thiazolidinedione nuclei such as 2,4-thiazolidinedione, 3-ethyl-2,4-thiazolidinedione, and 3-phenyl-2,4-thiazolidinedione,
(11) thiazolidinone nuclei such as 4-thiazolidinone and 3-ethyl-4-thiazolidinone,
(12) 4-thiazolinone nuclei such as 2-ethylmercapto-5-thiazolin-4-one and 2-alkylphenylamino-5-thiazolin-4-one,
(13) 2-imino-2-oxozolin-4-one (pseudohydantoin) nuclei,
(14) 2,4-imidazolidinedione (hydantoin) nuclei such as 2,4-imidazolidinedione and 3-ethyl-2,4-imidazolidinedione,
(15) 2-thio-2,4-imidazolidinedione (2-thiohydantoin) nuclei such as 2-thio-2,4-imidazolidinedione and 3-ethyl-2-thio-2,4-imidazolidinedione,
(16) 2-imidazolin-5-one nuclei such as 2-n-propylmercapto-2-imidazolin-5-one,
(17) furan-5-one,
(18) 4-hydroxy-2(1H)-quinolinone nuclei or 4-hydroxy-2(1H)-pyridinone nuclei such as N-methyl-4-hydroxy-2(1H)-quinolinone, N-n-butyl-4-hydroxy-2(1H)-quinolinone and N-methyl-4-hydroxy-2(1H)-pyridinone,
(19) substituted or unsubstituted 4-hydroxy-2H-pyran-2-one and 4-hydroxycoumarin, and
(20) substituted or unsubstituted thioindoxyl such as 5-methylthioindoxyl.

Among those used as the acidic nuclei, (1) 1,3-dicarbonyl nuclei, (2) pyrazoline nuclei, (5) 2,4,6-triketohexahydropyrimidine nuclei, (6) 2-thio-2,4-thiazolidinedione nuclei, and (7) 2-thio-2,4-oxazolidinedione(2-thio-2,4-(3H,5H)-oxazoledione) nuclei are preferable, and (5) 2,4,6-triketohexahydropyrimidine nuclei typically such as barbituric acid or 2-thiobarbituric acid and a derivative thereof are particularly preferable.

When G^{b1} and G^{b2} in the compound of the compound of the general formula (B1) are bonded to each other to form a ring, the general formula (B1) has a structure of the general formula (B1-a).

The component above (Component b) is preferably a compound represented by the general formula (B1-a).

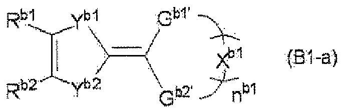

In the general formula (B1-a), G^{b1,} and G^{b2,} are each are a residue formed by one hydrogen atom from G^{b1} and G^{b2} above, X^{b1} is a single bond, -C(=O)-, -C(=S)-, -NR¹²-(wherein R¹² represents a hydrogen atom, an alkyl group, or an aryl group), -N=CR¹³-(wherein R¹³ represents a hydrogen atom, an alkyl group, or an aryl group), -O-, or -S-, when plural X^{b1} are present, they may be the same as or different from each other, and n^{b1} is an integer of 1 or more.

R^{b1}, R^{b2}, Y^{b1}, and Y^{b2} are the same as R^{b1}, R^{b2}, Y^{b1}, and Y^{b2} in the general formula (B1).

n^{b1} is an integer of 1 or more, preferably an integer of 1 to 4, and more preferably an integer of 1 to 2.

The general formula (B1) is preferably a general formula (B1—b).

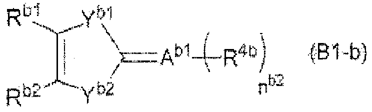

In the general formula (B1-b), A^{b1} is a residue formed by removing (2+n^{b2}) hydrogen atoms from a compound having a hydrocarbon ring or a compound having a heterocycle, R^{4b} represents a hydrogen atom, an alkyl group, or an aryl group, and when plural R^{4b,}s are present, they may be the same as or different from each other. n^{b2} is an integer of 0 or more. However, a double bond that links A^{b1} in the general formula (B1-b) with a 5-membered ring is bonded to a carbon atom in A^{b1}.

The compound having a hydrocarbon ring in A^{b1} may be any one that has a hydrocarbon ring, and examples thereof include a compound having a monocyclic hydrocarbon ring, a compound in which a hydrocarbon ring and a hydrocarbon ring are fused, a compound in which a heterocycle and a hydrocarbon ring are fused, and the like.

The compound having a heterocycle in A^{b1} may be any one that has a heterocycle, and examples thereof include a compound having a monocyclic heterocycle, a compound in which a hydrocarbon ring and a heterocycle are fused, a compound in which a heterocycle and a heterocycle are fused, and the like.

Specific examples of the compound having a hydrocarbon ring or the compound having a heterocycle include the compounds that are usually used as acidic nuclei in merocyanine dyes, as described above.

When R^{4b} is an alkyl group, it preferably has 1 to 8 carbon atoms, and more preferably 1 to 4 carbon atoms.

When R^{4b} is an aryl group, it preferably has 6 to 14 carbon atoms, and more preferably 6 to 10 carbon atoms.

The alkyl group and the aryl group in R^{4b} may or may not have a substituent.

n^{b2} is an integer of 0 or more, preferably an integer of 0 to 4, and more preferably an integer of 0 to 2.

The general formula (B1) is more preferably the general formula (B1-c).

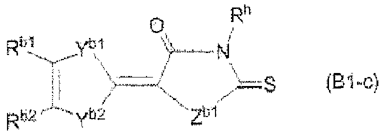

In the general formula (B1-c), Z^{b1} represents -CONRⁱ-, -NRⁱ-, -O-, or -S-, and Rⁱ represents a hydrogen atom, an alkyl group, or an aryl group. R^{h} represents a hydrogen atom, an alkyl group, or an aryl group R^{b1}, R^{b2}, Y^{b1}, and Y^{b2} have the same definitions as in the general formula (B1).

When Rⁱ is an alkyl group, it preferably has 1 to 8 carbon atoms, and more preferably 2 to 4 carbon atoms.

When Rⁱ is an aryl group, it preferably has 6 to 14 carbon atoms, and more preferably 6 to 10 carbon atoms.

The alkyl group and the aryl group in Rⁱ may or may not have a substituent.

When R^{h} is an alkyl group, it preferably has 1 to 8 carbon atoms, and more preferably 2 to 4 carbon atoms.

When R^{h} is an aryl group, it preferably has 6 to 14 carbon atoms, and more preferably 6 to 10 carbon atoms.

The alkyl group and the aryl group in R^{h} may or may not have a substituent.

The compounds represented by the general formula (B1) in the present invention can be synthesized using a known method.

It can be synthesized with reference to, for example, "The Theory of Photographic Process", 4th edition, edited by T. H. James, Macmillan Co., New York (1977); F. M. Hamer, "The Cyanine Dyes and Related Compounds", John Wiley & Sons Co., New York (1964); JP1985-203443A (JP-S61-203443A); or the like.

Specific examples of the compound by the general formula (B1) that can be used in the present invention include the following compounds.

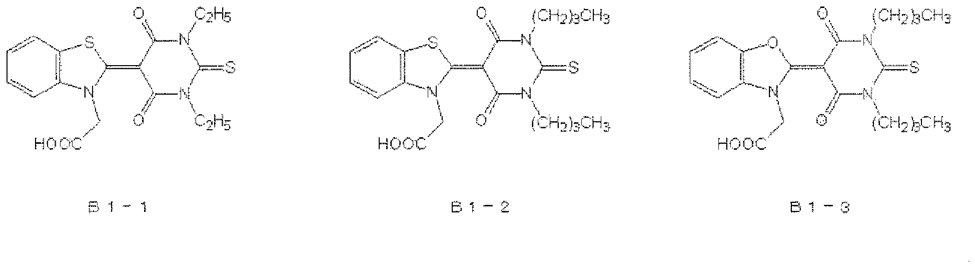

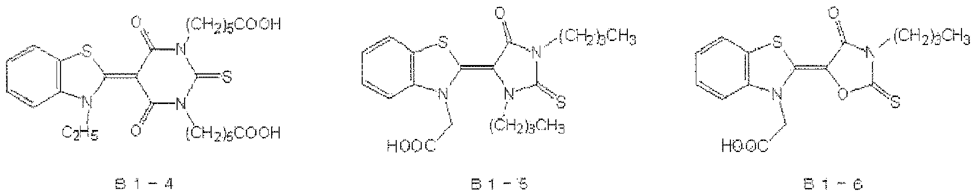

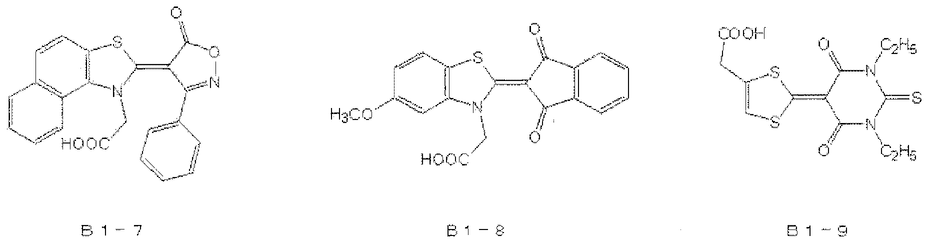

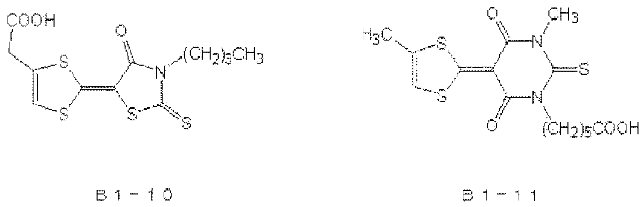

Next, the general formula (B2) will be described in detail.

(Description of General Formula (B2))

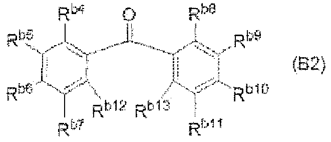

In the general formula (B2), R^{b4}, R^{b5}, R^{b6}, R^{b7}, R^{b8}, R^{b9}, R^{b10}, R^{b11}, R^{b12}, and R^{b13} each independently represent a hydrogen atom, a halogen atom, an alkyl group, an aryl group, a hydroxyl group, a cyano group, a nitro group, an amino group, an alkylsulfanyl group, an alkylamino group, an alkoxy group, an alkoxycarbonyl group, an acyloxy group, an acyl group, a carboxyl group, or a sulfo group, and at least two selected from R^{b4}, R^{b5}, R^{b6}, R^{b7}, R^{b8}, R^{b9}, R^{b10}, R^{b11}, R^{b12}, and R^{b13} may form a ring. However, -S- may be interposed in the ring.

R^{b4}, R^{b5}, R^{b6}, R^{b7}, R^{b8}, R^{b9}, R^{b10}, and R^{b11} are each independently preferably a hydrogen atom, a halogen atom, an alkyl group, an aryl group, a hydroxyl group, a cyano group, an alkoxy group, an alkoxycarbonyl group, or a carboxyl group, more preferably a hydrogen atom, an alkyl group, an aryl group, a hydroxyl group, an alkoxy group, an alkoxycarbonyl group, or a carboxyl group, and most preferably a hydrogen atom, a hydroxyl group, an alkoxycarbonyl group, or a carboxyl group.

R^{b12} and R^{b13} represent a hydrogen atom, or they are preferably bonded to each other via -S- to form a ring.

Examples of the halogen atom include a fluorine atom, a chlorine atom, a bromine atom, and the like, and a fluorine atom or a chlorine atom is preferable.

The alkyl group is preferably a linear, branched, or cyclic alkyl group having 1 to 8 carbon atoms. The alkyl group may or may not have a substituent.

The aryl group is preferably an aryl group having 6 to 10 carbon atoms. The aryl group may or may not have a substituent.

The alkylsulfanyl group is preferably an alkylsulfanyl group having 1 to 8 carbon atoms. The alkylsulfanyl group may or may not have a substituent. The alkylamino group is preferably an alkylamino group having 1 to 8 carbon atoms. The alkylamino group may or may not have a substituent.

The alkoxy group is preferably an alkoxy group having 1 to 8 carbon atoms. The alkoxy group may or may not have a substituent.

The alkoxycarbonyl group is preferably an alkoxycarbonyl group having 1 to 8 carbon atoms. The alkoxycarbonyl group may or may not have a substituent. The acyloxy group is preferably an acyloxy group having 1 to 8 carbon atoms. The acyloxy group may or may not have a substituent.

The acyl group is preferably an acyl group having 1 to 8 carbon atoms. The acyl group may or may not have a substituent.

Specific examples of the compound by the general formula (B2) that can be used in the present invention include the following compounds.

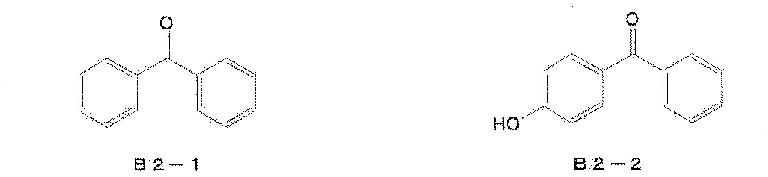

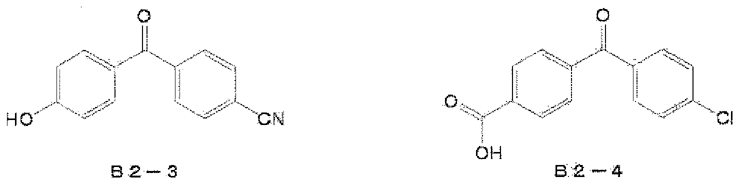

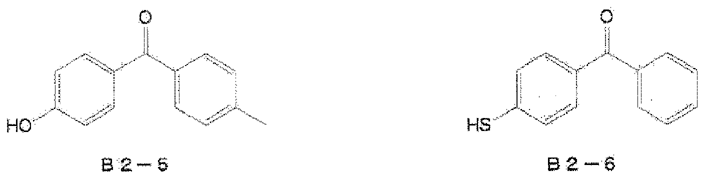

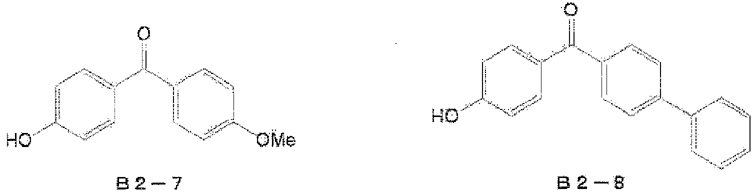

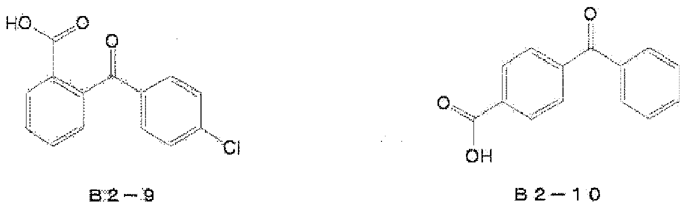

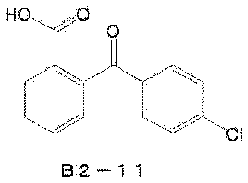

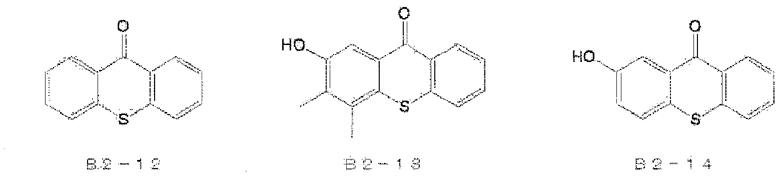

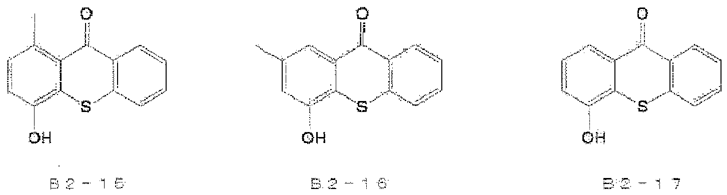

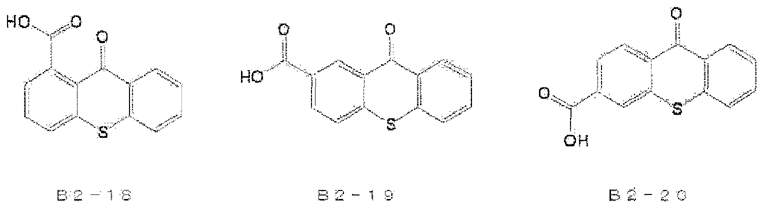

The (Component b) may be either a low-molecular-weight compound having a molecular weight of 300 to 2,000 or a high-molecular-weight compound having a weight average molecular weight of 5,000 or more. From the viewpoints of water resistance, solvent resistance, adhesiveness to a recording medium after curing the ink composition, and the like, the (Component b) is preferably a high-molecular-weight compound having a weight average molecular weight of 5,000 or more.

When the (Component b) is a low-molecular-weight compound having a molecular weight of 300 to 2,000, 2 or more, preferably 2 to 6, more preferably 2 to 4, still more preferably 2 to 3, and particularly preferably 2 groups of at least one kind of group selected from the group consisting of the general formulae (B1) and (B2) may be contained in one molecule of the (Component b). When plural groups of at least one kind of group selected from the group consisting of the general formulae (B1) and (B2) are contained in one molecule, they may be the same as or different from each other.

When the (Component b) is a high-molecular-weight compound having a weight average molecular weight of 5,000 or more, two or more of at least one kind of group selected from the group consisting of the general formulae (B1) and (B2) may be present in one molecule of the (Component b), and the number of the groups of at least one kind of group selected from the group consisting of the general formulae (B1) and (B2) is not particularly limited, but is preferably 2 or more and 500 or less, and still more preferably 10 or more and 200 or less. Further, when the (Component b) is a high-molecular-weight compound, at least one group of at least one kind of group selected from the group consisting of the general formulae (B1) and (B2) is preferably present in a side chain of the high-molecular-weight compound, and two or more groups of at least one kind of group selected from the group consisting of the general formulae (B1) and (B2) are more preferably present in a side chain of the high-molecular-weight compound.

From the viewpoints of the dischargeability when the ink composition is discharged by an inkjet method, and the like, the weight average molecular weight is preferably from 5,000 to 200,000, more preferably from 7,000 to 100,000, still more preferably from 10,000 to 50,000, and particularly preferably from 10,000 to 40,000.

Furthermore, the weight average molecular weight is measured by means of gel permeation chromatography (GPC). For GPC, HLC-8020 GPC (manufactured by Tosoh Corporation) is used; as the columns, TSKgel Super HZM-H, TSKgel Super HZ4000, and TSKgel Super HZ200 (all manufactured by Tosoh Corporation, 4.6 mmID×15 cm) are used; and as an eluent, THF (tetrahydrofuran) is used.

When the (Component b) is a high-molecular-weight compound having a weight average molecular weight of 5,000 or more, other polymeric structures are not limited as long as the (Component b) is a high-molecular-weight compound having at least one kind of group selected from the group consisting of the general formulae (B1) and (B2) in the side chain or end, and it is preferable that a polymeric structure such as polyacrylate, polyester, polyethylenimine, polystyrene, and the like be used and the (Component b) preferably has a polyacrylate structure.

When the (Component b) is a high-molecular-weight compound, the (Component b) is preferably a high-molecular-weight compound including a structure represented by the general formula (BP).

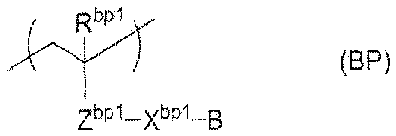

In the formula (BP), R^{bp1} represents a hydrogen atom or a methyl group, Z^{bp1} represents a single bond, -COO-, or -CONR^{bx1}-, R^{bx1} represents a hydrogen atom or an alkyl group having 1 to 4 carbon atoms, X^{bp1} represents a single bond or a divalent organic group, and B represents a residue formed by removing one hydrogen atom from a compound represented by the general formula (B1) or a residue formed by removing one hydrogen atom from a compound represented by the general formula (B2).

In the formula (BP), R^{bp1} represents a hydrogen atom or a methyl group. R^{bp1} is preferably a methyl group.

In the formula (BP), Z^{bp1} is preferably -COO- or -CONR^{bx1}-. Z^{bp1} is preferably -COO-.

Furthermore, R^{bx1} represents a hydrogen atom or an alkyl group having 1 to 4 carbon atoms. The alkyl group having 1 to 4 carbon atoms may have either a linear structure or a branched structure, and specific examples thereof include a methyl group, an ethyl group, a propyl group, an isopropyl group, a butyl group, an isobutyl group, a sec-butyl group, and a t-butyl group. R^{bx1} represents a hydrogen atom or an alkyl group having 1 to 2 carbon atoms, that is, it is preferably a methyl group or an ethyl group, and particularly preferably a hydrogen atom. Further, R^{bx1} may have a substituent or may not have a substituent, but preferably does not have a substituent.

In the formula (BP), X^{bp1} represents a single bond or a divalent organic group. The divalent organic group is preferably an alkylene group having 2 to 20 carbon atoms. The alkylene group may have any one of a linear structure, a branched structure, and a cyclic structure. Further, an ether bond, an ester bond, an amide bond, a urethane bond, or an allylene group may be present in the alkylene group. When X^{bp1} is an alkylene group, the number of carbon atoms is preferably from 2 to 20, more preferably from 2 to 12, and still more preferably from 2 to 8.

In the formula (BP), it is preferable that R^{a} and R^{b} each independently represent an alkyl group having 1 to 2 carbon atoms, R^{bp1} represent a methyl group, Z^{bp1} represent -COO-, and X^{bp1} represent an alkylene group having 2 to 12 carbon atoms.

When the (Component b) is a high-molecular-weight compound including the structure represented by the general formula (BP), the high-molecular-weight compound is preferably a high-molecular-weight compound obtained by the polymerization of monomers represented by the following general formula (BP-M).

Furthermore, from the viewpoint of controlling the film physical properties after curing the ink composition, other monomers are preferably included in the copolymerization component.

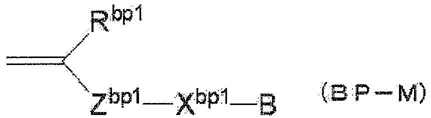

R^{a}, R^{b}, R^{bp1}, Z^{bp1}, and X^{bp1} in the general formula (BP-M) (including preferable examples thereof) have the same definitions as in the formula (BP).

Preferable examples of the monomer represented by the general formula (BP-M) include the compounds below, but the present invention is not limited thereto.

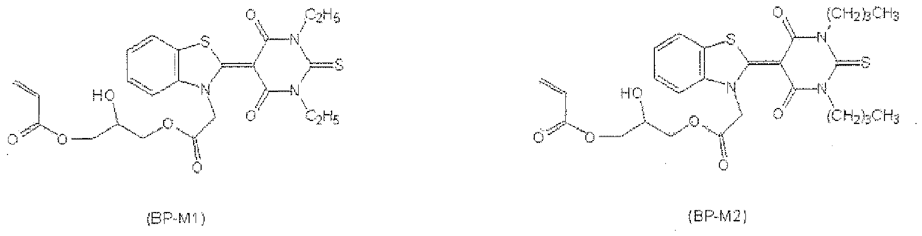

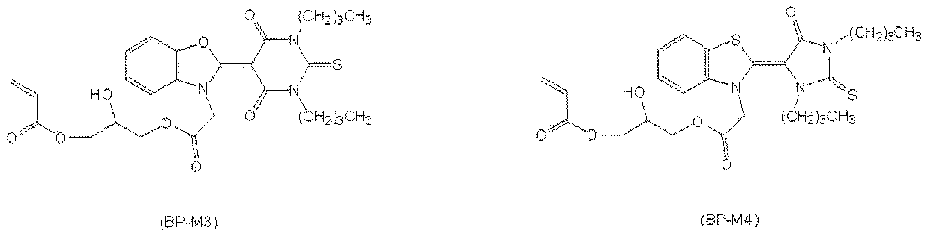

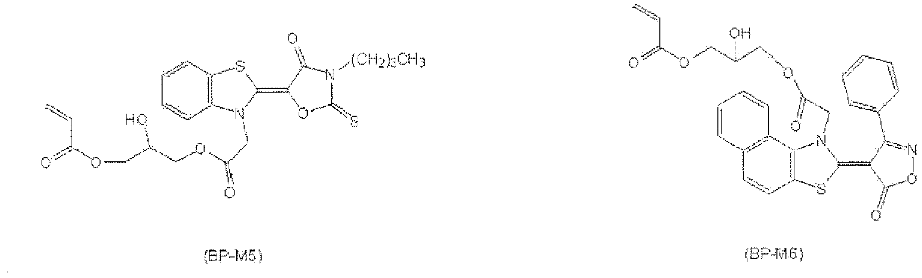

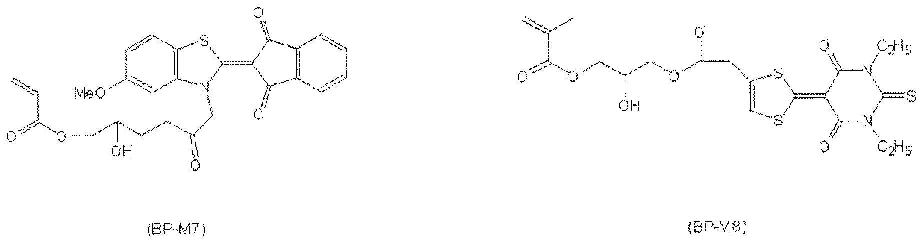

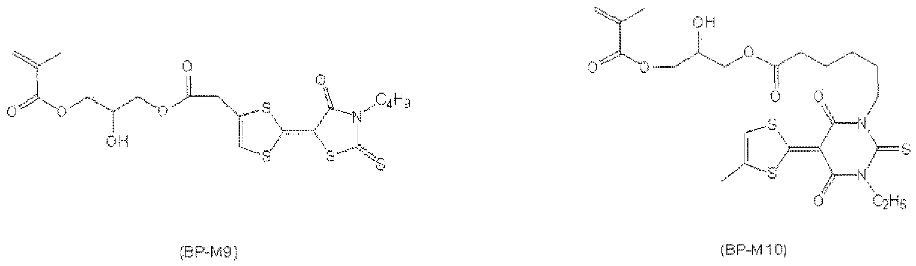

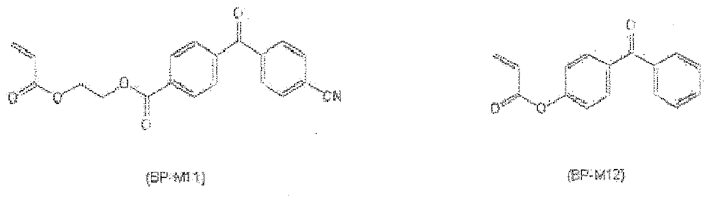

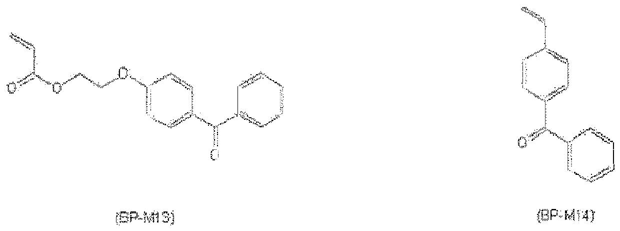

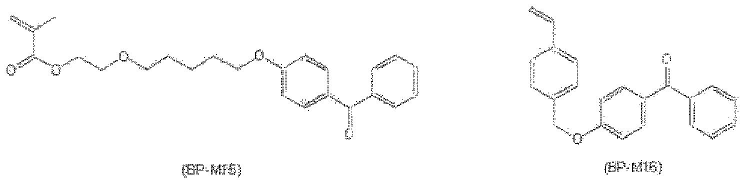

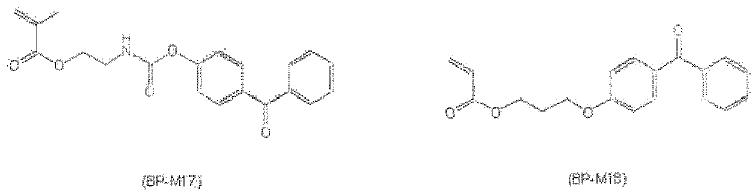

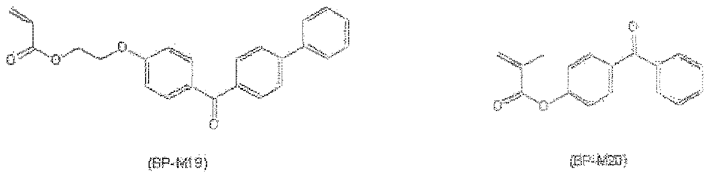

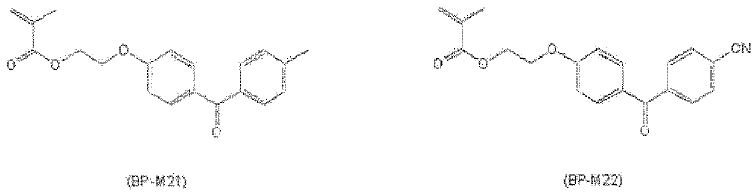

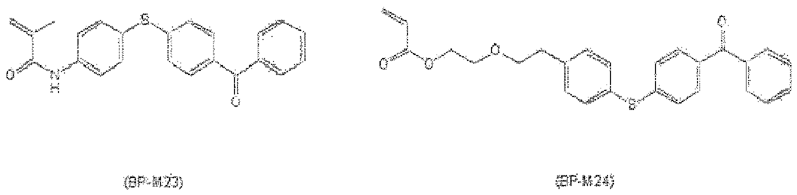

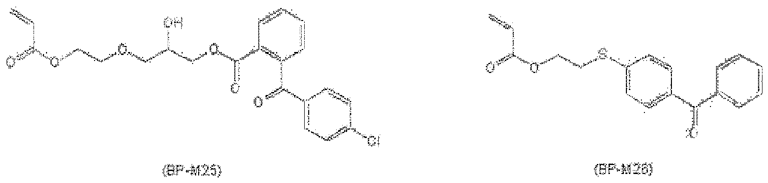

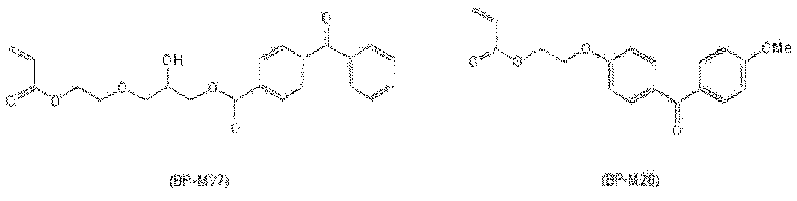

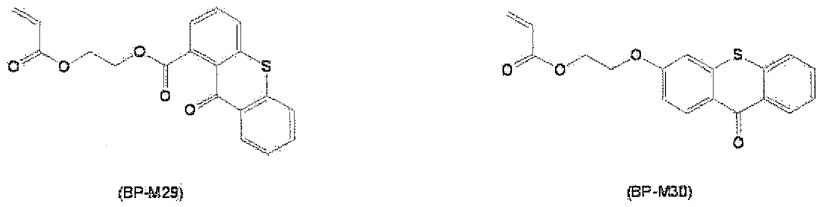

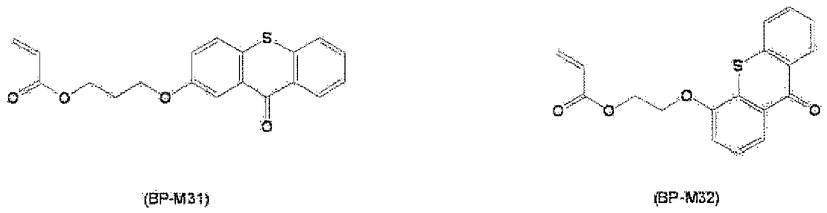

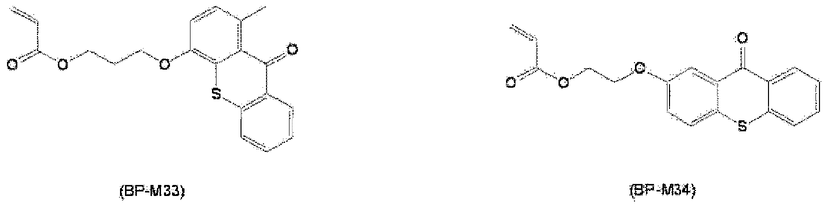

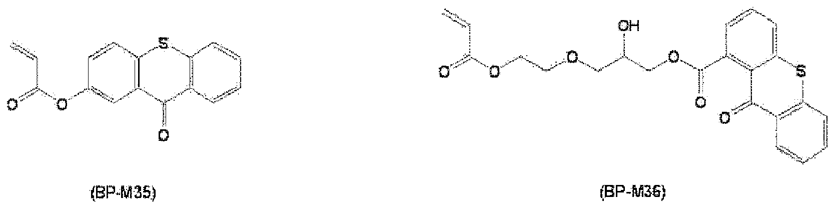

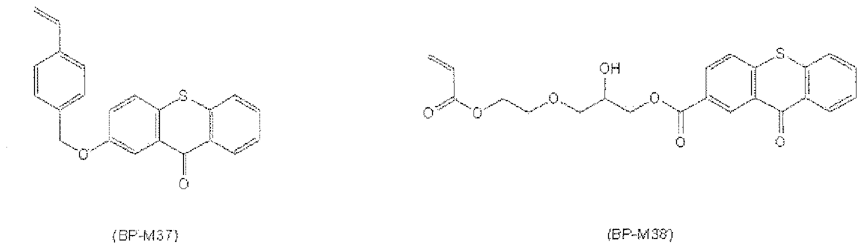

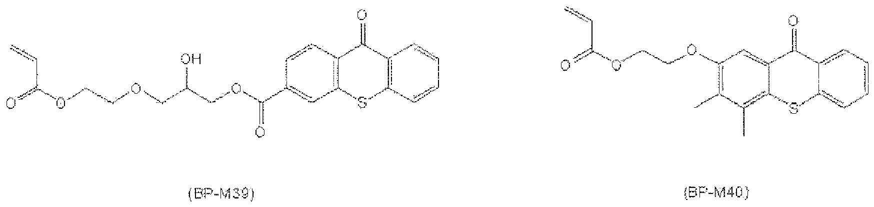

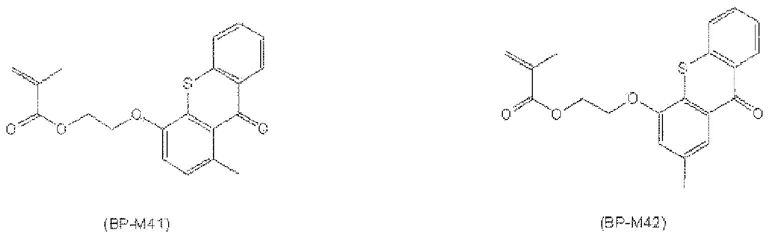

When the ink composition of the present invention includes water, the (Component b) preferably has a water-soluble group.

When the ink composition of the present invention includes water, the (Component b) is preferably water-soluble or water-dispersible, and I g of the (Component b) can be preferably dissolved or dispersed in less than 30 ml of water (25°C), more preferably dissolved or dispersed in less than 20 ml of water (25°C), and particularly preferably dissolved or dispersed in less than 10 ml of water (25°C). The (Component b) is preferably water-soluble.

The (Component b) of the present invention preferably has a water-soluble group, and the water-soluble group in the (Component b) is not limited as long as it provides the compound of the (Component b) with water-solubility and water-dispersibility. The water-soluble group which the (Component b) may contain is not particularly limited, and thus, it may be a non-ionic water-soluble group, and any of ionic water-soluble groups such as an anionic water-soluble group and a cationic water-soluble group can be used.

When the (Component b) is a high-molecular-weight compound, the high-molecular-weight compound preferably has a structure of the following general formula (BP—C), in addition to the structure of the general formula (BP).

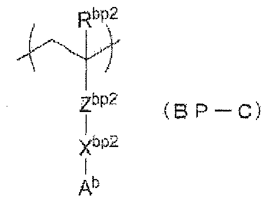

In the general formula (BP—C), R^{bp2} represents a hydrogen atom or a methyl group. Z^{bp2} represents -COO-, -CONR^{bx2-}, or a single bond, and R^{bx2} represents a hydrogen atom or an alkyl group having 1 to 4 carbon atoms. X^{bp2} represents a single bond or a divalent organic group. A^{b} represents a water-soluble group.

In the general formula (BP—C), R^{bp2} represents a hydrogen atom or a methyl group, and preferably a hydrogen atom.

In the general formula (BP—C), Z^{bp2} represents -COO-, -CONR^{bx2-}, or a single bond, and preferably -COO-. R^{bx2} represents a hydrogen atom or an alkyl group having 1 to 4 carbon atoms. The alkyl group having 1 to 4 carbon atoms may have either a linear structure or a branched structure, and specific examples thereof include a methyl group, an ethyl group, a propyl group, an isopropyl group, a butyl group, an isobutyl group, a sec-butyl group, and a t-butyl group. R^{bx2} represents a hydrogen atom or an alkyl group having 1 to 2 carbon atoms, that is, it is preferably a methyl group or an ethyl group, and particularly preferably a hydrogen atom. Further, R^{bx2} may have a substituent or may not have a substituent, but preferably does not have a substituent.

In the general formula (BP—C), X^{bp2} represents a single bond or a divalent organic group. When X^{bp2} is a divalent organic group, the divalent organic group is preferably an alkylene group having 1 to 20 carbon atoms, an allylene group having 6 to 20 carbon atoms or an aralkylene group having 7 to 20 carbon atoms. These groups may have a substituent or may not have a substituent. Further, an ether bond, an ester bond, an amide bond, or a urethane bond may be present in these groups.

The substituent preferably has a hydroxyl group.

When X^{bp2} is an alkylene group having 1 to 20 carbon atoms, the alkylene group may have any one of a linear structure, a branched structure, and a cyclic structure. When X^{bp2} is an alkylene group, it preferably has 2 to 12 carbon atoms, and more preferably 2 to 8 carbon atoms. Specific examples of the alkylene group of X^{bp2} include -CH₂-, -C₂H₄-, -(CH₂)₃-C(CH₃)₂-CH₂-, -CH₂C(CH₃)₂CH₂-, -C₆H₁₂-, C₄H₇(C₄H₉)C₄H₈-, C₁₈H₃₆, 1,4-trans-cyclohexylene group, -C₂H₄-OCO-C₂H₄-, -C₂H₄-OCO-, -C₂H₄-O-C₅H₁₀-, -CH₂-O-C₅H₉(C₅H₁₁)-, -C₂H₄-CONH-C₂H₄-, -C₂H₄-CONH-, -C₄H₈-OCONH-C₆H₁₂-, -CH₂-OCONHC₁₀H₂₀-, -CH₂-CH(OH)-CH₂-O-CO-CH₂-, and the like.

When X^{bp2} is an allylene group having 6 to 20 carbon atoms, the allylene group preferably has 6 to 18 carbon atoms, more preferably 6 to 14 carbon atoms, and still more preferably 6 to 10 carbon atoms. Specific examples of the allylene group of X^{bp2} include a phenylene group, a biphenylene group, -C₆H₄-CO-C₆H₄-, a naphthylene group, and the like.

When X^{bp2} is an aralkylene group having 7 to 20 carbon atoms, the aralkylene group preferably has 7 to 18 carbon atoms, more preferably 7 to 14 carbon atoms, and still more preferably 7 to 10 carbon atoms. Specific examples of the aralkylene group of X^{bp2} include -C₃H₆-C₆H₄-, -C₂H₄-C₆H₄-C₆H₄-, -CH₂-C₆H₄-C₆H₄-C₂H₄-, -C₂H₄-OCO-C₆H₄-, and the like.

A^{b} in the general formula (BP—C) represents a water-soluble group. Examples of the water-soluble group including preferable ranges thereof include the same water-soluble groups that may be contained in the (Component a) as described above.

The structure represented by the general formula (BP—C) can be obtained by the polymerization of the monomers represented by (BP-C-M).

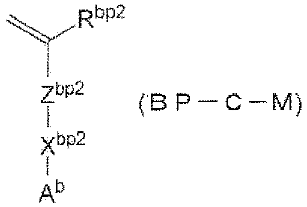

In the formula (BP-C-M), R^{bp2}, Z^{bp2}, X^{bp2}, and A^{b} have the same definitions as in (BP—C), and preferable ranges thereof are also the same.

Preferable examples of the monomers represented by the formula (BP-C-M) include (AP-C-M1) to (AP-C-M27) as described above, but the present invention is not limited thereto.

Examples of other monomers that can be copolymerized with the monomer represented by the formula (BP-M) and the monomer having a structure typically represented by the formula (BP-C-M) include styrene, p-methoxystyrene, methyl (meth)acrylate, ethyl (meth)acrylate, allyl (meth)acrylate, butyl (meth)acrylate, hexyl (meth)acrylate, 2-ethylhexyl (meth)acrylate, octyl (meth)acrylate, decyl(meth)acrylate, stearyl (meth)acrylate, cyclohexyl (meth)acrylate, bornyl (meth)acrylate, isobornyl (meth)acrylate, benzyl (meth)acrylate, 2-ethylhexyl diglycol (meth)acrylate, butoxyethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl(meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl(meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxypropyl (meth)acrylate, butoxydiethylene glycol (meth)acrylate, trifluoroethyl (meth)acrylate, perfluorooctylethyl (meth)acrylate, 2-hydroxy-3-phenoxypropyl (meth)acrylate, (meth)acrylamide, N-butyl (meth)acrylamide, N-p-hydroxyphenyl (meth)acrylamide, and p-sulfamoylphenyl (meth)acrylamide. Among these, examples of such other monomers include alkyl (meth)acrylates having about 1 to 8 carbon atoms, such as methyl (meth)acrylate, an ethyl (meth)acrylate, butyl (meth)acrylate, hexyl (meth)acrylate, 2-ethylhexyl (meth)acrylate, and the like. Further, known monomers in addition to these may be used, if necessary.

When the (Component b) is a copolymer, it preferably has a structure of the following general formula (B-poly).

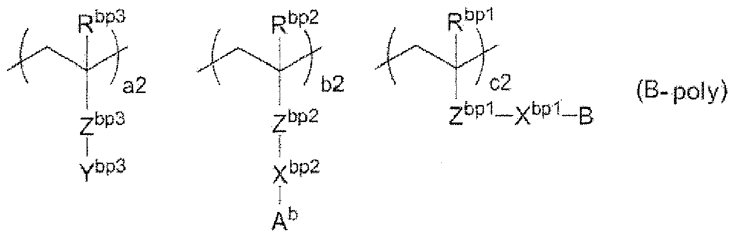

R^{bp3} in the general formula (B-poly) represents a hydrogen atom or a methyl group. Z^{bp3} represents -COO-, -CONR^{bx3}-, or a single bond, and R^{bx3} represents a hydrogen atom or an alkyl group having 1 to 4 carbon atoms. Y^{bp3} represents a hydrogen atom, an alkyl group having 1 to 10 carbon atoms, an aryl group having 6 to 20, or an aralkyl group having 7 to 20 carbon atoms. a2, b2, and c2 represent a copolymerization ratio in the high-molecular-weight compound, and the total sum of a2, b2, and c2 is 100.

R^{bp1}, Z^{bp1}, X^{bp1} and B in the general formula (B-poly) have the same definitions as in the general formula (BP) and preferred ranges thereof are also the same.

R^{bp2}, Z^{bp2}, X^{bp2}, and A^{b} in the general formula (B-poly) have the same definitions as in the general formula (BP-C) and preferred ranges thereof are also the same.

In the general formula (B-poly), R^{bp3} represents a hydrogen atom or a methyl group, and preferably a hydrogen atom.

In the general formula (B-poly), Z^{bp3} represents -COO-, -CONR^{bx3}-, or a single bond, and preferably -COO-. R^{bx3} represents a hydrogen atom or an alkyl group having 1 to 4 carbon atoms. The alkyl group having 1 to 4 carbon atoms may have either a linear structure or a branched structure. Specific examples thereof include a methyl group, an ethyl group, a propyl group, an isopropyl group, a butyl group, an isobutyl group, a sec-butyl group, and a t-butyl group. R^{bx3} represents a hydrogen atom or an alkyl group having 1 to 2 carbon atoms, that is, it is preferably a methyl group or an ethyl group, and particularly preferably a hydrogen atom. Further, R^{bx3} may have a substituent or may not have a substituent, but preferably does not have a substituent.

In the formula (B-poly), Y^{bp3} represents a hydrogen atom, an alkyl group having 1 to 10 carbon atoms, an aryl group having 6 to 20, or an aralkyl group having 7 to 20 carbon atoms. These groups may have a substituent or may not have a substituent. Further, an ether bond, an ester bond, an amide bond, or a urethane bond may be present in these groups.

When Y^{bp3} is an alkyl group having 1 to 10 carbon atoms, the alkyl group may have any one of a linear structure, a branched structure, and a cyclic structure. When Y^{bp3} represents an alkyl group having 1 to 10 carbon atoms, it preferably has 1 to 8 carbon atoms, and more preferably 1 to 6 carbon atoms.

When Y^{bp3} is an alkyl group having 1 to 10 carbon atoms, specific examples thereof include -CH₃, -C₂H₅, -CH(CH₃)₂, -CH₂C(CH₃)₃, -C₆H₁₃, a cyclohexyl group, -C₂H₄-OCO-C₂H₅, -C₂H₄-O-C₅H₁₁, -C₂H₄-CONH-C₂H₅, -C₄H₈-OCONH-C₆H₁₃, and the like.

When Y^{bp3} is an aryl group having 6 to 20, the aryl group preferably has 6 to 20 carbon atoms, preferably 6 to 18 carbon atoms, more preferably 6 to 14 carbon atoms, and most preferably 6 to 10 carbon atoms. Specific examples of the aryl group of Y^{bp3} include a phenyl group, a biphenyl group, -C₆H₄-CO-C₆H₅, a naphthyl group, and the like.

When Y^{bp3} is an aralkyl group having 7 to 20 carbon atoms, the aralkyl group preferably has 7 to 20 carbon atoms, preferably 7 to 18 carbon atoms, more preferably 7 to 14 carbon atoms, and most preferably 7 to 10 carbon atoms. Specific examples of the aralkyl group of Y^{bp3} include -C₃H₆-C₆H₅, -C₂H₄-C₆H₄-C₆H₅, -CH₂-C₆H₄-C₆H₄-C₂H₅, -C₂H₄-OCO-C₆H₅, and the like.

In the formula (B-poly), a2, b2, and c2 represent a copolymerization ratio in the high-molecular-weight compound, and the total sum of a2, b2, and c2 is 100 (the copolymerization ratio is a molar ratio). A range of 30≤a2+b2≤90 and 10≤c2≤70 is preferable, and a range of 40≤a2+b2≤90 and 10≤c2≤60 is more preferable.

In the general formula (B-poly), R^{bp1} represents a methyl group, Z^{bp1} represents -COO-, X^{bp1} represents an alkylene group having 2 to 12 carbon atoms, R^{bp2} represents a hydrogen atom, Z^{bp2} represents -COO-, X^{bp2} represents a single bond, an alkylene group having 2 to 8 carbon atoms or an allylene group having 6 to 10 carbon atoms, A^{b} represents -COOM¹, or -SO₃M¹, R^{bp3} represents a hydrogen atom, Z^{bp3} represents -COO-, Y^{bp3} represents an alkyl group having 1 to 6 carbon atoms or an aryl group having 6 to 10 carbon atoms, and a2, b2, and c2 satisfy 5≤a2+b2≤80 and 20≤c2≤95.

Examples of the (Component b) include the compounds below, but the present invention is not limited thereto.

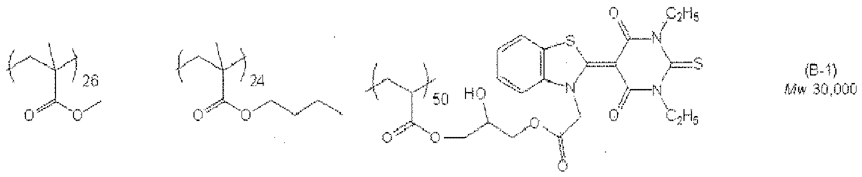

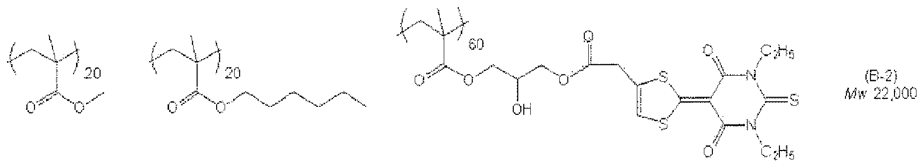

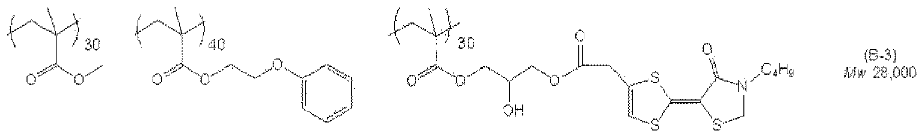

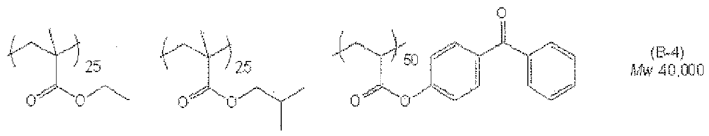

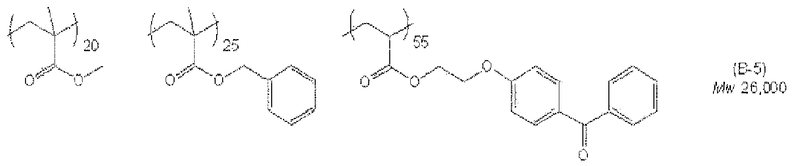

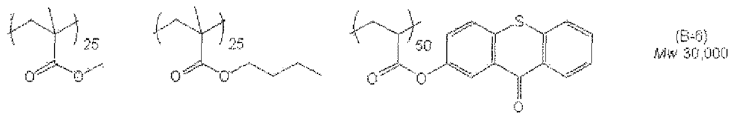

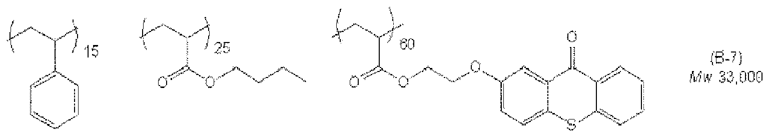

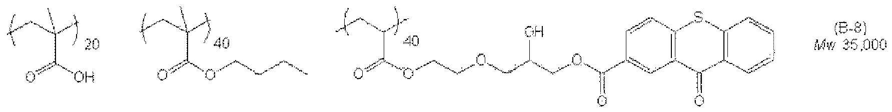

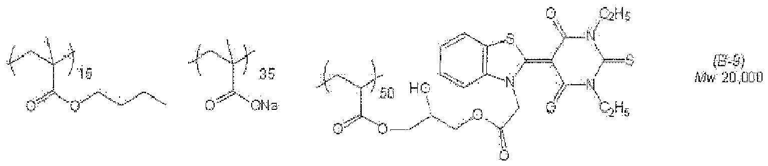

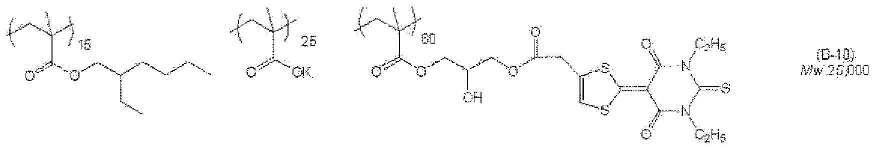

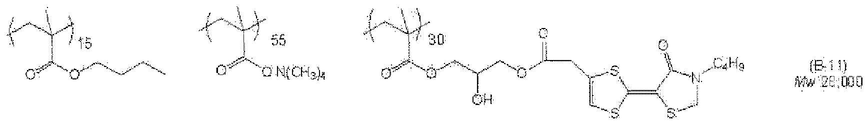

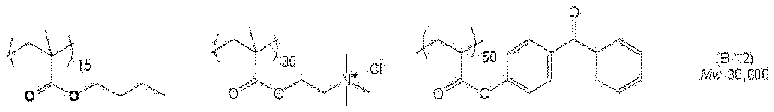

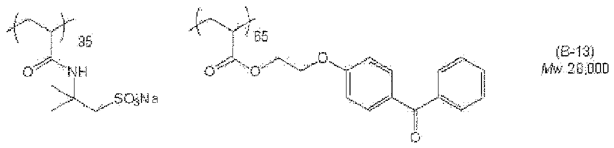

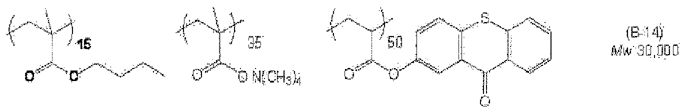

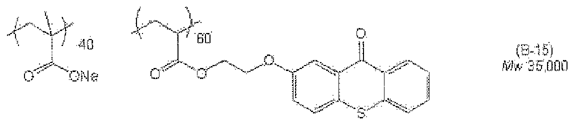

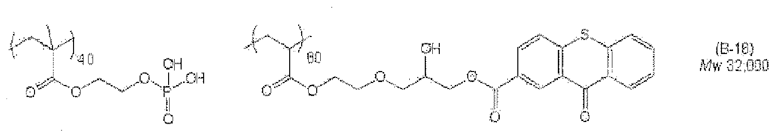

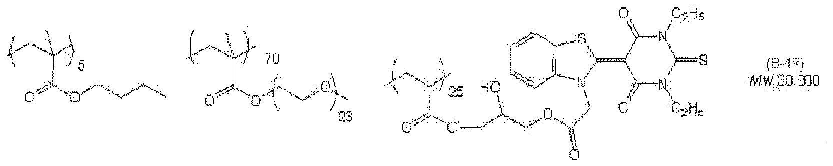

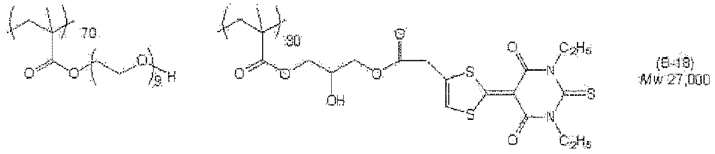

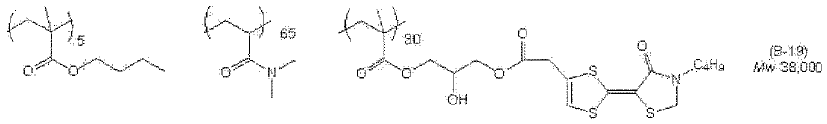

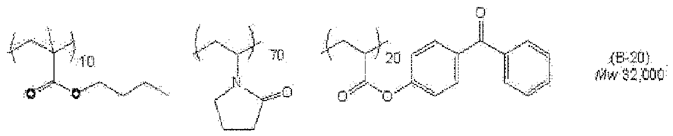

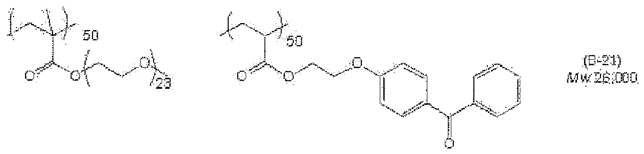

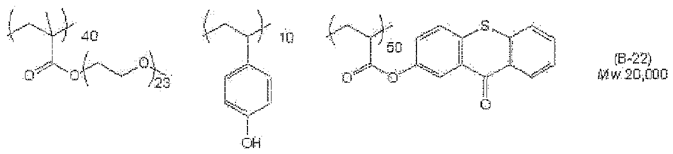

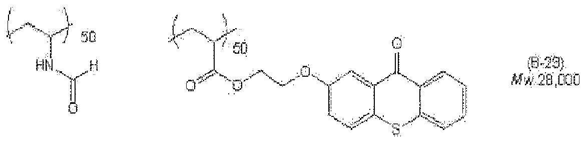

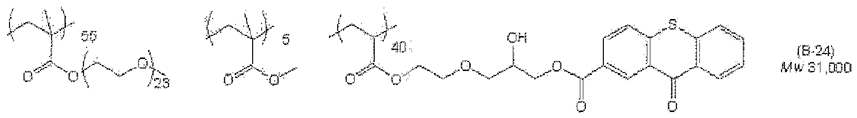

Generally, the (Component b) or a precursor thereof in the present invention can be produced by a known method. For example, acrylates to be precursors of high-molecular-weight compounds such as Exemplary Compounds (BP-M1) to (BP-M10) can be produced by adding the compounds of (B1-1) to (B1-11) to glycidyl (meth)acrylate.

Acrylates to be precursors of the high-molecular-weight compounds such as Exemplary Compounds (BP-M11) to (BP-M42), can be produced with reference to a method described in Eur. Polym. J. Vol. 23, No. 12, pp. 985-987, 1987, JP2010-209183A, WO2010/029017, or the like.

High molecular compounds such as Exemplary Compounds (B-1) to (B-24) can be obtained by polymerizing the precursors above by a known polymerization method, and if necessary, by neutralization with an acidic group with an alkali metal hydroxide or the like, and can be produced by a method according to the polymerization method described in, for example, JP19776-988A (JP-S52-988A), JP1979-154970A (JP-S55-154970A), Langmuir Vol. 18, No. 14, pp. 5414 to 5421 (2002), or the like.

The content of the (Component b) in the ink composition is preferably from 0.1 to 20% by mass, more preferably from 0.1 to 15% by mass, and still more preferably from 0.5 to 10% by mass.

<(Component c) Coloring Material>

The ink composition of the present invention includes (Component c) a coloring material.

The coloring material that can be used in the present invention is not particularly limited, and may be arbitrarily selected from known coloring materials such as a pigment, an oil-soluble dye, a water-soluble dye, a disperse dye, and the like, and used. Among these, the coloring material preferably includes a pigment in view of excellent weather resistance and sufficient color reproductivity.

(Pigment)

The pigment is not particularly limited and may be selected as appropriate according to purposes. Examples of the pigment include known organic pigments, inorganic pigments, and the like, and resin particles dyed with a dye, and commercially available pigment dispersions and surface-treated pigments (for example, dispersions in which a pigment is dispersed in a medium such as water, liquid organic compounds, insoluble resins, and the like, and pigments having a surface treated with a resin, a pigment derivative, or the like). The pigment may be those described in, for example, "Ganryo no Jiten (Dictionary of Pigment)", edited by Seijiro Ito (2000, published by Asakura Publishing Co., Ltd.), "Yuki Ganryo Handbook (Organic Pigment Handbook)", authored by Isao Hashimoto (2006, published by Color Office), "Industrial Organic Pigments", edited by K. Hunger (1992, published by Wiley-VHC), JP2002-12607A, JP2002-188025A, JP2003-26978A, JP2003-342503A, and JP2009-235370A.

The organic pigments and inorganic pigments include, for example, yellow pigments, red pigments, magenta pigments, blue pigments, cyan pigments, green pigments, orange pigments, violet pigments, brown pigments, black pigments, white pigments, and the like.

Preferable examples of yellow pigments include monoazo pigments such as C. I. Pigment Yellow 1, 2, 3, 4, 5, 10, 65, 73, 74, 75, 97, 98, 111, 116, 130, 167, 205, and the like; monoazo lake pigments such as C. I. Pigment Yellow 61, 62, 100, 168, 169, 183, 191, 206, 209, 212, and the like; disazo pigments such as C. I. Pigment Yellow 12, 13, 14, 16, 17, 55, 63, 77, 81, 83, 106, 124, 126, 127, 152, 155, 170, 172, 174, 176, 214, 219, and the like; anthraquinone pigments such as C. I. Pigment Yellow 24, 99, 108, 193, 199, and the like; monoazo pyrazolone pigments such as C. I. Pigment Yellow 60 and the like; condensed azo pigments such as C. I. Pigment Yellow 93, 95, 128, 166, and the like; isoindoline pigments such as C. 1. Pigment Yellow 109, 110, 139, 173, 185, and the like; benzimidazolone pigments such as C. I. Pigment Yellow 120, 151, 154, 175, 180, 181, 194, and the like; azomethine metal complex pigments such as C. I. Pigment Yellow 117, 129, 150, 153, and the like; quinophthalone pigments such as C. I. Pigment Yellow 138 and the like; and quinoxaline pigments such as C. I. Pigment Yellow 213 and the like.

Preferable examples of red or magenta pigments include monoazo lake pigments such as C. I. Pigment Red 193 and the like; disazo pigments such as C. I. Pigment Red 38 and the like; naphthol AS pigments such as C. I. Pigment Red 2, 5, 8, 9, 10, 11, 12, 14, 15, 16, 17, 18, 22, 23, 31, 32, 112, 114, 146, 147, 150, 170, 184, 187, 188, 210, 213, 238, 245, 253, 256, 258, 266, 268, 269, and the like; β-naphthol pigments such as C. I. Pigment Red 3, 4, 6, and the like; β-naphthol lake pigments such as C. I. Pigment Red 49, 53, 68, and the like; naphthol AS lake pigments such as C. I. Pigment Red 237, 239, 247, and the like; pyrazolone pigments such as C. I. Pigment Red 41 and the like; BONA lake pigments such as C. I. Pigment Red 48, 52, 57, 58, 63, 64:1, 200, and the like, xanthene lake pigments such as C. I. Pigment Red 81: 1, 169, 172, and the like; thioindigo pigments such as C. I. Pigment Red 88, 181 and 279; perylene pigments such as C. I. Pigment Red 123, 149, 178, 179, 190, 224, and the like; condensed azo pigments such as C. I. Pigment Red 144, 166, 214, 220, 221, 242, 262, and the like; anthraquinone pigments such as C. I. Pigment Red 168, 177, 182, 226, 263, and the like; anthraquinone lake pigments such as C. I. Pigment Red 83 and the like; benzimidazolone pigments such as C. I. Pigment Red 171, 175, 176, 185, 208, and the like; quinacridone pigments such as C. I. Pigment Red 122, 202 (including a mixture with C. I. Pigment Violet 19), 207, 209, and the like; diketopyrrolopyrrole pigments such as C. I. Pigment Red 254, 255, 264, 270, 272, and the like; and azomethine metal complex pigments such as C. 1. Pigment Red 257, 271, and the like.

Examples of the blue or cyan pigments include naphthol AS pigments such as C. I. Pigment Blue 25, 26, and the like; phthalocyanine pigments such as C. I. Pigment Blue 15, 15:1, 15:2, 15:3, 15:4, 15:6, 16, 17:1, 75, 79, and the like; dye lake pigments such as C. I. Pigment Blue 1, 24:1, 56, 61, 62, and the like; anthraquinone pigments such as C. I. Pigment Blue 60 and the like; indigo pigments such as C. I. Pigment Blue 63 and the like; and dioxazine pigments such as C. I. Pigment Blue 80 and the like.

Examples of the green pigments include dye lake pigments such as C. I. Pigment Green 1, 4, and the like; phthalocyanine pigments such as C. I. Pigment Green 7, 36, and the like; and azomethine pigments such as C. I. Pigment Green 8.

Examples of the orange pigments include monoazo pigments such as C. I. Pigment Orange 1 and the like; β-naphthol pigments such as C. I. Pigment Orange 2, 3, 5, and the like; naphthol AS pigments such as C. I. Pigment Orange 4, 24, 38, 74, and the like; pyrazolone pigments such as C. I. Pigment Orange 13, 34, and the like; benzimidazolone pigments such as C. I. Pigment Orange 36, 60, 62, 64, 72, and the like; disazo pigments such as C. I. Pigment Orange 15, 16, and the like; β-naphthol lake pigments such as C. I. Pigment Orange 17, 46, and the like; naphthalene sulfonic acid lake pigments such as C. I. Pigment Orange 19 and the like; perinone pigments such as C. I. Pigment Orange 43 and the like; quinacridone pigments such as C. I. Pigment Orange 48, 49, and the like; anthraquinone pigments such as C. I. Pigment Orange 51 and the like; isoindolinone pigments such as C. I. Pigment Orange 61 and the like; isoindoline pigments such as C. I. Pigment Orange 66 and the like; azomethine metal complex pigments such as C. I. Pigment Orange 68 and the like; and diketopyrrolopyrrole pigments such as C. I. Pigment Orange 71, 73, 81, and the like.

Examples of the brown pigments include BONA lake pigments such as C. I. Pigment Brown 5 and the like; condensed azo pigments such as C. I. Pigment Brown 23, 41, 42, and the like; and benzimidazolone pigments such as C. I. Pigment Brown 25, 32, and the like.

Examples of the violet pigments include dye lake pigments such as C. I. Pigment Violet 1, 2, 3, 27, and the like; naphthol AS pigments such as C. I. Pigment Violet 13, 17, 25, 50, and the like; anthraquinone lake pigments such as C. I. Pigment Violet 5:1 and the like; quinacridone pigments such as C. I. Pigment Violet 19 and the like; dioxazine pigments such as C. I. Pigment Violet 23, 37, and the like; perylene pigments such as C. I. Pigment Violet 29 and the like; benzimidazolone pigments such as C. I. Pigment Violet 32 and the like; and thioindigo pigments such as C. I. Pigment Violet 38 and the like.

Examples of the black pigments include indazine pigments such as C. I. Pigment Black 1 and the like; carbon black as C. I. Pigment Black 7 and the like; graphite as C. I. Pigment Black 10 and the like; magnetite as C. I. Pigment Black 11 and the like; anthraquinone pigments such as C. I. Pigment Black 20 and the like; and perylene pigments such as C. I. Pigment Black 31, 32, and the like.

Examples of the white pigments include zinc oxide as C. I. Pigment White 4 and the like; titanium oxide as C. I. Pigment White 6 and the like; zinc sulfide as C. I. Pigment White 7 and the like; zirconium oxide (zirconium white) as C. I. Pigment White 12 and the like; calcium carbonate as C. I. Pigment White 18 and the like; aluminum oxide/silicon oxide (kaolin clay) as C. I. Pigment White 19 and the like; barium sulfate as C. I. Pigment White 21, 22, and the like; aluminum hydroxide (alumina white) as C. I. Pigment White 23 and the like; silicon oxide as C. I. Pigment White 27 and the like; and calcium silicate as C. I. Pigment White 28 and the like.

Inorganic particles used in white pigments may be a simple substance, oxides or organic metal compounds of silicon, aluminum, zirconium, titanium or the like, or composite particles with an organic compound.

Among these, titanium oxide is suitably used due to its smaller specific gravity, smaller refractive index, stronger masking or coloring properties compared with other white pigments, and its excellent resistance with respect to acid, alkali and other environments. It is also possible to use titanium oxide and another white pigment (not limited to the aforementioned white pigments) in combination.

It is preferable to select the type of the pigment, the dispersant, or the medium, and adjust the conditions for dispersion or filtration such that the pigment particles have a volume average particle diameter of preferably from 0.005 to 0.5 µm, more preferably from 0.01 to 0.45 µm, and still more preferably from 0.015 to 0.4 µm. When the volume average particle diameter is within the above range, the effect of the present invention can be further enhanced.

In the present invention, the average particle diameter and the particle diameter distribution of the particles are obtained by measuring a volume average particle diameter by a dynamic light scattering method with a commercially available particle size analyzer such as NANOTRAC UPA-EX150 (manufactured by Nikkiso Co., Ltd) and the like.

(Water-Soluble Dye)

Examples of the water-soluble dye that can be used in the present invention include acidic dyes and direct dyes. Acidic dyes and direct dyes have a structure including an acidic group as a solubilizing group. Examples of the acidic group include a sulfonic group and a salt thereof, a carboxylic group and a salt thereof, and a phosphoric group and a salt thereof. The number of acidic groups may be one or more, and different acidic groups may be combined. Examples of the chemical structure of the chromophore included in the water-soluble dye include azo-based, phthalocyanine-based, triphenylmethane-based, xanthene-based, pyrazolone-based, nitro-based, stilbene-based, quinoline-based, methine-based, thiazole-based, quinonimine-based, indigoid-based, rhodamine-based, and anthraquinone-based water-soluble dye, and the like.

Specific examples of the preferable oil-soluble dyes include, although the present invention is not limited thereto, C. I. Acid Yellow 19, C. I. Acid Red 37, C. I. Acid Blue 62, C. I. Acid Orange 10, C. I. Acid Blue 83, C. I. Acid Black 01, C. I. Direct Yellow 44, C. I. Direct Yellow 142, C. I. Direct Yellow 12, C. I. Direct Blue 15, C. I. Direct Blue 25, C. I. Direct Blue 249, C. I. Direct Red 81, C. I. Direct Red 9, C. I. Direct Red 31, C. I. Direct Black 154, C. I. Direct Black 17, and the like.

(Disperse Dye)

Furthermore, a disperse dye may also be used in the present invention.

Specific examples of preferable disperse dyes include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C. I. Disperse Green 6:1 and 9.

The coloring material that can be used in the present invention may be used singly or in combination of two or more kinds thereof.

The content of (Component c) in the ink composition may be selected as appropriate in consideration of physical properties of the coloring material (specific gravity, coloring power, color hue etc.) or the conditions for printing (number of colors of ink compositions used in combination to produce print materials etc.), but is preferably from 0.1 to 30% by mass, more preferably from 0.5 to 20% by mass, and still more preferably from 0.5 to 10% by mass, with respect to the total mass of the ink composition.

(Dispersant)

When a pigment is used as the coloring material, a pigment dispersant may be used, if necessary, in the preparation of the pigment particles, and examples of the pigment dispersant that can be used include activating agents such as higher fatty acid salts, alkyl sulfates, alkylester sulfates, alkylsulfonates, sulfosuccinate, naphthalene sulfonates, alkylphosphates, polyoxyalkylenealkyl ether phosphates, polyoxyalkylenealkylphenyl ethers, polyoxyethylenepolyoxypropylene glycols, glycerin esters, sorbitan esters, polyoxyethylene fatty acid amides, amine oxides, and the like, or block copolymers or random copolymers including two or more monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, and fumaric acid derivatives, and salts thereof.

Furthermore, a self-dispersing pigment may be used in the ink composition of the present invention. The self-dispersing pigment as mentioned in the present invention refers to a pigment that can be dispersed without a dispersant, and particularly preferably a pigment particle having a polar group on the surface.

The pigment particle having a polar group on the surface as mentioned in the present invention refers to a pigment particle, the surface of which is directly modified with an acidic group or to an organic compound containing an organic pigment nucleus, to which an acidic group is bonded directly or via a connector (which will be hereinafter also referred to as a pigment derivative).

Examples of the polar group include a sulfonic acid group, a carboxylic acid group, a phosphoric acid group, a boric acid group and a hydroxyl group, and among these, a sulfonic acid group and a carboxylic acid group are preferable and a sulfonic acid group is more preferable.

Examples of the method for obtaining a pigment particle having a polar group on the surface include a method in which the surface of the pigment particle is oxidized with an appropriate oxidizing agent to introduce a polar group such as a sulfonic acid group or a salt thereof to at least a part of the particle surface, as described in WO97/48769, JP1997-110129A,(JP-H10-110129A), JP1998-246807A (JP-H11-246807A), JP1998-57458A (JP-H11-57458A), JP1998-189739A (JP-H11-189739A), JP1998-323232A (JP-H11-323232A), JP2000-265094A, or the like. More specifically, carbon black is oxidized by concentrated nitric acid or color pigments are oxidized with sulfamic acid, a sulfonated pyridine salt, amidosulfuric acid, or the like in sulfolane or N-methyl-2-pyrrolidone. Oxidation proceeds through such a reaction and water-soluble materials are removed by purification, whereby a pigment dispersion is obtained. A sulfonic acid group which was introduced through oxidation onto the particle surface, may optionally be neutralized with a basic compound.

Other examples of the method for obtaining a pigment particle having a polar group on the surface include a method in which pigment derivatives are allowed to adsorb onto the pigment particle surface through a milling treatment or the like, as described in JP1998-49974A (JP-H11-49974A), JP2000-273383A, JP2000-303014A, or the like, and a method in which a pigment is dissolved together with a pigment derivative in a solvent and then allowed to precipitate in a poor solvent, as described in Japanese Patent Application No. 2000-377068, 2001-1495, and 2001-234966; and the like, and with any of the methods, pigment particles having a polar group on the surface can be easily obtained.

The polar group on the pigment surface may be in the form of being free or a salt, or may form a counter salt. Examples of the counter salt ion include inorganic salts (lithium, sodium, potassium, magnesium, calcium, aluminum, nickel, and ammonium) and organic salts (trimethyl ammonium, diethyl ammonium, pyridinium, triethanolammonium, and the like), of which monovalent counter salts are preferable.

For the method for dispersing the pigment, for example, any of dispersing machines such as a ball mill, a sand mill, an attritor, a roll mill, an agitator, a Henschel mixer, a colloidal mill, an ultrasonic homogenizer, a pearl mill, a wet-type jet mill, a paint shaker, and the like may be used. Further, for the purpose of removing the coarse particles of the pigment dispersion, it is also preferable to use a centrifuge device or a filter.

The preferable addition amount of the dispersant to the ink composition is preferably determined such that the weight ratio (D/P), wherein P is the weight of the pigment in the ink composition and D is the weight of the polymer dispersant in the ink composition, satisfies 0.01≤D/P≤2.0, more preferably 0.03≤D/P≤1.5, and still more preferably 0.05≤D/P≤0.6.

In addition to a dispersant, it is also preferable to add a dispersion aid commonly referred to as a synergist (such as SOLSPERSE 5000, 12000, or 22000 available from the Lubrizol Corporation or EFKA 6745 manufactured by BASF Japan Ltd. Japan K. K., and the like), a surfactant or a defoaming agent, during a dispersion process in order to improve the dispersibility or wettability of the pigment.

In the present invention, when dispersion of the pigment is carried out, the pigment is preferably dispersed by mixing the pigment and a dispersant and then adding the mixture to a polar organic solvent, or by preparing a mixture of a polar organic solvent and a dispersant and then adding and dispersing the pigment to the mixture. The dispersion can be carried out using any of various dispersing machines such as a ball mill, a bead mill, a sand mill, a salt mill, an attritor, a roll mill, an agitator, a Henschel mixer, a colloid mill, a supersonic homogenizer, a pearl mill, a wet-type jet mill, a paint shaker, and the like. Among these, a bead mill dispersing machine is preferable due to its excellent dispersibility,

The beads to be used when dispersion is carried out using a bead mill preferably has a volume-average diameter of 0.01 to 3.0 mm, more preferably 0.05 to 1.5 mm, and still more preferably 0.1 to 1.0 mm, from the viewpoint of obtaining a pigment dispersion having excellent stability.

<Other Additives>

Known additives may be used in combination, in addition to the essential components, the (Component a) to (Component c), in the ink composition of the present invention unless the effect of the present invention is not impaired. The additives that can be used in the ink composition will be described below.

((Component d) Water)

The ink composition of the present invention preferably includes water.

As the water, ion exchanged water, distilled water, or the like is preferably used.

The content of water in the ink composition of in the present invention is preferably from 10 to 97% by mass, more preferably from 30 to 95% by mass, and still more preferably from 35 to 93% by mass.

((Component e) Water-Soluble Organic Solvent)

A water-soluble organic solvent is preferably used in combination according to the purpose of the ink composition of the present invention.

The water-soluble organic solvent as mentioned herein refers to having a water solubility at 25°C of 10% by mass or more.

Examples of the water-soluble organic solvent that can be used in the present invention are as follows.

· alcohols (for example, methanol, ethanol, propanol, isopropanol, butanol, isobutanol, secondary butanol, tertiary butanol, pentanol, hexanol, cyclohexanol, benzylalcohol, and the like),
· polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, 2-methylpropanediol, and the like),
· polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, and the like),
· amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethylenimine, pentamethyldiethylenetriamine, tetramethylpropylenediamine, and the like),
· amides (for example, formamide, N,N-dimethylformamide, N,N-dimethylacetamide, and the like),
· heterocycles (for example, 2-pyrrolidone, N-methyl-2-pyrrolidone, cyclohexylpyrrolidone, 2-oxazolidone, 1,3-dimethyl-2-imidazolidinone, γ-butylollactone, propioncarbonate, and the like),
· sulfoxides (for example, dimethylsulfoxide, and the like),
· sulfones (for example, sulfolane and the like), and
· others (for example, urea, acetonitrile, acetone, and the like)

Preferable examples of the water-soluble organic solvent include polyhydric alcohol ethers and heterocycles, and these are preferably used in combination with each other. As the polyhydric alcohol ethers, so-called glycolethers are preferable, and specifically, tripropylene glycol monomethyl ether, dipropylene glycol monomethyl ether, and dipropylene glycol dimethyl ether are preferable. As the heterocycles, 2-pyrrolidone, γ-butylollactone, and the like are preferable, and 2-pyrrolidone is particularly preferable. In particular, from the viewpoint of improvement of dischargeability, a solvent having a high boiling point can be preferably used, the boiling point of the solvent at normal pressure is 120°C or higher, and more preferably 150°C or higher.

The water-soluble organic solvent may be used singly or in combination of two or more kinds thereof. The addition amount of the water-soluble organic solvent to the ink composition in terms of the total amount is from 1 to 60% by mass, and preferably from 2 to 35% by mass.

In the present invention, in addition to the (Component a), the (Component b), and the (Component c), the (Component d) and the (Component e) are preferably included, and for the content of the respective components in the ink composition, it is preferable that the content of the (Component a) be from 1 to 50% by mass, the content of the (Component b) be from 0.1 to 20% by mass, the content of the (Component c) be from 0.1 to 30% by mass, the content of the (Component d) be from 10 to 97% by mass, and the content of the (Component e) be from 1 to 60% by mass; it is more preferable that the content of the (Component a) be from 2 to 35% by mass, the content of the (Component b) be from 0.1 to 15% by mass, the content of the (Component c) be from 0.5 to 20% by mass, the content of the (Component d) be from 30 to 95% by mass, and the content of the (Component e) be from 2 to 35% by mass; it is particularly preferable that the content of the (Component a) be from 3 to 30% by mass, the content of the (Component b) be from 0.5 to 10% by mass, the content of the (Component c) be from 0.5 to 20% by mass, the content of the (Component d) be from 35 to 93% by mass, and the content of the (Component e) be from 2 to 35% by mass.

When the (Component d) and the (Component e) are included in the present invention, the content ratio (Component d):(Component e) of the (Component d) to the (Component e) (molar ration) is preferably from 1:0.05 to 1:10, more preferably from 1:0.1 to 1:5, still more preferably from 1:0.2 to 1:2, and most preferably from 1:0.2 to 1:1.

(Surfactant)

A surfactant may be added to the ink composition of the present invention. Examples of the surfactant that is preferably used include anionic surfactants such as dialkylsulfosuccinates, alkylnaphthalenesulfonates, fatty acid salts, and the like, nonionic surfactants such as polyoxyethylene alkyl ethers, polyoxyethylene alkyl aryl ethers, acetylene glycols, polyoxyethylene/polyoxypropylene block copolymers, and the like, and cationic surfactants such as alkylamine salts, quaternary ammonium salts, and the like. Particularly, the anionic surfactants and the non-ionic surfactants can be preferably used.

Furthermore, a polymeric surfactant may also be used in the present invention, and the following water-soluble resins may be preferable polymeric surfactants from the viewpoint of discharge stability. That is, examples of the water-soluble resin that is preferably used include a styrene-acrylic acid-alkyl acrylate copolymer, a styrene-acrylic acid copolymer, a styrene-maleic acid copolymer, a styrene-maleic acid-alkyl acrylate copolymer, a styrene-methacrylic acid copolymer, a styrene-methacrylic acid-alkyl acrylate copolymer, a styrene-maleic acid half ester copolymer, a vinylnaphthalene-acrylic acid copolymer, a vinylnaphthalene-maleic acid copolymer, and the like.

(Latex)

A latex other than the (Component a) may be added to the ink composition of the present invention. Examples of the latex that can be used in the present invention include latexes such as a styrene-butadiene copolymer, a polystyrene, an acrylonitrile-butadiene copolymer, an acrylate copolymer, a polyurethane, a silicone-acryl copolymer, an acryl-modified fluorine resin, and the like. The latex may be any one of those in which polymer particles are dispersed using an emulsifier and those in which polymer particles are dispersed without an emulsifier, so-called a soap-free latex. As the emulsifier, a surfactant is used in many cases, but a polymer having a water-soluble group such as a sulfonic acid group, a carboxyl group, and the like (for example, a polymer in which a soluble group is graft-bonded, and a polymer obtained from a monomer having a soluble group and a monomer having an insoluble moiety) is also preferably used.

The volume average particle diameter of the polymer particles in the latex that is used the ink composition of the present invention is preferably 10 nm or more and 300 nm or less, and more preferably 10 nm or more and 100 nm or less. The average particle diameter of the polymer particles in the latex can be determined by means of a commercially available device for measuring a particle diameter, using a light scattering method, an electrophoresis method, or a laser Doppler method.

When a latex is used the ink composition of in the present invention, the addition amount thereof is preferably 0.1% by mass or more and 20% by mass or less, and the addition amount of the solid contents of the latex is particularly preferably 0.5% by mass or more and 10% by mass or less.

(Aqueous Polymer)

An aqueous polymer other than the (Component a) may be added to the ink composition of the present invention.

Preferable examples of the aqueous polymer include naturally occurring polymers, and specific examples thereof include proteins such as glue, gelatin, casein, albumin, and the like; naturally occurring rubbers such as gum arabic, tragacanth, and the like; glucosides such as sabonin and the like; alginic acid and alginic acid derivatives such as propylene glycol alginate, triethanolamine alginate, ammonium alginate, and the like; and cellulose derivatives such as methylcellulose, carboxymethylcellulose, hydroxyethylcellulose, ethylhydroxycellulose, and the like.

Preferable examples other than the aqueous polymers include synthesis polymers, and examples thereof the synthesis polymers include polyvinyl alcohols, polyvinyl pyrrolidones, acryl resin such as a polyacrylic acid, an acrylic acid-acryl nitrile copolymer, a potassium acrylate-acryl nitrile copolymer, a vinyl acetate-acrylate copolymer and acrylic acid-acrylate copolymer, a styrene-acryl resin styrene-acrylic acid copolymer, a styrene-methacrylic acid copolymer, a styrene-methacrylic acid-acrylate copolymer, a styrene-methylstyrene-acrylic acid copolymer, a styrene-methylstyrene-acrylic acid-acrylate copolymer, and the like; a styrene-maleic acid copolymer, a styrene-maleic acid anhydride copolymer, a vinylnaphthalene-acrylic acid copolymer, a vinylnaphthalene-maleic acid copolymer, a vinyl acetate type copolymer and a salt thereof, a such as vinyl acetate-ethylene copolymer, a vinyl acetate-vinyl carboxylate ethylene copolymer, a vinyl acetate-maleic acid ester copolymer, a vinyl acetate-crotonic acid copolymer, a vinyl acetate-acrylic acid copolymer, and the like; and salts thereof. Among these, particularly preferable examples include polyvinylpyrrolidones.

The molecular weight of the water-soluble polymer that can be used in the present invention is preferably 1,000 or more and 200,000 or less, and more preferably 3,000 or more and 20,000 or less.

The addition amount of the water-soluble polymer is preferably 10% by mass or more and 1,000% by mass or less with respect to the dissolved pigment, and more preferably 50% by mass or more and 200% by mass or less.

(Polymerization Initiator)

The ink composition of the present invention may contain a polymerization initiator within a range not impairing the effect of the present invention. The polymerization initiator is preferably water soluble, and the water solubility at 25°C in distilled water is preferably 0.5% by mass or more, more preferably 1% by mass or more, and particularly preferably 3% by mass or more.

Furthermore, a polymerization initiator selected from the group consisting of α-aminoketones and acylphosphine oxides.

Examples of the compound belonging to the α-aminoketones include 2-methyl-1-phenyl-2-morpholinopropan-1-one, 2-methyl-1-[4-(hexyl)phenyl]-2-morpholinopropan-1-one, 2-ethyl-2-dimethyl amino-1-(4-morpholinophenyl)butan-1-one, and the like. Furthermore, the compound is available as a commercial product such as IRGACURE 907, IRGACURE 369, IRGACURE 379, and the like, all manufactured by Nihon Ciba-Geigy K. K., which are also the compound belonging to the α-aminoketones and can be suitably used in the present invention.

As the examples of the compound belonging to the acylphosphine oxide, [2,4,6-trimethylbenzoyl-diphenyl-phosphinoxide] is available with a trade name of Darocur TPO (manufactured by BASF Japan Ltd.), and [bis(2,4,6-trimethylbenzoyl)-phenylphosphine oxide] is available under a trade name of Irgacure 819(manufactured by BASF Japan Ltd.).

With the ink composition of the present invention, the acylphosphine oxides described above are preferable as the polymerization initiator, but other polymerization initiators may be used unless the effect of the present invention is not impaired. Further, acylphosphine oxides may be used in combination therewith. In this case, a water-soluble polymerization initiator is preferably used. The water solubility at 25°C in distilled water is preferably 0.5% by mass or more, more preferably 1% by mass or more, and particularly preferably 3% by mass or more.

Examples of other known polymerization initiators include camphor quinone, benzophenone, benzophenone derivatives, acetophenone, acetophenone derivatives (for example, α-hydroxyycloalkyl phenyl ketones or 2-hydroxy-2-methyl-1-phenylpropanone, and dialkoxyacetophenones), α-hydroxy- or 4-aroyl-1,3-dioxolanes, benzoin alkyl ethers, and benzyl ketals (for example, dimethyl benzyl ketal), phenylglyoxalic esters and derivatives thereof, dimeric phenylglyoxalic esters, diacetyl, peresters (for example, benzophenone tetracarboxylic peresters as described in, for example, EP 1126541), halomethyltriazines (for example, 2-[2-(4-methoxy-phenyl)-vinyl]-4,6-bis-trichloromethyl[1,3,5]triazine, 2-(4-methoxy-phenyl)-4,6-bis-trichloromethyl[1,3,5]triazine, 2-(3,4-dimethoxy-phenyl)-4,6-bis-trichloromethyl[1,3,5]triazine, 2-methyl-4,6-bis-trichloromethyl[1,3,5]triazine), hexaarylbisimidazole/coinitiator systems (for example, ortho-chlorohexaphenyl-bisimidazole combined with 2-mercaptobenzthlazole and ortho-chlorohexaphenyl-bisimidazole combined with boric acid), ferrocenium compounds or titanocenes (for example, bis(cyclopentadienyl)bis(2,6-difluoro-3-pyrryl-phenyl)titanium), and a mixture thereof with an O-acyloxime ester compound as described in, for example, GB 2,339,571. As the coinitiator, a boric acid compound can also be used.

The content of the polymerization initiator in the ink composition of the present invention is preferably in a range from 0 to 10 parts by mass, more preferably from 0 to 5 parts by mass, and still more preferably from 0 to 3 parts by mass, with respect to 100 parts by mass of the ink composition.

(Sensitizing Dye)

In the present invention, it is preferable that a low-molecular-weight sensitizer be not included, but a known sensitizing dye may be used in combination. In this case, from the viewpoints of improvement of curability during irradiation with active energy rays, it is preferable to use a sensitizing dye in combination. As the sensitizing dye, one that is dissolved in distilled water a room temperature in the amount of 0.5% by mass or more, more preferably 1% by mass or more, and particularly preferably 3% by mass or more.

Examples of the known sensitizing dye that can be used in combination include benzophenone, thioxanthone, isopropylthioxanthone, anthraquinone, 3-acylcoumarin derivatives, terphenyl, styryl ketone, 3-(aroylmethylene)thiazoline, camphorquinone, eosin, rhodamine, erythrosine, and the like.

(Polymerizable Compound)

The ink composition of the present invention may include a polymerizable compound. The polymerizable compound is not limited as long as it is a water-soluble compound having at least one ethylenically unsaturated bond that can be radically polymerized in the molecule, and examples thereof include ones in the chemical forms such as a monomer, an oligomer, a polymer, and the like. The specific polymerizable compound may be used singly, or in combination of two or more kinds thereof at any ratio for the purpose of improving desired characteristics. It is preferable to use a combination of two or more kinds in view of controlling the performance such as reactivity, physical properties, and the like.

The polymerizable compound that is used in the present invention is one that is dissolved in distilled water a room temperature in the amount of at least 2% by mass or more, preferably 15% by mass or more, and it is particularly preferable that the polymerizable compound be uniformly mixed with water at any ratio.

Examples of the polymerizable compound include unsaturated carboxylic acids such as acrylic acid, methacrylic acid, itaconic acid, crotonic acid, isocrotonic acid, maleic acid, and the like and salts thereof, anhydrides having ethylenically unsaturated groups, and radically polymerizable compounds such as acrylonitrile, styrene, various additional unsaturated polyesters, unsaturated polyethers, unsaturated polyamides, unsaturated urethane, vinyl ethers, allyl ethers, and the like, and preferably acrylic acid, methacrylic acid, and esters and salts thereof.

The polymerizable compound that can be used in the present invention preferably has a poly(ethyleneoxy) chain, a poly(propyleneoxy) chain, or an ionic group (for example, a carboxyl group, a sulfo group, and the like) in order to impart water solubility. In the case where the compound has a poly(ethyleneoxy) chain or a poly(propyleneoxy) chain, the number of the ethyleneoxy or propyleneoxy units is preferably in a range from 1 to 10, and more preferably in a range from 1 to 5.

In order to improve the sensitivity, the bleeding, and the adhesiveness to a recording medium, it is preferable to use a monoacrylate in combination with a polyfunctional acrylate monomer or a polyfunctional acrylate oligomer having a molecular weight of 400 or more, and preferably 500 or more as a radical polymerizable compound. Particularly, in an ink composition that is used for recording on a flexible recording medium such as a PET film and a PP film, a combined use of the monoacrylate and the polyfunctional acrylate monomer or the polyfunctional acrylate oligomer, selected from the compound group, provides the ink curing film with flexibility and higher adhesiveness, and thus with increased film strength, which is thus preferable.

Moreover, it is a preferable embodiment that a least three kinds of polymerizable compounds of the monofunctional, bifunctional, trifunctional or higher polyfunctional monomers are used in combination from the viewpoint that the sensitivity, the bleeding, and the adhesiveness to a recording medium can be further improved while maintaining the safety.

With the ink according to the present invention, an additive can be appropriately selected from various known additives, such as a viscosity adjusting agent, a surface tension adjusting agent, a specific resistance adjusting agent, a film forming agent, a dispersant, a surfactant, an ultraviolet absorbent, an antioxidant, an anti-discoloring agent, an antifungal agent, an anticorrosive, a solid wetting agent, a silica fine particles, and the like, and used, if necessary, depending on the improvement of discharge stability, the suitability of a print head or an ink cartridge, preservation stability, image preservability, and any other performance, in addition to the respective components described above. Examples thereof include oil droplet fine particles such as fluid paraffin, dioctylphthalate, tricresyl phosphate, silicone oil, and the like; UV absorbers described in JP1981-74193A (JP-S57-74193A), JP1981-87988A (JP-S57-87988A) and JP1986-261476A (JP-S62-261476A); anti-discoloring agents described in JP1981-74192A (JP-S57-74192A), JP1981-87989A (JP-S57-87989A), JP1984-72785A (JP-S60-72785A), JP1985-146591A (JP-S61-146591A), JP1989-95091A, JP1991-13376A, or the like; fluorescent brightening agents described in JP1983-42993A (JP-S59-42993A), JP1983-52689A (JP-S59-52689A), JP1986-280069A (JP-S62-280069A), JP1985-242871A (JP-S61-242871A), JP1991-219266A (JP-H04-219266A), or the like; and pH adjusting agents such as sulfuric acid, phosphoric acid, citric acid, sodium hydroxide, potassium hydroxide, potassium carbonate, and the like.

<Method for Preparing Ink Composition>

The method of preparing the ink composition according to the present invention is not particularly limited. For example, the ink composition can be prepared by stirring, mixing, and dispersing the components in a container-driving medium mill such as a ball mill, a centrifugal mill, a planetary ball mill, and the like a high-speed rotation mill such as a sand mill and the like, a medium mixing mill such as a mixing vessel-type mill and the like, or a simple dispersing apparatus such as a disper and the like. The order of adding each component can be arbitrarily determined. Further, in order to micronize the dispersed particles more finely, the mixing may be performed using a dispersing machine such as a bead mill, a high-pressure jet mill, and the like. Further, depending on the type of the pigment or the polymer dispersant, an anionic resin may be added at the time of performing premixing prior to dispersing the pigment.

The surface tension at 25°C of the ink composition of the present invention is preferably from 20 to 40 mN/m. The surface tension is measured under the condition of 25°C with an automatic surface tensiometer CBVP-Z (manufactured by Kyowa Interface Science Co., Ltd.). The viscosity of the ink composition is preferably from 1 to 40 mPa·s, and more preferably from 3 to 30 mPa·s. The viscosity of the ink composition is measured under the condition of 25°C with a viscometer TV-22 (manufactured by Toki Sangyo Co., Ltd.).

A second embodiment will be described below.

[Second Embodiment]

A second embodiment of the present invention relates to an ink composition including:
(Component a') a compound having a structure represented by the structural formula (A), and at least any one of a residue formed by removing one hydrogen atom from a compound represented by the structural formula (B1), and the general formula residue formed by removing one hydrogen atom from a compound represented by the structural formula (B2) in one molecule, and
(Component c) a coloring material.

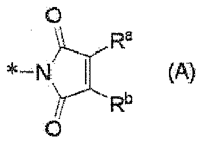

In the structural formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bonding position.

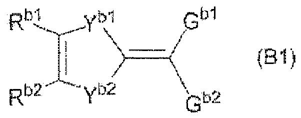

In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.

Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-.

G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfonyl group, an arylsulfonyl group, or a fluoroalkylsulfonyl group, and G^{b1} and G^{b2} may be bonded to each other to form a ring. However, when G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- in the ring.

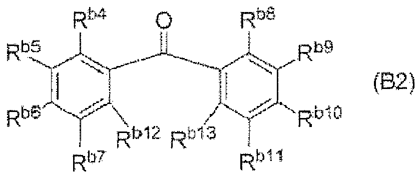

In the general formula (B2), R^{b4}, R^{b5}, R^{b6}, R^{b7}, R^{b8}, R^{b9}, R^{b10}, R^{b11}, R^{b12}, and R^{b13} each independently represent a hydrogen atom, a halogen atom, an alkyl group, a hydroxyl group, a cyano group, a nitro group, an amino group, an alkylsulfanyl group, an alkylamino group, an alkoxy group, an alkoxycarbonyl group, an acyloxy group, an acyl group, a carboxyl group, or a sulfo group, and at least two selected from R^{b4}, R^{b5}, R^{b6}, R^{b7}, R^{b8}, R^{b9}, R^{b10}, R^{b11}, R^{b12}, and R^{b13} may form a ring. However, -S- may be interposed in the ring.

The structural formula (A) in the (Component a') including a preferable range thereof are the same as the structural formula (A) in the (Component a).

The structural formula (B1) in the (Component a') including a preferable range thereof are the same as the structural formula (B1) in the (Component a).

The structural formula (B2) in the (Component a') including a preferable range thereof are the same as the structural formulae (B2) in the (Component a).

When the (Component a') is a copolymer, it preferably has a structure of the following general formula (A'-poly).

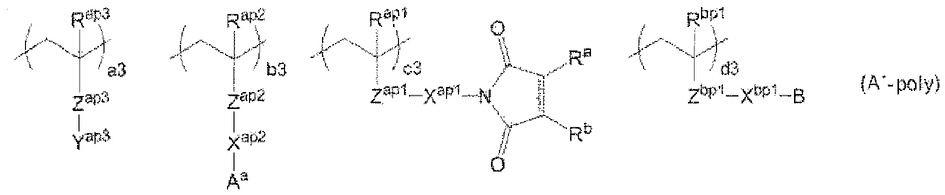

R^{ap1} in the general formula (A'-poly) represents a hydrogen atom or a methyl group, Z^{ap1} represents a single bond, -COO-, or -CONR^{ax1}-, R^{ax1} represents a hydrogen atom or an alkyl group having 1 to 4 carbon atoms, X^{ap1} represents a divalent organic group, R^{a} and R^{b} each independently represent an alkyl group having 1 to 4 carbon atoms, and R^{a} and R^{b} may be bonded to each other to form 4- to 6-membered ring.

R^{ap2} represents a hydrogen atom or a methyl group, Z^{ap2} represents -COO-, -CONR^{ax2-}or a single bond, R^{ax2} represents a hydrogen atom or an alkyl group having 1 to 4 carbon atoms, X^{ap2} represents a single bond or a divalent organic group, and A^{a} represents a water-soluble group.

R^{ap3} represents a hydrogen atom or a methyl group, Z^{ap3} represents -COO-, -CONR^{ax3}-, or a single bond, R^{ax3} represents a hydrogen atom or an alkyl group having 1 to 4 carbon atoms, and Y^{ap3} represents a hydrogen atom, an alkyl group having 1 to 10 carbon atoms, an aryl group having 6 to 20, or an aralkyl group having 7 to 20 carbon atoms.

R^{bp1} represents a hydrogen atom or a methyl group, Z^{bp1} represents a single bond, -COO-, or -CONR^{bx1}-, R^{bx1} represents a hydrogen atom or an alkyl group having 1 to 4 carbon atoms, X^{bp1} represents a single bond or a divalent organic group, and B represents any one of a residue formed by removing one hydrogen atom from a compound represented by the general formula (B1) and a residue formed by removing one hydrogen atom from a compound represented by the general formula (B2).

a3, b3, c3, and d3 represent a copolymerization ratio in the high-molecular-weight compound, and the total sum of a3, b3, c3, and d3 is 100.

R^{a}, R^{b}, R^{ap1}, Z^{ap1}, and X^{ap1} in the general formula (A'-poly) including preferable ranges thereof have the same definitions as in the general formula (AP), respectively.

R^{ap2}, Z^{ap2}, X^{ap2}, and A^{a} in the general formula (A'-poly) including preferable ranges thereof have the same definitions as in the general formula (AP-C), respectively.

R^{ap3}, Z^{ap3}, and Y^{ap3} in the general formula (A'-poly) including preferable ranges thereof have the same definitions as in the general formula (A-poly), respectively.

R^{bp1}, Z^{bp1}, X^{bp1}, and B in the general formula (A'-poly) including preferable ranges thereof have the same definitions as in the general formula (bP), respectively.

In the formula (A'-poly), a3, b3, c3, and d3 represent a copolymerization ratio in the high-molecular-weight compound, and the total sum of a3, b3, c3, and d3 is 100 (the copolymerization ratio is a molar ratio).

In the general formula (A'-poly), it is preferable that R^{a} and R^{b} each independently an alkyl group having 1 to 2 carbon atoms, R^{ap1} represent a methyl group, Z^{ap1} represent -COO-, X^{ap1} represent an alkylene group having 2 to 12 carbon atoms, R^{ap2} represent a hydrogen atom, Z^{ap2} represent -COO-, X^{ap2} represent a single bond, an alkylene group having 2 to 8 carbon atoms, or an allylene group having 6 to 10 carbon atoms, A^{a} represent -COOM¹ or -SO₃M¹, R^{ap3} represent a hydrogen atom, Z^{ap3} represent -COO-, Y^{ap3} represent an alkyl group having 1 to 6 carbon atoms or an aryl group having 6 to 10 carbon atoms, and a3, b3, c3 and d3 be values, each satisfying a condition of 30≤a3+b3≤90 and 10≤c3+d3≤70. c3:d3 is preferably from 1:0.1 to 1:1.

Examples of the (Component a') include the following compounds, but the present invention is not limited thereto. The (Component a') can be synthesized by the same method as for the (Component a) or the (Component b).

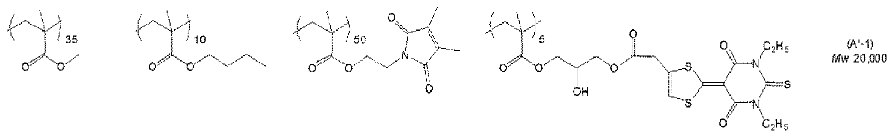

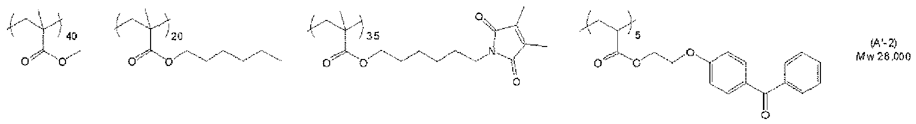

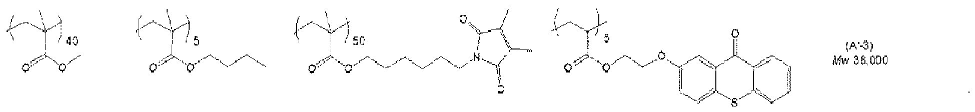

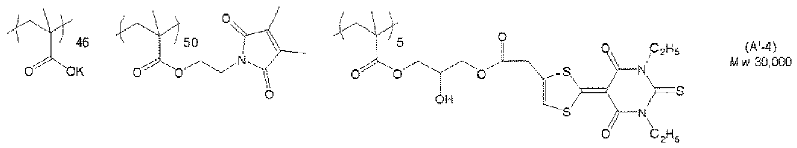

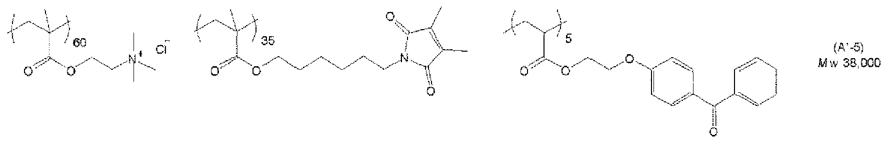

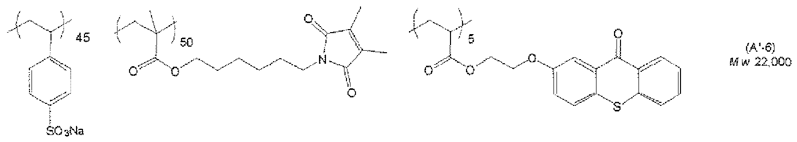

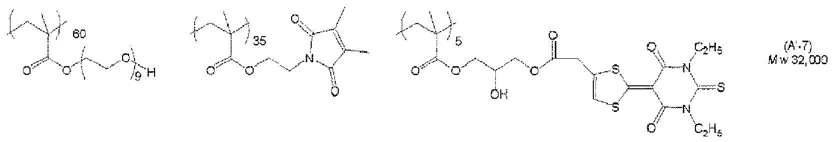

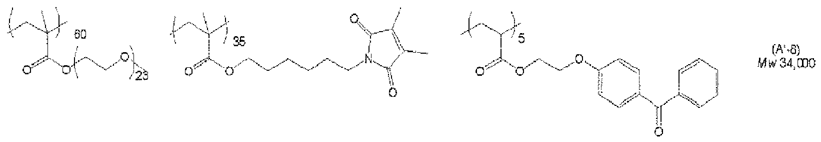

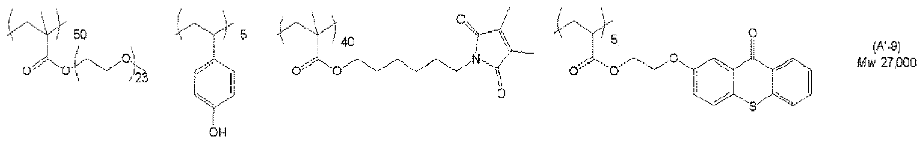

<<Image Forming Method>>

The image forming method of the present invention includes an ink applying step in which the ink composition is applied onto a recording medium, and an irradiation step in which the ink composition is irradiated with active energy rays.

By performing these steps, an image is formed from the ink composition fixed on the recording medium.

<Ink Applying Step>

The ink applying step in the image forming method of the present invention will be explained. In the present invention, the ink applying step is not particularly limited as long as it is a step in which the ink composition is applied onto a recording medium.

The inkjet recording apparatus used in the image forming of the present invention is not particularly limited, and any known inkjet recording apparatus that can achieve a desired resolution can be arbitrarily selected and used. In other words, the ink composition can be discharged onto a recording medium by the image forming according to the present invention, using any known inkjet recording apparatuses including commercial products.

Examples of the inkjet recording apparatus that can be used in the present invention include an apparatus having an ink supply system, a temperature sensor, and a heating unit.

The ink supply system has, for example, a main tank that contains the ink composition according to the present invention, supply piping, an ink supply tank positioned immediately in front of an inkjet head, a filter, and a piezo-type inkjet head. The piezo-type inkjet head can be driven to discharge multi-size dots of from preferably 1 to 100 pl, and more preferably from 8 to 30 pl, at a resolution of preferably from 320×320 to 4,000×4,000 dpi, more preferably from 400×400 to 1,600×1,600 dpi, and still more preferably from 720×720 dpi. Further, the "dpi" in the present invention refers to the number of dots per 2.54 cm.

Since the temperature of the ink composition of the present invention is preferably maintained constant when it is discharged, the inkjet recording apparatus preferably includes a stabilizing unit that maintains the temperature of the ink composition stable. The portion at which the temperature needs to be constant includes the entire portion of the piping system and the members ranging from the ink tank (when an intermediate tank is provided, from the intermediate tank) to a nozzle discharge surface. In other words, insulating or heating can be performed in a range from an ink supply tank to an inkjet head portion.

The method of controlling the temperature is not particularly limited. However, for example, it is preferable to control heating by providing plural temperature sensors at each piping portion according to the flow rate of ink composition or the environmental temperature. The temperature sensors are preferably provided in the vicinity of the ink supply tank and nozzles of the inkjet head. The head unit to be heated is preferably thermally insulated so as to avoid being affected by the temperature outside the apparatus. Further, in order to shorten the time for launching the printer that is necessary for heating, or to reduce the loss of thermal energy, it is preferable to reduce the thermal capacity of the whole heating unit, in addition to insulating the other members.

The ink composition is discharged using the inkjet recording apparatus as described above after heating the ink composition to a range of preferably from 25 to 80°C, and more preferably from 25 to 50°C, and lowering the viscosity of the ink composition to a range of preferably from 3 to 15 mPa·s, more preferably from 3 to 13 mPa·s. In particular, an ink composition having a viscosity at 25°C of 50 mPa·s or less is preferably used as the ink composition according to the present invention, since favorable discharge can be carried out. According to this method, high discharge stability can be achieved.

The change in viscosity of the ink composition may greatly affect the change in the size of droplets or the change in the rate of discharging the droplets, whereby deterioration of image quality may be caused. Accordingly, it is necessary to maintain the temperature of the ink composition during discharging as constant as possible. Therefore, in the present invention, it is appropriate to control the temperature of the ink composition to a range of preferably ±5°C with respect to the set temperature, more preferably ±2°C with respect to the set temperature, and still more preferably ±1°C with respect to the set temperature.

In the present invention, the recording medium is not particularly limited and any known recording media may be used as a support or a recording material. Examples of the recording medium include paper, paper coated with a plastic (for example, polyethylene, polypropylene, polystyrene, and the like), metal plates (for example, aluminum, zinc, copper, and the like), plastic films (for example, polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, and the like), and paper or plastic films on which metal as mentioned above is laminated or evaporated. Among these, the ink composition according to the present invention, which exhibits excellent adhesiveness, is suitably used with a non-absorbing recording medium. From the viewpoint of adhesiveness, a plastic support of polyvinyl chloride, polyethylene terephthalate, polyethylene, or the like is preferable, a polyvinyl chloride support is more preferable, and a sheet or film of polyvinyl chloride resin is still more preferable.

<Irradiation Step>

The irradiation step in the image forming of the present invention will be described below. The irradiation step in the present invention is not particularly limited as long as it is a step in which the ink composition that has been applied onto the recording medium is irradiated with active energy rays. By irradiating the ink composition with active energy rays, crosslinking reaction of a compound in the ink composition is promoted and an image is fixed, thereby making it possible to improve solvent resistance or the like of a printed material. By carrying out the irradiation step, the crosslinking reaction of the (Component a) is caused and a crosslinked structure represented by the following general formula (5) is formed in the ink composition.

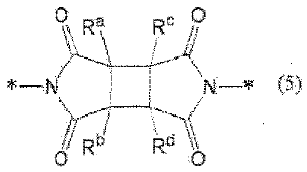

In the formula (5), R^{a}, R^{b}, R^{c}, and R^{d} each independently represent an alkyl group having 1 to 4 carbon atoms, and R^{a} and R^{b} may be bonded to each other to form an alicyclic structure of a 4- to 6-membered ring. R^{c} and R^{d} may be bonded to each other to form an alicyclic structure of a 4- to 6-membered ring. R^{a} and R^{b} including preferable ranges thereof are the same as those described for the formula (A). R^{c} including a preferable range thereof is the same as R^{a} described in the formula (A). R^{d} including a preferable range thereof is the same as R^{d} described in the formula (A). * represents a bonding position.

Examples of the active energy ray that can be used in the irradiation step include ultraviolet rays (which will be hereinafter also referred to as ultraviolet light), visible rays, electron beams, and the like, and UV light is preferably used.

Further, although it depends on the absorption properties of a sensitizing dye that is optionally used, the peak wavelength of UV light is preferably from 200 to 405 nm, more preferably from 250 to 405 nm, and still more preferably from 250 to 390 nm.

The output of UV light is preferably 2,000 mJ/cm² or less, more preferably from 10 mJ/cm² to 2,000 mJ/cm², still more preferably from 20 mJ/cm² to 1,000 mJ/cm², and particularly preferably from 50 mJ/cm² to 800 mJ/cm².

Further, it is appropriate to carry out UV light exposure with an illuminance at an exposed side of, for example, from 10 mW/cm² to 2,000 mW/cm², and preferably from 20 mW/cm² to 1,000 mW/cm².

As a UV light source, mercury lamps, gas/solid lasers or the like are mainly used, and mercury lamps and metal halide lamps are widely known. Further, a shift to GaN-based semiconductor ultraviolet light emitting devices is very effective in view of industry or environment, and use of LED (UV-LED) and LD (UV-LD) as a UV light source is expected due to their small size, long life, high efficiency, and low cost.

The ink composition according to the present invention is suitably exposed to UV light as described above for a period of, for example, from 0.01 seconds to 120 seconds, preferably from 0.1 seconds to 90 seconds.

The conditions and a basic method for carrying out exposure are described in JP1984-132767A (JP-S60-132767A). Specifically, exposure is preferably carried out by a method in which a light source is provided at both sides of a head unit including a unit from which ink is discharged and the head unit and the light source are scanned in a shuttle method; and a method in which the scanning is carried out by a different light source that is not driven. The exposure with actinic radiation rays is carried out for a certain period of time (such as from 0.01 seconds to 60 seconds, preferably from 0.01 seconds to 30 seconds, and more preferably from 0.01 seconds to 15 seconds) after depositing and thermally fixing the ink.

<Heating and Drying Step>

The ink composition that has been discharged onto a recording medium is preferably fixed by evaporating water and the water-soluble organic solvent, which are used in combination, if necessary, by a heating unit. In the following, a step of fixing the discharged ink composition of the present invention by heating is described.

The heating unit is not particularly limited as long as it can dry water and the water-soluble organic solvent, which are used in combination, if necessary, and examples thereof include a heat drum, a hot air blower, an infrared lamp, a heat oven, a hot plate, and the like.

The temperature for heating is not particularly limited as long as water and the water-soluble organic solvent, which are used in combination, if necessary, in the ink composition can be evaporated and a film of the (Component a), the (Component b), the (Component a'), and a polymer binder that is added, if necessary, can be formed. However, these effects can be achieved when the temperature is 40°C or higher, preferably from approximately 40°C to 150°C, and more preferably from approximately 40°C to 80°C.

In addition, the time for drying/heating is not particularly limited as long as water and the water-soluble organic solvent, which are used in combination, if necessary, in the ink composition can be dried and a film of a resin agent can be formed, and the time can be appropriately adjusted in consideration of the compositions of the ink composition used or a printing speed.

<Printed Material>

The printed material of the present invention is recorded by the image forming method of the present invention. The printed material of the present invention is a printed material having excellent solvent resistance of the recorded image and adhesiveness to a recording medium since it is recorded according to the image forming method of the present invention.

[Examples]

Hereinbelow, the present invention will be described in more detail with reference to Examples. However, the present invention is not intended to be limited to the Examples. In addition, unless specifically mentioned otherwise, the term "part" and "%" are based on mass.

The pigment dispersions and the components of the ink composition that are used in Examples and Comparative Examples are as follows.

<Preparation of Coloring Material Dispersion A>

35 parts of IRGALITE BLUE GLVO (cyan pigment, C. I. Pigment Blue 15:3, manufactured by BASF Japan Ltd.), 12.5 parts of AJISPER PB821 (polyester-based polymer dispersant, manufactured by Ajinomoto Fine-Techno Co., Inc.), and 52.5 parts of propylene carbonate (4-methyl-2-oxo-1,3-dioxolane, manufactured by Wako Pure Chemical Industries, Ltd.) were mixed and stirred with a stirrer until the mixture became uniform. The obtained pre-dispersion was dispersed again using a 0.1 mm zirconia beads with a vertical bead mill (manufactured by IMEX Co., Ltd.) for 3 to 6 hours to prepare a coloring material dispersion A. The volume average particle diameter of the coloring materials in the coloring material dispersion A was determined by measuring the volume average particle diameter by a dynamic light scattering method using a NANOTRACK particle size distribution measuring apparatus UPA-EX150 (manufactured by Nikkiso Co., Ltd.), and was found to be 190 nm.

<Preparation of Coloring Material Dispersion B>

Into a 500-ml three-neck flask equipped with a stirrer and a condenser, 44 g of methyl ethyl ketone was added and heated at 72°C under a nitrogen atmosphere, and a solution in which 0.43 g of dimethyl-2,2'-azobisisobutyrate, 30 g of benzyl methacrylate, 5 g of methacrylic acid, and 15 g of methyl methacrylate had been dissolved in 25 g of methyl ethyl ketone was added dropwise thereto over 3 hours. After the completion of addition dropwise, the reaction was carried out for an additional 1 hour, and then a solution in which 0.21 g of dimethyl-2,2'-azobisisobutyrate had been dissolved in 1 g of methyl ethyl ketone was added thereto. The mixture was warmed to 78°C and heated for 4 hours. The obtained reaction solution was reprecipitated twice in an excess amount of hexane, and the precipitated resin was dried to obtain 43 g of a polymer dispersant D-1.

The composition of the obtained polymer dispersant D-1 was confirmed by ¹H-NMR, and the weight average molecular weight (Mw) as determined by means of GPC was 42,000. Further, the acid value as determined by the method described in JIS standard (JIS K 0070:1992) was 65.4 mgKOH/g.

10 parts of Pigment·Blue 15:3 (Phthalocyanine Blue A220, manufactured by Dainichiseika Color & Chemicals Mfg. Co., Ltd.), 5 parts of the polymer dispersant D-1, 42 parts of methyl ethyl ketone, 5.5 parts of a 1 mol/L aqueous NaOH solution, and 87.2 parts of ion exchange water were mixed, and dispersed with a bead mill using 0.1 mmφ zirconia beads for 2 to 6 hours. Methyl ethyl ketone was removed from the obtained dispersion at 55°C under reduced pressure, and water was further removed to obtain a coloring material dispersion B (colored particle) having a pigment concentration of 10.2% by mass.

<Synthesis of (Component a)>

The (Component a) was synthesized with reference to JP1976-988A (JP-S52-988A). The compounds used in Example are shown below.

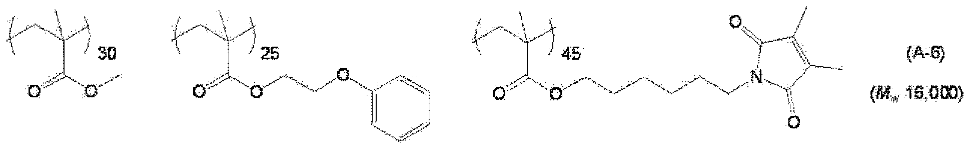

<Synthesis of (Component b)>

The (Component b) was synthesized with reference to JP1976-988A (JP-S52-988A). The compounds used in Example are shown below.

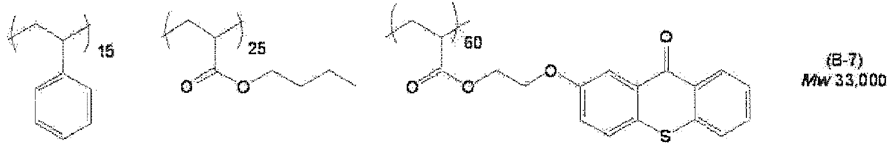

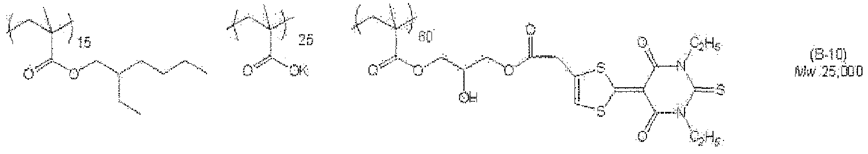

<Synthesis of (Component a')>

The (Component a') was synthesized with reference to JP1976-988A (JP-S52-988A). The compounds used in Example are shown below.

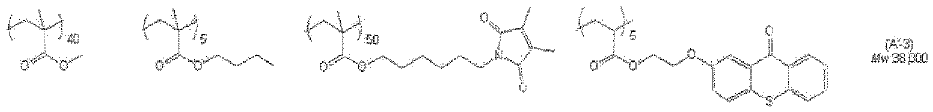

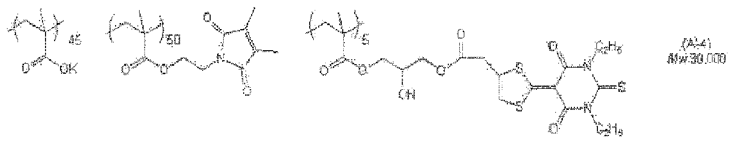

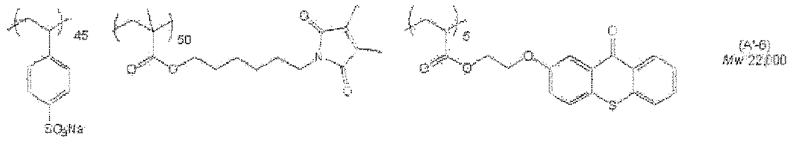

<(Component e) Water-Soluble Organic Solvent>

The water-soluble organic solvents used in Examples are shown below.
· 2-Pyrrolidone (manufactured by Sigma-Aldrich Japan K. K.)
· 2-Methylpropanediol (manufactured by Sigma-Aldrich Japan K. K.)
· Dipropylene glycol monomethyl ether (manufactured by Sigma-Aldrich Japan K. K.)
· Propylene carbonate manufactured by Wako Pure Chemical Industries, Ltd.)

<Polymer Binder>

The polymer binder used in Comparative Examples is shown below. ELVACITE 2013 (manufactured by Lucite International, Inc.)

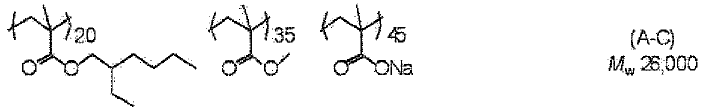

<Exemplary Compound of JP2007-119449A>

The Exemplary Compounds of JP2007-119449A that are used in Comparative Examples are shown below. These were synthesized by the method described in JP2007-119449A or the like.

### Exemplary Compound 30 of JP2007-119449A

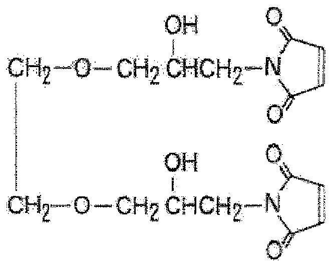

### Exemplary Compound 26 of JP2007-119449A

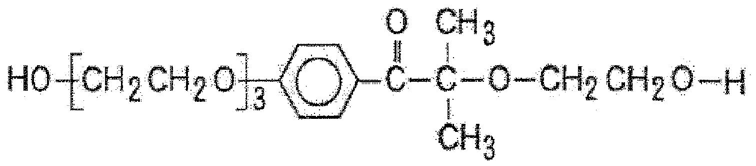

<Polymerization Initiator>

The polymerization initiator that is used in Examples is shown below.
· IRGACURE 2959 (manufactured by BASF Japan Ltd.)

Furthermore, among the compounds that are used in Examples and Comparative Examples, the compound for which the production source is not described was synthesized by a known method or application of the known method.

(Examples 1 to 8 and Comparative Examples 1 to 3)

<Preparation of Ink Composition>

The ink compositions of Examples 1 to 8 and Comparative Examples 1 to 3, having the compositions shown in Tables below, were each prepared by stirring with a mixer (L4R, manufactured by Silverson Machines, Inc.) at 2,500 rotations per minute for 10 minutes. The obtained ink compositions were packed in a plastic disposable syringe, and filtered with a filter (Millex-SV, diameter 25 mm, manufactured by Millipore Corporation) having a pore size of 5 µm made of polyvinylidene fluoride (PVDF), thereby obtaining finished inks. Further, each numerical value in the blending amounts in Tables below is in parts by mass.

Furthermore, the viscosity of the ink composition was measured using a VISCOMATE VM-10A-L (manufactured by CMC Materials Co., Ltd.) under the condition of 25°C, and the viscosities in Examples 1 to 8 were from 8 to 17 mPa·s.

<Inkjet Image Recording Method>

Subsequently, a commercially available inkjet printer (SP-300V, manufactured by Roland DG Corporation) was prepared as an inkjet recording apparatus.

Each of the obtained ink compositions was charged in the inkjet printer and an image was formed on a polyvinyl chloride sheet (AVERY 400 GLOSS WHITE PERMANENT, manufactured by Avery Dennison Japan K. K.) to obtain a printed material for the following evaluation.

In addition, a light emitting diode (UV-LED, NC4U134 manufactured by Nichia Corporation) was used to irradiate ultraviolet light. The LED has an output of the ultraviolet light at a wavelength of 365 nm from one chip, and by controlling the amount of the electric current (by focusing light using a lens) to adjust an illuminance to 1,000 mW/cm² on the surface, the exposure time (sec) was adjusted such that the exposure energy became 700 (mJ/cm²).

Using each of the obtained ink compositions and the printed materials, the following evaluation was carried out. The evaluation results are shown in Tables below.

<Evaluation of Adhesiveness (Cross Hatch Test)>

The cross hatch test (JIS K 5600-5-6) was carried out as a method for evaluating the adhesiveness to a recording medium. A solid image having an average thickness of 12 µm in the image portion was formed according to the inkjet image forming method.

Thereafter, a cross hatch test of each of the printed materials was carried out. The evaluation was based on six grades from 0 to 5 according to JIS K 5600-5-6. Herein, Grade 0 refers to a result in which cut edges are completely smooth and no exfoliation of grids occurs. Further, the levels up to Grade 3 have no problem in practical use.

<Evaluation of Water Resistance>

After forming a solid image having an average thickness of 12 µm according to the image recording method, the surface of the printed material was scraped with a cotton swab soaked with distilled water, and evaluated according to the following criteria.
A: Image did not change even after 10 scrapes.
B: Image density decreased after 5 to 9 scrapes.
C: Image density decreased after 2 to 4 scrapes.
D: Image density significantly decreased even after a single scrape.

<Evaluation of Solvent Resistance>

After forming a solid image having an average thickness of 12 µm according to the image recording method, the surface of the printed material was scraped with a cotton swab soaked with a solvent mixture of isopropyl alcohol and 2-butanone (1/1 (volume)), and evaluated according to the following criteria.
A: Image did not change even after 10 scrapes.
B: Image density decreased after 5 to 9 scrapes.
C: Image density decreased after 2 to 4 scrapes.
D: Image density significantly decreased even after a single scrape.

<Evaluation of Dischargeability>

After discharging the ink in a standard printing mode using the inkjet printer for 30 minutes and stopping the discharge, after 5 minutes, an image (5 cm×5 cm) was obtained by recording a solid image and a fine line on a recording medium (AVERY 400 GLOSS WHITE PERMANENT, manufactured by Avery Dennison Japan K. K.), and observed. The observed image was evaluated with the naked eye in accordance with the following criteria.
A: A favorable image was obtained while lack of dots due to occurrence of white deletion or the like was not observed.
B: A slight amount of lack of dots due to occurrence of white deletion or the like was observed, but it was intolerable in practical use.
C: Lack of dots due to occurrence of white deletion or the like was observed, and it was intolerable for practical use.
D: Discharge of ink could not be normally performed.

**[Table 1]**

| | | Ex 1 | Ex. 2 | Ex. 3 | Ex. 4 | Ex. 5 | Ex. 6 | Ex. 7 | Ex. 8 | Comp Ex 1 | Comp. Ex. 2 | Comp. Ex 3 |
|---|---|---|---|---|---|---|---|---|---|---|---|---|
| Component a | A-6 | 15 | - | - | 10 | 10 | - | - | - | - | - | - |
| Component b | B-7 | 1 | - | - | - | - | - | - | - | - | - | - |
| | B-10 | - | - | - | 1 | 11 | - | - | - | - | - | - |
| Component a | A'-3 | - | 16 | 25 | - | - | - | - | - | - | - | - |
| | A'-4 | - | - | - | - | - | 11 | - | 25 | - | - | - |
| | A'-6 | - | - | - | - | - | - | 11 | - | - | - | - |
| Component c | Coloring material dispersion A | 11.4 | 11.4 | 11.4 | - | - | - | - | - | 11.4 | - | - |
| | Coloring material dispersion B | - | - | - | 12 | 12 | 12 | 12 | 12 | - | 12 | 12 |
| Component d | Distilled water | - | - | - | 51 | 46 | 51 | 51 | 41 | - | 51 | 51 |
| Component e Water-soluble organic solvent | 2-Pyrrolidone | - | - | - | 17 | 12 | 17 | 17 | 13 | - | 17 | 17 |
| | 2-Methylpropanediol | - | - | - | 9 | 9 | 6 | 6 | 6 | - | 9 | 9 |
| | Dipropylene glycol monomethyl ether | - | - | - | - | - | 3 | 3 | 3 | - | - | - |
| | Propylene carbonate | 72.6 | 72.6 | 63 6 | - | - | - | - | - | 72.6 | - | - |
| Polymer binder | A-C | - | - | - | - | - | - | - | - | - | 11 | - |
| | ELVACITE 2013 | - | - | - | - | - | - | - | - | 16 | - | - |
| Other compound | Exemplary Compound 30 of JP2007-119449A | - | - | - | - | - | - | - | - | - | - | 10 |
| | Exemplary Compound 26 of JP2007-119449A | - | - | - | - | - | - | - | - | - | - | 1 |
| Evaluation | Adhesiveness | 1 | 1 | 1 | 1 | 1 | 0 | 0 | 0 | 4 | 4 | 3 |
| | Water resistance | A | A | A | A | A | A | A | A | B | D | D |
| | Solvent resistance | A | A | A | B | B | A | A | A | D | B | B |
| | Dischargeability | A | A | B | A | B | A | A | B | B | C | B |

| | | | | | | | | | | | | |
|---|---|---|---|---|---|---|---|---|---|---|---|---|
| * "-" indicates that no component was included. | | | | | | | | | | | | |

As shown in Table 1 above, in Examples of the present invention, an effect that any of water resistance, solvent resistance, adhesiveness, and dischargeability is excellent can be obtained. In contrast, in Comparative Examples, there was no effect that any of solvent resistance, adhesiveness, and dischargeability were excellent.

## Claims

1. An ink composition comprising:
(Component a) a compound having two or more structures each represented by the structural formula (A) in one molecule,
(Component b) a compound having two or more of at least any one of;
a residue formed by removing one hydrogen atom from a compound represented by the general formula (B1) and
a residue formed by removing one hydrogen atom from a compound represented by the general formula (B2) in one molecule, and
(Component c) a coloring material. 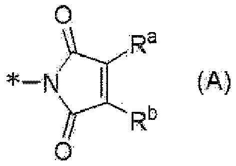 In the structural formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bounding position. 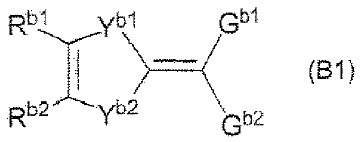 In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.
Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-.
G^{b1} and G^{b2} each independently represent a hydrogen atom, a cyano group, an amide group, an alkoxycarbonyl group, an aryloxycarbonyl group, an acyl group, an arylcarbonyl group, an alkylsulfanyl group, an arylsulfanyl group, an alkylsulfonyl group, an arylsulfonyl group, or a fluoroalkylsulfonyl group, and G^{b1} and G^{b2} may be bonded to each other to form a ring. However, in a case that G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- may be contained in the ring. 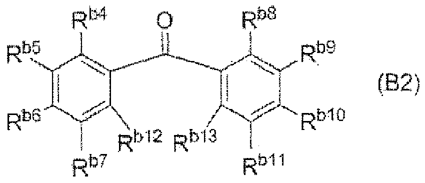 In the general formula (B2), R^{b4}, R^{b5}, R^{b6}, R^{b7}, R^{b8}, R^{b9}, R^{b10}, R^{b11}, R^{b12}, and R^{b13} each independently represent a hydrogen atom, a halogen atom, an alkyl group, an aryl group, a hydroxyl group, a cyano group, a nitro group, an amino group, an alkylsulfanyl group, an alkylamino group, an alkoxy group, an alkoxycarbonyl group, an acyloxy group, an acyl group, a carboxyl group, or a sulfo group, and at least two selected from R^{b4}, R^{b5}, R^{b6}, R^{b7}, R^{b8}, R^{b9}, R^{b10}, R^{b11}, R^{b12}, and R^{b13} may form a ring. -S- may be interposed in the ring.

2. The ink composition according to claims 1, wherein the component above (Component a) has a repeating unit represented by the general formula (AP). 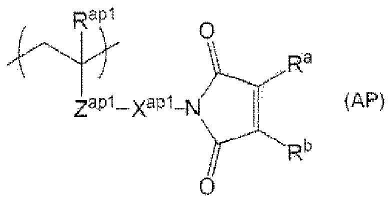 In the general formula (AP), R^{ap1} represents a hydrogen atom or a methyl group. Z^{ap1} represents a single bond, -COO-, or -CONR^{ax1}-, and R^{ax1} represents a hydrogen atom or an alkyl group having 1 to 4 carbon atoms. X^{ap1} represents a divalent organic group. R^{a} and R^{b} each independently represent an alkyl group having 1 to 4 carbon atoms, and R^{a} and R^{b} may be bonded to each other to form an alicyclic structure of a 4- to 6-membered ring.

3. The ink composition according to claim 1 or 2, wherein the component above (Component b) has a repeating unit represented by the general formula (BP). 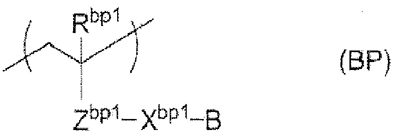 In the general formula (BP), R^{bp1} represents a hydrogen atom or a methyl group. Z^{bp1} represents a single bond, -COO-, or -CONR^{bx1}-, and R^{bx1} represents a hydrogen atom or an alkyl group having 1 to 4 carbon atoms. X^{bp1} represents a single bond or a divalent organic group. B represents a residue formed by removing one hydrogen atom from a compound represented by the structural formula (B1) or a residue formed by removing one hydrogen atom from a compound represented by the structural formula (B2).

4. The ink composition according to any one of claims 1 to 3, wherein the component above (Component a) further has a water-soluble group.

5. The ink composition according to any one of claims 1 to 4, wherein the component above (Component b) further has a water-soluble group.

6. The ink composition according to claim 4 or 5, wherein the water-soluble group is at least one kind of group selected from the group consisting of a carboxyl group, a sulfo group, a phosphoric acid group, a phosphonic acid group, and salts thereof, a quaternary ammonium salt, a residue formed by removing one hydrogen atom from a heterocyclic compound containing a nitrogen atom or an oxygen atom, an amide group, a carbamoyl group, an alcoholic hydroxyl group, and a group having a polyalkyleneoxy structure.

7. The ink composition according to any one of claims 1 to 6, further comprising (Component d) water.

8. The ink composition according to any one of claims 1 to 7, further comprising (Component e) a water-soluble organic solvent.

9. An ink composition comprising:
(Component a') a compound having a structure represented by the structural formula (A) and at least any one of;
a residue formed by removing one hydrogen atom from a compound represented by the general formula (B1) and
a residue formed by removing one hydrogen atom from a compound represented by the general formula (B2), and
(Component c) a coloring material. 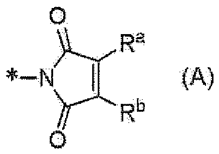 In the structural formula (A), R^{a} and R^{b} each independently represent an alkyl group having 1 to 4 carbon atoms, and R^{a} and R^{b} may be bonded to each other to form an alicyclic structure of a 4- to 6-membered ring. * represents a bonding position. 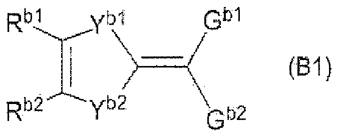 In the general formula (B1), R^{b1} and R^{b2} each independently represent a hydrogen atom, an alkyl group, an aryl group, an alkenyl group, or a heterocyclic group, and R^{b1} and R^{b2} may be bonded to each other to form a ring.
Y^{b1} and Y^{b2} each independently represent a divalent group selected from the group consisting of -O-, -S-, -NR^{b3}- (wherein R^{b3} represents a hydrogen atom, an alkyl group, an aryl group, or an alkenyl group), -Se-, -C(CH₃)₂-, and -CH=CH-.
G^{b1} and G^{b2} each independently represent a hydrogen atom, a cyano group, an amide group, an alkoxycarbonyl group, an aryloxycarbonyl group, an acyl group, an arylcarbonyl group, an alkylsulfonyl group, an arylsulfonyl group, an alkylsulfonyl group, an arylsulfonyl group, or a fluoroalkylsulfonyl group, and G^{b1} and G^{b2} may be bonded to each other to form a ring, However, in a case that G^{b1} and G^{b2} form a ring, a divalent linking group selected from the group consisting of -C(=O)-, -C(=S)-, -NR¹²- (wherein R¹² represents a hydrogen atom, an alkyl group, or an aryl group), -N=CR¹³- (wherein R¹³ represents a hydrogen atom, an alkyl group, or an aryl group), -O-, and -S- may be contained in the ring. 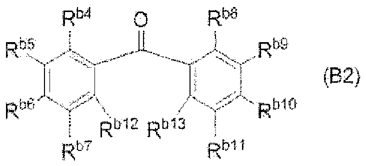 In the general formula (B2), R^{b4}, R^{b5}, R^{b6}, R^{b7}, R^{b8}, R^{b9}, R^{b10}, Rb¹¹, R^{b12} and R^{b13} each independently represent a hydrogen atom, a halogen atom, an alkyl group, an aryl group, a hydroxyl group, a cyano group, a nitro group, an amino group, an alkylsulfanyl group, an alkylamino group, an alkoxy group, an alkoxycarbonyl group, an acyloxy group, an acyl group, a carboxyl group, or a sulfo group, and at least two selected from R^{b4}, R^{b5}, R^{b6}, R^{b7}, R^{b8}, R^{b9}, R^{b10}, R^{b11}, R^{b12} and R^{b13} may be bonded to each other to form a ring. However, -S- may be interposed in the ring.

10. The ink composition according to claim 9, wherein the component above (Component a') has a repeating unit represented by the general formula (AP) and a repeating unit represented by the general formula (BP). 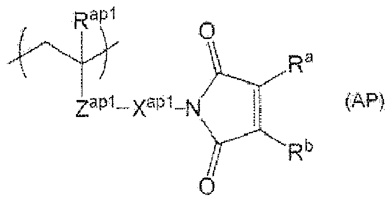 In the general formula (AP), R^{ap1} represents a hydrogen atom or a methyl group. Z^{ap1} represents a single bond, -COO-, or -CONR^{ax1}-, and R^{ax1} represents a hydrogen atom or an alkyl group having 1 to 4 carbon atoms. X^{ap1} represents a divalent organic group. R^{a} and R^{b} each independently represent an alkyl group having 1 to 4 carbon atoms, and R^{a} and R^{b} may be bonded to each other to form an alicyclic structure of a 4- to 6-membered ring. 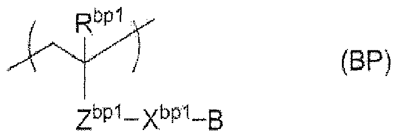 In the general formula (BP), R^{bp1} represents a hydrogen atom or a methyl group. Z^{bp1} represents a single bond, -COO-, or -CONR^{bx1}-, R^{bx1} represents a hydrogen atom or an alkyl group having 1 to 4 carbon atoms. X^{bp1} represents a single bond or a divalent organic group. B represents a residue formed by removing one hydrogen atom from a compound represented by the structural formula (B1) or a residue formed by removing one hydrogen atom from a compound represented by the structural formula (B2).

11. The ink composition according to claim 9 or 10, wherein the component above (Component a') further has a water-soluble group.

12. The ink composition according to claim 11, wherein the water-soluble group is at least one kind of group selected from the group consisting of a carboxyl group, a sulfo group, a phosphoric acid group, a phosphonic acid group, and salts thereof, a quaternary ammonium salt, a residue formed by removing one hydrogen atom from a heterocyclic compound containing a nitrogen atom or an oxygen atom, an amide group, a carbamoyl group, an alcoholic hydroxyl group, and a group having a polyalkyleneoxy structure.

13. The ink composition according to any one of claims 9 to 12, further comprising (Component d) water.

14. The ink composition according to any one of claims 9 to 13, further comprising (Component e) a water-soluble organic solvent.

15. An image forming method comprising:
an ink applying step in which the ink composition according to any one of claims 1 to 14 is applied on a recording medium, and
an irradiation step in which the ink composition is irradiated with active energy rays.

16. The image forming method according to claim 15, wherein the ink applying step is a step in which the ink composition is applied by an inkjet method.

17. A printed material recorded by the image forming method according to claim 15 or 16.
